# EUROPEAN PATENT APPLICATION

(11) **EP 4 410 545 A1**
(43) Date of publication of application: **07.08.2024**
(21) Application number: 22876284.5
(22) Date of filing: 28.09.2022
(51) Int. Cl.: B32B 27/00, C09D 5/00, C09J 5/00, C09D 109/00, C09D 179/02, C09J 109/00, C09J 179/02, B32B 7/06

(54) **DETACHMENT PRIMER COMPOSITION AND PRINTED ARTICLE**

(30) Priority: 29.09.2021 JP 2021159514; 30.11.2021 JP 2021194574; 14.09.2022 JP 2022146373; 14.09.2022 JP 2022146374
(71) Applicant: Sakata INX Corporation, Osaka-shi, Osaka 550-0002 (JP)
(72) Inventor: TOMIURA, Ibuki, Osaka-shi, Osaka 550-0002 (JP); TAKIMOTO, Kyohei, Osaka-shi, Osaka 550-0002 (JP); HARADA, Junichi, Osaka-shi, Osaka 550-0002 (JP)
(74) Representative: Grünecker Patent- und Rechtsanwälte PartG mbB
(86) International application number: PCT/JP2022/036051
(87) International publication number: WO 2023/054418

(57) **Abstract**

An object is to allow a base material and a printed layer to bond together securely during use, while also making it easier after use and facilitating the separation/release of the printed layer from the release solution thereafter, as well as to, in a laminate comprising a base material film and a paper base material layered thereon via an adhesive layer, facilitate the separation/release of the adhesive layer from the base material film. As a solution, a releasing primer composition containing a polyethyleneimine-based compound with an amine value of 5.0 to 25.0 mmol/g and/or polybutadiene-based compound is provided, which is used, with respect to a printed matter formed in the order of a resin base material, a releasing primer layer, and a printed layer, for forming the releasing primer layer.

## Description

### Technical Field

The present invention relates to a releasing primer composition and a printed matter.

### Background Art

Packaging materials using various types of plastic films are used for food, confectionary, articles of daily use, pet food, etc., from the viewpoints of designability, economy, content protectability, transportability, etc. Also, many packaging materials are gravure-printed or flexographically printed with the intent of adding designs and messages that appeal to the consumer.

These packaging materials are obtained by "printing without post-processing" in which the surface of the base material film constituting the packaging material is simply printed on, or, if necessary, the printed face obtained by printing on the surface of the base material film constituting the packaging material is coated with an adhesive or anchor agent and then pre-lamination printed.

In the pre-lamination printing of the film, colored ink compositions and white ink composition are printed one by one on polyester, nylon, aluminum foil, or any of various other types of films, after which a polyethylene film, polypropylene film, etc., for heat sealing purpose is layered on the printed layer of the white ink composition by means of dry lamination using an adhesive, extrusion lamination using an anchor coating agent, or the like (refer to Patent Literature 1).

Recent years have seen environmental contamination issues caused by packages made of plastic films, plastic bottles, and other plastic products that are dumped/thrown into the ocean as trash. These plastic products are broken down in sea water into submicron-size debris (microplastics) and float in sea water. If ingested by fish and other marine life, these plastics are concentrated in their bodies. This raises a concern that the health of seabirds and humans that ingest these marine life as food may be negatively impacted.

To address these problems, a recycling method for releasing plastic base materials from laminates constituted by layered printing ink compositions is proposed as one of various efforts to reduce microplastics. The proposed methods for releasing plastic base materials from laminates include releasing ink compositions (refer to Patent Literature 2, for example), releasing adhesives (refer to Patent Literature 3, for example), releasing anchor coating agents, etc. (refer to Patent Literatures 4 to 6, for example), and release solutions (refer to Patent Literature 7, for example).

However, according to these methods, when warm water is used as a release solution, releasing is not sufficient, and when laminate printing ink compositions are used, a problem of insufficient laminatability arises.

Also, some laminates are constituted by a base material film on which an adhesive is coated and a paper base material is bonded, where the paper base material side of the resulting laminate paper is printed; however, they present a problem in that the adhesive will remain on the base material film following the process of releasing the paper base material.

### Background Art Literature

### Patent Literature

Patent Literature 1: Japanese Patent Laid-open No. Hei 5-97959
Patent Literature 2: Japanese Patent No. 6631964
Patent Literature 3: Japanese Patent No. 6642688
Patent Literature 4: Japanese Patent No. 6388131
Patent Literature 5: Japanese Patent Laid-open No. 2020-175620
Patent Literature 6: International Patent Laid-open No. 2021/090690
Patent Literature 7: Japanese Patent No. 6690806

### Summary of the Invention

### Problems to Be Solved by the Invention

An object of the present invention is to allow a base material and a printed layer to bond together securely during use, while also making it easier after use and facilitating the separation/release of the printed layer from the release solution thereafter. Another object of the present invention is, in a laminate comprising a base material film and a paper base material layered thereon via an adhesive layer, to facilitate the separation/release of the adhesive layer from the base material film.

### Means for Solving the Problems

The inventors of the present invention found that the aforementioned objects could be achieved by the active energy ray-curable vanish composition and printed matter described below, and eventually completed the present invention as follows.
1. A releasing primer composition containing a polyethyleneimine-based compound with an amine value of 5.0 to 25.0 mmol/g and/or polybutadiene-based compound, which is used, with respect to a printed matter formed in the order of a resin base material, a releasing primer layer, and a printed layer, for forming the releasing primer layer.
2. The releasing primer composition according to 1, wherein the releasing primer composition containing a polyethyleneimine-based compound with an amine value of 5.0 to 25.0 mmol/g contains one or more types of A to C below:
   A. a polyethyleneimine compound;
   B. a mixture containing a polyethyleneimine compound, and a glycidyl group-containing silane coupling agent and/or isocyanate group-containing silane coupling agent; and
   C. a siloxane-modified polyethyleneimine compound.
3. The releasing primer composition according to 2, wherein the number-averaged molecular weight of the polyethyleneimine compound and siloxane-modified polyethyleneimine compound is 1,000 to 200,000.
4. The releasing primer composition according to 2, wherein the mass-averaged molecular weight of the polyethyleneimine compound and siloxane-modified polyethyleneimine compound is 4,000 to 800,000.
5. The releasing primer composition according to 1, wherein the polybutadiene-based compound comprises a hydroxyl group-containing polybutadiene compound and/or carboxyl group-containing polybutadiene compound.
6. A printed matter comprising, on a resin base material, a releasing primer layer formed by the releasing primer composition according to any one of 1 to 5, and a printed layer formed on the releasing primer layer.
7. A printed matter comprising, on a resin base material, a releasing primer layer formed by the releasing primer composition according to any one of 1 to 6, a paper layer formed at the releasing primer layer via an adhesive layer, and a printed layer formed on the paper layer.

### Effects of the Invention

According to the present invention, a base material and a printed layer can be securely bonded during use, while separating/releasing the printed layer from the base material after use can be made easier and the separation/release of the printed layer from the release solution thereafter can be facilitated. Also, in a laminate comprising a base material film and a paper base material layered thereon via an adhesive layer, the present invention can make it easier to separate/release the adhesive layer from the base material film.

### Mode for Carrying Out the Invention

The present invention is an invention based on the items described below and can be used with various printing methods and printed matters for various applications. It should be noted that, in the Specification pursuant to the present application for patent, the releasing primer composition proposed by the present invention is sometimes referred to simply as "primer composition."

The present invention is significant in that, as a releasing primer layer, one having a specific compositional makeup is adopted.

### [Releasing Primer Composition]

The releasing primer composition proposed by the present invention is a primer layer-forming composition provided in such a way that it is positioned between a resin base material surface and a printed layer. Also, it is a releasing primer composition used, in conjunction with a printed matter which is to be reutilized after use, for separating a resin film, etc., constituting the base material for the printed matter and a printed layer formed thereon, thereby releasing the printed layer from the base material. The releasing primer composition may be either an aqueous or oily composition.

The present invention is a releasing primer composition and differs in applications and required properties from, for example, an anchor coating agent used when an anchor coating layer is further formed on the printed face formed on the base material prior to laminating a resin film, etc., on top.

The present invention is a composition for forming a primer layer on a printing base material in advance, before printing ink compositions are printed thereon.

For the releasing primer composition, a polyethyleneimine-based compound with an amine value of 5.0 to 25.0 mmol/g and/or polybutadiene-based compound can be used.

### <Polyethyleneimine-based Compound with Amine Value of 5.0 to 25.0 mmol/g>

The polyethyleneimine-based compound with an amine value of 5.0 to 25.0 mmol/g comprises A. a polyethyleneimine compound, B. a mixture containing a polyethyleneimine compound, and a glycidyl group-containing silane coupling agent and/or isocyanate group-containing silane coupling agent, and/or C. a siloxane-modified polyethyleneimine compound. It should be noted that the "polyethyleneimine-based compound" is referred to as such when it contains A, B, and C herein, while the compounds contained in the "polyethyleneimine-based compound" are referred to as "polyethyleneimine compounds," for example.

For the polyethyleneimine compound and siloxane-modified polyethyleneimine compound contained in the primer composition under the present invention, those with a number-averaged molecular weight of 1,000 to 200,000 are preferred from the viewpoint of strength if lamination is to be performed. In particular, the number-averaged molecular weight is more preferably 2,000 or higher, or yet more preferably 5,000 or higher. Also, 200,000 or lower are preferred.

Also, in terms of the mass-averaged molecular weight, polyethyleneimine-based compounds and siloxane-modified polyethyleneimine compounds with a mass-averaged molecular weight of 4,000 to 800,000 are preferred.

Also, polyethyleneimine-based compounds having all of primary through tertiary amino groups as the amino groups in the molecule are preferred; in particular, in terms of the content ratio based on the number of amino groups of each type, preferably more secondary amino groups are contained than primary and tertiary amino groups, or more preferably the content of the secondary amino groups among all of primary through tertiary amino groups is 40% or higher based on the number of groups.

The more these ranges are met, the easier the release becomes.

### (Polyethyleneimine Compounds Common to A. Polyethyleneimine Compound and B. Mixture Containing Polyethyleneimine Compound and Glycidyl Group-containing Silane Coupling Agent and/or Isocyanate Group-containing Silane Coupling Agent)

The polyethyleneimine compounds common to A and B have an amine value of preferably 10.0 mmol/g or higher and preferably 25.0 mmol/g or lower.

It should be noted that the polyethyleneimine compounds common to A and B do not include the C. siloxane-modified polyethyleneimine compound.

### (Glycidyl Group-containing Silane Coupling Agent and/or Isocyanate Group-containing Silane Coupling Agent in B. Mixture Containing Polyethyleneimine Compound and Glycidyl Group-containing Silane Coupling Agent and/or Isocyanate Group-containing Silane Coupling Agent)

For the polyethyleneimine compound in this case, one or more types selected from the same polyethyleneimine compounds mentioned above can be used.

Examples of the silane coupling agent containing glycidyl groups include 3-glycidyloxypropyl trimethoxysilane, 3-glycidyloxypropyl methoxydimethoxysilane, 3-glycidyloxypropyl methoxydiethoxysilane, 3-glycidyloxypropyl triethoxysilane, and the like. Examples of the silane coupling agent containing isocyanate groups include 3-isocyanatepropyl triethoxysilane, 3-isocyanatepropyl trimethoxysilane, 2-isocyanateethyl triethoxysilane, 2-isocyanateethyl trimethoxysilane, and the like.

### (C. Siloxane-modified Polyethyleneimine Compound)

For the siloxane-modified polyethyleneimine compound, any silane coupling agent-modified polyethyleneimine compound obtained by reacting components that include a polyethyleneimine and at least one type of silane coupling agent being an amine-reactive hydrolysable organosilane expressed by the formula: R-Z-SiY₃ [in the formula, R represents an amine-reactive group selected from the group that consists of isocyanate group, oxiranyl group, glycidoxy group, acryloxy group, carboethoxy group, carbomethoxy group, vinyl sulfonyl group and acrylamide group, Z represents a divalent organic group containing carbon atoms, and Y's each independently represent a hydrolysable group], or specifically, siloxane-modified polyethyleneimine compound, can be used.

This siloxane-modified polyethyleneimine compound has a structure in which the silane coupling agent has bonded to the polyethyleneimine as a result of the group R in the silane coupling agent reacting with the amino groups in the polyethyleneimine.

The amine value of the siloxane-modified polyethyleneimine compound is preferably 5.0 mmol/g or higher and preferably 15.0 mmol/g or lower.

It should be noted that the C. siloxane-modified polyethyleneimine compound is not included in the polyethyleneimine compound in A or polyethyleneimine compound in B, and represents a compound different from these polyethyleneimine compounds.

The coating amount of the polyethyleneimine-based compound on the printing base material is preferably 0.010 g/m² or higher, or more preferably 0.015 g/m² or higher, or yet more preferably 0.020 g/m² or higher. Also, it is preferably 0.400 g/m² or lower, or more preferably 0.300 g/m² or lower, or yet more preferably 0.200 g/m² or lower, or most preferably 0.100 g/m² or lower.

It should be noted that the releasing primer composition may or may not contain polyolefin resin particles, inorganic metal salts and organic metal salts.

### <Polybutadiene-based Compound>

Also, the releasing primer composition contains a polybutadiene-based compound. Preferably the releasing primer composition is an aqueous composition. To make the releasing primer composition aqueous and also improve its adhesion, a polybutadiene compound to which hydroxyl groups or carboxyl groups have been introduced is preferred. It should be noted that preferably the polybutadiene compound is not crosslinked in the interest of demonstrating releasability.

This polybutadiene compound may be EL-451 (Toyo-Morton, Ltd.), TITABOND T-180E (Nippon Soda Co., Ltd.), or the like. These products are sometimes used as anchor coating agents. When they are used as an anchor coating agent, its sole purpose is to integrate into a base material another material having a different compositional makeup, by means of active adhesion, etc. However, the polybutadiene-based compound under the present invention does not simply function as an anchor coating agent, but it possesses both releasability, and adhesion property as a primer composition, which are conflicting properties.

The coating amount in solids content of the polybutadiene-based compound on the printing base material is preferably 0.010 g/m² or higher, or more preferably 0.015 g/m² or higher, or yet more preferably 0.020 g/m² or higher. Also, it is preferably 0.400 g/m² or lower, or more preferably 0.300 g/m² or lower, or yet more preferably 0.200 g/m² or lower, or most preferably 0.100 g/m² or lower.

It should be noted that this releasing primer composition, too, may or may not contain polyolefin resin particles, inorganic metal salts, and organic metal salts.

### <Method for Manufacturing Releasing Primer Composition>

The releasing primer composition may be obtained by:
(1) adding a solvent to a polyethyleneimine compound and agitating the mixture;
(2) adding a solvent to a polyethyleneimine compound and agitating the mixture, and then further adding a silane coupling agent containing glycidyl groups and/or silane coupling agent containing isocyanate groups and agitating the mixture;
(3) adding a solvent to a siloxane-modified polyethyleneimine and agitating the mixture; or
(4) adding a solvent to a polybutadiene-based compound and agitating the mixture.

For the solvent, a mixture obtained by adding one or more types of alcohols such as methanol, ethanol, and isopropyl alcohol, to water, can be utilized.

### [Resin Base Material]

For the resin base material under the present invention, any base materials made of known resins whose surface can be printed on, can be adopted. As such resin base materials, resin films of polyethylene terephthalate (PET) and other polyesters, polyethylene (PE), polypropylene (PP), and other polyolefins, nylon and other polyamides, the foregoing resin films having an aluminum or other metal layer, the foregoing resin films having a transparent vapor deposition layer, shrinkable polypropylene films (particularly shrinkable untreated polypropylene films), shrinkable polyvinyl chloride films, shrinkable polyethylene phthalate films, and other shrinkable plastic films, and the like, can be adopted.

Also, for the resin base material, laminates having a thermoplastic resin layer and an ethylene-based resin layer may or may not be adopted.

As such resin base materials, any known resin films that serve as base materials for lamination as described below, resin films for front printing or shrink printing, resin films laminated on paper base materials, and the like, can be adopted.

Additionally, after a printing ink composition layer is formed on the base material via the releasing primer composition layer, the releasing primer composition in the present invention may be coated on the printed layer to form a sealant layer using the dry lamination method or extrusion lamination method.

### [Types of Printing]

Under a method for printing on a resin base material, the releasing primer composition proposed by the present invention is formed in such a way that it is positioned between the surface of the resin base material and a printed layer. It is then used in back printing, front printing, shrink printing, etc. Also, in a printed matter formed in the order of a resin base material, a releasing primer layer, and a printed layer, any known desired layer may be further formed between any of these layers or on the surface of the printed matter. When forming a resin base material, a releasing primer layer, an adhesive layer, and a paper layer, any known desired layer may be formed further between any of these layers or on the surface of the obtained laminate.

Also, under a method for printing on the paper base material side of a laminated paper obtained by coating an adhesive on a base material film and bonding a paper base material thereon, the releasing primer composition is formed in such a way that it is positioned between the base material film and the adhesive layer.

The types of printing in which the releasing primer composition proposed by the present invention is used are explained below in the order of back printing, front printing, shrink printing, and printing on the paper base material side of a laminated paper obtained by coating an adhesive on a base material film and bonding a paper base material thereon.

### (Pigment)

### (Components That Can Be Contained Commonly in Back Printing Ink Compositions, Front Printing Ink Compositions and Shrink Printing Ink Compositions)

In printing where the primer composition proposed by the present invention is used, one or more types of conventionally used inorganic and organic pigments can be used as the pigment(s) to be contained in printing ink composition.

The inorganic pigments include, for example, titanium oxide, red iron oxide, antimony red, cadmium yellow, cobalt blue, Prussian blue, ultramarine blue, carbon black, graphite, and other colored pigments, as well as extender pigments such as silica particles, calcium carbonate, kaolin, clay, barium sulfate, aluminum hydroxide, talc, and the like. Of these, preferably titanium oxide is used as a white pigment.

The organic pigments include, for example, soluble azo pigments, insoluble azo pigments, azo lake pigments, condensed azo pigments, copper phthalocyanine pigments, condensed polycyclic pigments, and the like.

The content of these pigments in the printing ink composition is normally around 1 to 50% by mass.

### (Pigment Used in Ink Compositions for Printing on Paper Base Material Side of Laminated Paper Obtained by Coating Adhesive on Base Material Film and Bonding Paper Base Material Thereon)

For the pigment used in the ink composition for printing on the paper base material side, any pigments conventionally used in flexographic printing ink compositions can be used.

Specifically, they include inorganic pigments such as titanium oxide, red iron oxide, antimony red, cadmium yellow, cobalt blue, Prussian blue, ultramarine blue, carbon black, graphite, and other colored pigments. Also included are organic pigments such as soluble azo pigments, insoluble azo pigments, azo lake pigments, condensed azo pigments, copper phthalocyanine pigments, condensed polycyclic pigments, and the like. Any one type, or two or more types, of the above pigments can be used.

The concentration of the pigment in the flexographic printing ink composition is 5 to 60% by mass, or normally 6 to 35% by mass in the case of organic pigments, and 30 to 60% by mass in the case of inorganic pigments.

### [Printed Layer]

### «Back Printing»

The back printing ink composition for forming a printed layer under the present invention contains a binder resin and various types of additives in addition to the pigments.

### <Binder Resin>

For the binder resin, a polyurethane resin, or preferably from the viewpoints of stability, adhesion property, and laminatability of the printing ink composition, a polyurethane resin having an amine value, is contained.

### (Polyurethane Resin)

For the polyurethane resin, a polyurethane resin not modified by acid and/or polyurethane resin modified by acid may be contained. A polyurethane resin not modified by acid is a polyurethane resin having no carboxylic acid groups, sulfonic acid groups, phosphoric acid groups, or other acid groups at the ends of the molecule and/or other locations in the molecule. A polyurethane resin modified by acid is a polyurethane resin having carboxylic acid groups, sulfonic acid groups, phosphoric acid groups, or other acid groups at the ends of the molecule and/or other locations in the molecule.

Whether the printed layer is formed by an ink composition using a polyurethane resin modified by acid as a vehicle, or it is formed by an ink composition using as a vehicle a polyurethane resin not modified by acid or other resin that inherently makes releasing difficult, the printed layer can be smoothly released from the resin base material.

For such polyurethane resins, any polyurethane resins generally used in printing ink compositions can be used.

In particular, polyurethane resins having amino groups (having an amine value) are preferred from the viewpoints of stability over time, adhesion property, and laminatability of the printing ink composition. Of the polyurethane resins having amino groups, those having one or more types selected from primary amino groups, secondary amino groups, and tertiary amino groups at the ends of the molecule, or particularly those having one or more types selected from primary amino groups and secondary amino groups at the ends of the molecule, are more preferred.

Yet more preferred are polyurethane resins having hydroxyl groups and also having one or more types selected from primary amino groups, secondary amino group,s and tertiary amino groups at the ends of the molecule.

When its polyurethane resin has specific functional groups such as the amino groups, the back printing ink composition will have excellent printability and adhesion property.

The amine value of each of the acid polyurethane resins is preferably 1.0 to 15.0 mgKOH/g, or more preferably 2.0 to 8.0 mgKOH/g. If the amine value is under 1.0 mgKOH/g, the adhesion property of the film printing ink composition under the present invention to films may drop, and its laminatability may also drop, while if the amine value exceeds 15.0 mgKOH/g, the anti-blocking property may drop.

It should be noted that, under the present invention, the amine value refers to the amine value per 1 gram of solids content, representing a value measured by the potentiometric titration method (such as COMTITE (AUTO TITRATOR COM-900, BURET B-900, TITSTATION K-900), Hiranuma Sangyo Co., Ltd.) using a 0.1N aqueous hydrochloric acid solution, and then converting the result to a potassium hydroxide equivalent.

Also, preferably the polyurethane resin has hydroxyl groups inside the molecule and at the ends of the molecule from the viewpoint of resolubility.

### (Polyurethane Resin Not Modified by Acid)

For the polyurethane resin not modified by acid, a polyurethane polyurea resin, and/or polyurethane polyurea resin obtained using a compound resulting from ketiminating the amino groups in a polyamine compound with a ketone compound, is/are preferred.

A polyurethane polyurea resin is based on a urethane prepolymer obtained from an organic diisocyanate component and a high-molecular diol component, which is turned into a polyurethane polyurea resin by chain elongation and/or end-termination.

A polyurethane polyurea resin obtained using a ketiminated compound represents, in terms of the chain extender and/or reaction terminator, a. a polyurethane polyurea resin obtained by reacting with a urethane prepolymer a compound resulting from ketiminating the amino groups in a polyamine compound in an organic solvent using a ketone compound, or b. a polyurethane polyurea resin obtained by adding to and mixing under agitation with a urethane prepolymer a compound resulting from ketiminating the amino groups in a polyamine compound in an organic solvent using a ketone compound, followed by addition of water and subsequent chain elongation and reaction termination. By using the a and/or b, the obtained back printing ink composition will have less amine odor and demonstrate excellent stability over time.

Regarding the polyurethane polyurea resin, a biomass polyurethane polyurea resin may be contained in consideration of the environmental aspect.

### (Polyurethane Polyurea Resin Not Modified by Acid)

The polyurethane polyurea resin not modified by acid has one or more types selected from primary amino groups and secondary amino groups at the ends of the molecule.

More preferred is a polyurethane polyurea resin not modified by acid that has hydroxyl groups and also has one or more types selected from primary amino groups and secondary amino groups at the ends of the molecule.

For such polyurethane polyurea resins, any polyurethane resin obtained by reacting an organic diisocyanate compound with a high-molecular diol compound to synthesize a urethane prepolymer, to which the chain extender and reaction terminator below are reacted, can be used favorably.

### (Synthesis of Urethane Prepolymer)

The aforementioned urethane prepolymers are each obtained by reacting an organic diisocyanate compound and a high-molecular diol compound as described below.

### (Organic Diisocyanate Compound)

The organic diisocyanate compound may be, for example, tolylene diisocyanate or other aromatic diisocyanate compound, 1,4-cyclohexanediisocyanate, isophorone diisocyanate, dicyclohexylmethane-4,4-diisocyanate (hydrogenated MDI) or other alicyclic diisocyanate compound, hexamethylene diisocyanate or other aliphatic diisocyanate compound, or α, α, α', α'-tetramethylxylylene diisocyanate or other aromatic aliphatic diisocyanate compound. Any one type of these organic diisocyanate compounds can be used alone, or two or more types can be mixed. In particular, alicyclic diisocyanate compounds, aliphatic diisocyanate compounds, and aromatic aliphatic diisocyanate compounds are preferred.

Also, other organic diisocyanate compounds, such as 1,3- and/or 1,4-phenylene diisocyanate, 4,4-diisocyanato biphenyl, 3,3-dimethyl-4,4-diisocyanato biphenyl, and other aromatic diisocyanate compounds, cyclohexylene diisocyanate, methylcyclohexylene diisocyanate (hydrogenated TDI), and other alicyclic diisocyanate compounds, ethylene diisocyanate, tetramethylene diisocyanate, dodecamethylene diisocyanate, 2,2,4-trimethylhexamethylene diisocyanate, and other aliphatic diisocyanate compounds, and m- and/or p-xylylene diisocyanate (XDI) and other aromatic aliphatic diisocyanate compounds, can also be utilized.

If other organic diisocyanate compounds are also used, they can be used in such a way that the number of isocyanate groups in the other organic diisocyanate compounds becomes 50% or less relative to the total number of isocyanate groups in all organic diisocyanate compounds, where the percentage is preferably 30% or lower, or more preferably 10% or lower.

Alternately, the other organic diisocyanate compounds account for 50 parts by mass or less, or preferably 30 parts by mass or less, or more preferably 10 parts by mass or less, in all organic diisocyanate compounds representing 100 parts by mass.

### (High-molecular Diol Compound)

The high-molecular diol compound may be, for example, polyethylene glycol, polypropylene glycol, or other polyalkylene glycol, ethylene oxide-, propylene oxide-, or other alkylene oxide-adduct of bisphenol A or other polyether diol compound, polyester diol obtained by condensation-reacting one, two or more types of dibasic acids such as adipic acid, sebacic acid, phthalic anhydride, etc., and one, two, or more types of glycols such as ethylene glycol, propylene glycol, 1,4-butanediol, neopentyl glycol, 3-methyl-1,5-pentanediol, etc., polycaprolactone diol, or other polyester diol compound, or the like. Any one type of these high-molecular diol compounds can be used alone, or two or more types can be mixed.

Furthermore, any one type, or mixture of two or more types, of low-molecular diol compounds such as 1,4-pentanediol, 2,5-hexanediol, 3-methyl-1,5-pentanediol, and other alkanediols, ethylene glycol, propylene glycol, 1,4-butanediol, 1,3-butanediol, and the like, can be combined in addition to the high-molecular diol compound.

Also, for the high-molecular diol compound, one with a number-averaged molecular weight of 1,000 to 8,000 is preferred, one with a number-averaged molecular weight of 1,000 to 5,500 is more preferred, or one with a number-averaged molecular weight of 1,000 to 4,000 is yet more preferred.

Also, for the high-molecular diol compound, one containing 3-methyl-1,5-pentylene adipate diol can be selected.

In this case, the following may be combined as other high-molecular diol compounds.

The high-molecular diol compounds other than 3-methyl-1,5-pentylene adipate diol include polyester diols obtained by condensation-reacting one, two, or more types of dibasic acids such as adipic acid, sebacic acid, phthalic anhydride, etc., and one, two, or more types of glycols such as ethylene glycol, propylene glycol, 1,4-butanediol, neopentyl glycol, 3-methyl-1,5-pentanediol, etc., polycaprolactone diols and other polyester diol compounds, as well as polyethylene glycol, polypropylene glycol, and other polyalkylene glycols, ethylene oxide-, propylene oxide-, and other alkylene oxide-adducts of bisphenol A and other polyether diol compounds, and the like. Any one of these high-molecular diol compounds can be used alone, or two or more types can be mixed.

Of the above, 3-methyl-1,5-pentylene adipate diol obtained by condensation-reacting adipic acid and 3-methyl-1,5-pentanediol, having a number-averaged molecular weight of 1,000 to 8,000, is preferred, while 3-methyl-1,5-pentylene adipate diol having a number-averaged molecular weight of 1,000 to 4,000 is more preferred.

If other high-molecular diol compounds are also used, they can be used in such a way that the number of hydroxyl groups in the other high-molecular diol compounds becomes 70% or less relative to the total number of hydroxyl groups in all high-molecular diol compounds, where the percentage is preferably 55% or lower, or more preferably 40% or lower.

Alternately, the other high-molecular diol compounds account for 50 parts by mass or less, or preferably 35 parts by mass or less, or more preferably 20 parts by mass or less, in all high-molecular diol compounds representing 100 parts by mass.

It should be noted that, if the organic solvent used in the back printing ink composition is a mixed solvent system (hereinafter also referred to as "mixed solution") consisting of an ester-based solvent and an alcohol-based solvent as described below, use of a polyether diol compound, or preferably polypropylene glycol, as a high-molecular diol compound tends to increase the solubility of the obtained polyurethane resin, while it also tends to achieve good printability in terms of tone reproducibility, antifogging property, etc., thereby allowing a wide range of printing ink compositions to be designed according to the required performance, which is desirable.

### (Biomass Polyurethane Polyurea Resin Not Modified by Acid)

As the polyurethane resin, any biomass polyurethane polyurea resin not modified by acid may be contained in consideration of an environmental aspect. Biomass polyurethane polyurea resins not modified by acid are explained below. It should be noted that, of the explanations of biomass polyurethane polyurea resins not modified by acid, those explanations common to the polyurethane polyurea resins not modified by acid and already mentioned above are omitted as deemed appropriate.

A biomass polyurethane polyurea resin not modified by acid is a polyurethane resin containing biomass-derived (plant-derived) components. Biomass polyurethane polyurea resins not modified by acid can help prevent global warming and reduce environmental burdens compared to when other exhaustible resources are used. Also, preferably the biomass polyurethane polyurea resin not modified by acid is one obtained by synthesizing a biomass urethane prepolymer by reacting a bio-polyester polyol compound and an organic diisocyanate compound and then, if necessary, reacting a chain extender and/or reaction terminator thereto, and more preferably the isocyanate compound is a plant-derived bio-isocyanate.

### (Isocyanate Compound)

Any plant oil-derived diisocyanate, other than the organic diisocyanates explained in connection with the polyurethane polyurea resins not modified by acid, can be used. A plant oil-derived organic diisocyanate compound is obtained by converting a plant-derived dicarboxylic acid into terminal amino groups through acid amidation and reduction, and by further converting the amino groups into isocyanate groups by reacting them with a phosgene. The plant-derived bio-polyisocyanate may be dimer acid diisocyanate (DDI), octamethylene diisocyanate, decamethylene diisocyanate, or the like. In addition, a plant-derived isocyanate compound can also be obtained by starting from a plant-derived amino acid as a raw material and converting its amino groups into isocyanate groups. For example, lysine diisocyanate (LDI) is obtained by methyl-esterifying the carboxyl groups in lysine and then converting the amino groups into isocyanate groups. Also, 1,5-pentamethylene diisocyanate is obtained by decarboxylating the carboxyl groups in lysine and then converting the amino groups into isocyanate groups.

### (Bio-polyester Polyol Compound)

The bio-polyester polyol compound (biomass polyester polyol) is explained below. In consideration of the environmental aspect, a bio-polyester polyol compound obtained by synthesizing materials including plant-derived components, among other bio-polyester polyol compounds, may be combined as one of the aforementioned other high-molecular diol compounds.

Also, a polyurethane polyurea resin not modified by acid, obtained by reacting a polyester polyol compound containing a bio-polyester polyol compound with any of the aforementioned specific isocyanate compounds, can be mixed into the polyurethane polyurea resin not modified by acid under the present invention.

Accordingly, a bio-polyester polyol obtained by reacting a short-chain diol compound with 2 to 4 carbon atoms and a carboxylic acid compound can be adopted as the bio-polyester polyol compound. As for the bio-polyol component, preferably at least one of the short-chain diol compound and carboxylic acid compound is plant-derived, or more preferably both are plant-derived.

The plant-derived short-chain diol compound with 2 to 4 carbon atoms is not specifically limited. For example, the short-chain diol compound may be 1,3-propanediol, 1,4-butanediol, ethylene glycol, etc., obtained from plant materials according to the methods below. Two or more of these may be combined.

1,3-propanediol can be manufactured from a glycerol by way of 3-hydroxypropylaldehyde (HPA) according to the fermentation method whereby a plant resource (such as corn, etc.) is broken down to obtain glucose. A 1,3-propanediol component manufactured by a biotechnology method such as the fermentation method presents superior safety, provides lactic acid and other useful byproducts, and can also keep the manufacturing cost low, compared to a 1,3-propanediol component obtained by the EO manufacturing method. 1,4-butanediol can be manufactured by manufacturing a glycol from a plant resource and fermenting it to obtain a succinic acid, and then hydrogenating the succinic acid. Also, ethylene glycol can be manufactured by way of ethylene from a bioethanol obtained by a conventional method.

The plant-derived carboxylic acid compound is not specifically limited. For example, the carboxylic acid compound may be sebacic acid, succinic acid, lactic acid, glutaric acid, dimer acid, etc. Two or more of these may be combined. Of the above, preferably at least one type selected from the group that consists of sebacic acid, succinic acid, and dimer acid is contained in the carboxylic acid compound. Also, 0.05 to 0.5 parts by mass of malic acid may be contained relative to 100 parts by mass of sebacic acid.

The bio-polyester polyol compound is produced as a 100% plant-derived bio-polyester polyol by condensation-reacting a plant-derived short-chain diol compound and a plant-derived carboxylic acid as deemed appropriate. To be specific, polytrimethylene sebacate polyol is obtained by directly dehydration-condensing plant-derived sebacic acid and plant-derived 1,3-propanediol. Also, polybutylene succinate polyol is obtained by directly dehydration-condensing plant-derived succinic acid and plant-derived 1,4-butanediol.

One or more types of these bio-polyester polyol compounds may be used. Urethane prepolymers obtained using these plant-derived components may be contained by 10% by mass or more, or 40% by mass or more, in terms of solids content in all urethane prepolymers.

### (Chain Extender and Reaction Terminator)

Next, the chain extender and reaction terminator used with the polyurethane polyurea resin not modified by acid and biomass polyurethane polyurea resin not modified by acid are explained.

For the chain extender, any known chain extenders utilized in polyurethane polyurea resins that function as binders for printing ink compositions can be utilized, such as polyamine compounds including ethylenediamine, propylenediamine, tetramethylenediamine, hexamethylenediamine, and other aliphatic diamines, isophoronediamine, 4,4'-dicyclohexylmethanediamine, and other alicyclic diamines, tolylenediamine and other aromatic diamines, xylenediamine and other aromatic aliphatic diamines, N-(2-hydroxyethyl)ethylenediamine (aminoethylethanolamine), N-(2-hydroxyethyl)propylenediamine, N,N'-di(2-hydroxyethyl)ethylenediamine, and other diamines having hydroxyl groups, as well as ethylene glycol, propylene glycol, 1,4-butanediol, neopentyl glycol, diethylene glycol, triethylene glycol, and other diol compounds, for example.

Additionally, diethylenetriamine, triethylenetetramine, and other polyamine compounds can be combined to the extent that the polyurethane polyurea resin will not gelate.

Examples of the reaction terminator for introducing primary amino groups and secondary amino groups to the ends of the polyurethane polyurea resin include polyamine compounds such as ethylenediamine, propylenediamine, tetramethylenediamine, hexamethylenediamine, and other aliphatic diamines, isophoronediamine, 4,4'-dicyclohexylmethanediamine, and other alicyclic diamines, diethylenetriamine, triethylenetetratriamine, and other polyamines, tolylenediamine and other aromatic diamines, xylenediamine and other aromatic aliphatic diamines, N-(2-hydroxyethyl)ethylenediamine (aminoethylethanolamine), N-(2-hydroxyethyl)propylenediamine, and other diamines having hydroxyl groups, and the like. Of these, diethylenetriamine, triethylenetetratriamine, and other polyamines having primary amino groups are preferred.

Examples of the reaction terminator for introducing hydroxyl groups to the polyurethane polyurea resin include monoethanolamine, diethanolamine, and other alkanolamines, N-(2-hydroxyethyl)ethylenediamine, N-(2-hydroxyethyl)propylenediamine, and other diamines having hydroxyl groups. Also, monoamine compounds and monoalcohols compounds, which are known reaction terminators, can be utilized, where specific examples include n-propylamine, n-butylamine, and other monoalkylamines, di-n-butylamine and other dialkylamines, ethanol and other monoalcohols.

Regarding the method for manufacturing the polyurethane polyurea resin not modified by acid and biomass polyurethane polyurea resin not modified by acid, any known method for manufacturing a polyurethane resin using the aforementioned materials can be used directly. Also, since the hardness of the obtained polyurethane resin will differ when the mass-averaged molecular weight, chemical structure, and equivalent ratio of each component are different, the printability and laminatability can be adjusted by combining these components as deemed appropriate.

The mass-averaged molecular weight of the polyurethane polyurea resin not modified by acid and biomass polyurethane polyurea resin not modified by acid is preferably 10,000 to 70,000, or more preferably 20,000 to 60,000.

Additionally, to achieve appropriate flexibility and higher lamination strength, a polyurethane resin which has no urea bonds and whose mass-averaged molecular weight is 1,000 to 70,000 can be compounded as the polyurethane resin.

(Reaction of Organic Diisocyanate Compound and High-molecular Diol Compound) Also, when reacting the organic diisocyanate compound and high-molecular diol compound, the use ratio of the two, or equivalent ratio of isocyanate groups : hydroxyl groups (isocyanate index), is in a range of normally 1.2:1.0 to 3.0:1, or preferably 1.3:1.0 to 2.0:1. If the isocyanate index is lower than 1.2, the polyurethane polyurea resin not modified by acid and biomass polyurethane polyurea resin not modified by acid tend to become flexible, potentially leading to low anti-blocking property, etc., when the printing ink composition is printed, in which case other hard resins may have to be combined.

A catalyst can be used when reacting the organic diisocyanate compound and high-molecular diol compound to obtain the polyurethane polyurea resin not modified by acid and biomass polyurethane polyurea resin not modified by acid used under the present invention.

In particular, use of organic metal-based compounds is preferred, where such organic metal-based compounds include dibutyl titanium dichloride, tetrabutyl titanate, butoxy titanium trichloride, and other titanium compounds, dibutyl tin sulfide, tributyl tin sulfide, tributyl tin oxide, dibutyl tin dichloride, dibutyl tin oxide, dibutyl tin dibromide, dibutyl tin dimaleate, dibutyl tin dilaurate, dibutyl tin diacetate, dioctyl tin dilaurate, tributyl tin acetate, tributyl tin chloride, triethyl tin ethoxide, tributyl tin ethoxide, dioctyl tin oxide, tributyl tin trichloroacetate, tin 2-ethylhexanoate, and other tin compounds, lead oleate, lead 2-ethylhexanoate, lead benzoate, lead naphthenate, and other lead compounds, as well as iron 2-ethylhexanoate, iron acetylacetonate, cobalt benzoate, cobalt 2-ethylhexanoate, zinc naphthenate, zinc 2-ethylhexanoate, zirconium naphthenate, and the like. Of these, tetrabutyl titanate and other titanium compounds are preferred.

Tertiary amine compounds can also be used; for example, triethylamine, triethylenediamine, 1,4-diazabicyclo(2,2,2)octane, and 1,8-diazabicyclo(5,4,0)-undecene-7 (DBU) can be used.

(Polyurethane Polyurea Resin Not Modified by Acid Obtained Using Compound Resulting from Ketiminating Amino Groups in Polyamine Compound with Ketone Compound, and Biomass Polyurethane Polyurea Resin Not Modified by Acid Obtained Using Compound Resulting from Ketiminating Amino Groups in Polyamine Compound with Ketone Compound)

The polyurethane polyurea resin not modified by acid obtained using a compound resulting from ketiminating the amino groups in a polyamine compound with a ketone compound, and biomass polyurethane polyurea resin not modified by acid obtained using a compound resulting from ketiminating the amino groups in a polyamine compound with a ketone compound, are each obtained using, of the aforementioned chain extenders and/or reaction terminators, a ketimine compound resulting from ketiminating a polyamine compound beforehand with an excessive amount of ketone compound, by means of c. adopting a compound resulting from ketiminating the amino groups in a polyamine compound in an organic solvent using a ketone compound and reacting the compound with a urethane prepolymer and/or biomass urethane prepolymer, or d. adopting a compound resulting from ketiminating the amino groups in a polyamine compound in an organic solvent using a ketone compound and adding it to, and mixing under agitation with, a urethane prepolymer and/or biomass urethane prepolymer, followed by addition of water and subsequent chain elongation and reaction termination, thereby manufacturing a polyurethane polyurea resin not modified by acid or biomass polyurethane polyurea resin not modified by acid. In particular, preferably, of the aforementioned chain extenders and reaction terminators, one or more types selected from isophoronediamine, N-(2-hydroxyethyl)ethylenediamine, and ethylenediamine is/are adopted.

A polyamine compound ketiminated with a ketone compound has a structure in which the oxygen atoms in the ketone compound have been substituted by the nitrogen atoms in the amino groups in the polyamine compound.

Also, for the ketone compound used, acetone, diethyl ketone, methyl ethyl ketone, diacetone alcohol, or methyl isobutyl ketone is preferred.

Preferably, in this ketiminating reaction, solvents other than the ketone compound are not used.

However, alcohol compounds can be used as solvents other than the ketone compound. In particular, isopropyl alcohol can be used.

This "solvents other than the ketone compound are not used" is defined as ketiminating under solvent-free conditions. It should be noted that, to the extent that doing so does not inhibit the subsequent chain elongation reaction or odor-free state of the polyurethane polyurea resin not modified by acid or biomass polyurethane polyurea resin not modified by acid, a polar organic solvent may be compounded instead of using solvent-free conditions.

The present invention may be a printing ink composition containing a polyurethane polyurea resin not modified by acid and/or biomass polyurethane polyurea resin not modified by acid, obtained through a process of extending the chain and terminating the reaction by the method of c or d above using a ketiminated chain extender and/or reaction terminator, and this printing ink composition, and a printed matter printed therewith, do not produce ketimine odor. Also, the printing ink composition has an effect of increasing the peel strength when laminated by dry lamination, extrusion lamination, or other means.

It should be noted that a ketiminated amine, etc., may be used as a chain extender, or as a reaction terminator, or both, as a chain extender and reaction terminator.

### <Synthesis of Polyurethane Polyurea Resin Not Modified by Acid Obtained Using Compound Resulting from Ketiminating Amino Groups in Polyamine Compound with Ketone Compound, and Biomass Polyurethane Polyurea Resin Not Modified by Acid Obtained Using Compound Resulting from Ketiminating Amino Groups in Polyamine Compound with Ketone Compound>

The polyurethane polyurea resin not modified by acid and biomass polyurethane polyurea resin not modified by acid, obtained using a compound resulting from ketiminating the amino groups in a polyamine compound with a ketone compound, can be obtained using a ketimine compound resulting from ketiminating a polyamine compound beforehand with an excessive amount of ketone compound, on a urethane prepolymer and/or biomass urethane prepolymer obtained by reacting an organic diisocyanate compound and a high-molecular diol compound, by means of e. adopting a compound resulting from ketiminating the amino groups in a polyamine compound in an organic solvent using a ketone compound, and reacting the compound with the urethane prepolymer and/or biomass urethane prepolymer, or f. adopting a compound resulting from ketiminating the amino groups in a polyamine compound in an organic solvent using a ketone compound, and adding it to, and mixing under agitation with, the urethane prepolymer and/or biomass urethane prepolymer, followed by addition of water, and subsequent chain elongation and reaction termination.

If a solvent is used at the time of reaction, preferably an ester-based solvent and/or alcohol-based solvent, or more preferably a mixture of ester-based solvent and/or alcohol-based solvent, or yet more preferably propyl acetate and isopropyl alcohol, is/are used, where most preferably propyl acetate and isopropyl alcohol are used at a ratio by mass in a range of 1:1 to 5:1.

### (Polyurethane Resin Modified by Acid and Biomass Polyurethane Resin Modified by Acid)

For the polyurethane resin under the present invention, a polyurethane resin modified by acid and/or biomass polyurethane resin modified by acid can also be adopted. The polyurethane resin modified by acid and/or biomass polyurethane resin modified by acid may be used together with the aforementioned polyurethane resin not modified by acid and/or biomass polyurethane resin not modified by acid, or only the polyurethane resin modified by acid and/or biomass polyurethane resin modified by acid, or only the polyurethane resin not modified by acid and/or biomass polyurethane resin not modified by acid, may be used.

For the polyurethane resin modified by acid and biomass polyurethane resin modified by acid, those obtained by any conventionally known method by reacting the high-molecular diol component being a polyurethane resin-constituting high-molecular diol compound and pyromellitic anhydride or other tetrabasic acid anhydride, or by using a high-molecular diol compound having the free carboxyl groups obtained through ring-opening polymerization of lactones using dimethylolpropionic acid, dimethylolbutanoic acid, etc., as an initiator, or by using dimethylolpropionic acid, dimethylolbutanoic acid, or other hydroxycarboxylic acid together with a polyurethane resin-constituting high-molecular diol compound. Preferably the acid value of the polyurethane resin modified by acid and biomass polyurethane resin modified by acid is 70 mgKOH/g or lower.

### (Vinyl Chloride/Vinyl Acetate-based Copolymer)

For the vinyl chloride/vinyl acetate-based copolymer that may be compounded in the back printing ink composition, one manufactured by any known method using any vinyl chloride monomer and vinyl acetate monomer conventionally used in gravure printing ink compositions as the essential components, and if necessary, vinyl propionate, vinyl monochloroacetate, vinyl versatate, vinyl laurate, vinyl stearate, vinyl benzoate, or other fatty acid vinyl monomer or monomer having hydroxyl groups or other functional groups as the copolymerization component.

A vinyl chloride/vinyl acetate-based copolymer having hydroxyl groups is obtained by partially saponifying an acetic acid ester or introducing a (meth)acrylic monomer having hydroxyl groups.

In the case of a vinyl chloride/vinyl acetate-based copolymer having hydroxyl groups obtained by partially saponifying an acetic acid ester, the film properties and solution behaviors of the resin will be determined by the ratio of the structure units based on the reaction location of vinyl chloride (formula 1 below), structure units based on the reaction location of vinyl acetate (formula 2 below), and structure units based on saponification of the reaction location of vinyl acetate (formula 3 below), in the molecule. Specifically, the structure units based on the reaction location of vinyl chloride add toughness and hardness to the resin film, structure units based on the reaction location of vinyl acetate add adhesion property and flexibility, and structure units based on saponification of the reaction location of vinyl acetate add to the printing ink composition good solubility in environmentally friendly, organic solvent systems.

Formula 1 -CH₂-CHCl-

Formula 2 -CH₂-CH(OCOCH₃)-

Formula 3 -CH₂-CH(OH)-

It should be noted that, from the viewpoints of solubility in the organic solvent described below used in the back printing ink composition, and of printability, the vinyl chloride/vinyl acetate-based copolymer may have various types of functional groups in the molecule.

Also, when an environmentally friendly solvent is used as the organic solvent, preferably the vinyl chloride/vinyl acetate-based copolymer has 50 to 200 mgKOH/g of hydroxyl groups. Of the commercial products representing such vinyl chloride/vinyl acetate-based copolymer, preferably SOLBIN A, AL, TA5R, TA2, TA3, TAO, TAOL, etc., are used, for example.

### (Vinyl Chloride/Acrylic-based Copolymer)

The vinyl chloride/acrylic-based copolymer that can be compounded in the back printing ink composition is one whose primary component is a copolymer of vinyl chloride and acrylic monomer, where the type of copolymer is not specifically limited. For example, the acrylic monomer may be blocked or randomly inserted in the main chain of polyvinyl chloride, or it may be graft-copolymerized to the side chain of polyvinyl chloride.

For the acrylic monomer, (meth)acrylic acid esters, acrylic monomers having hydroxyl groups, etc., can be used. Examples of the (meth)acrylic acid esters include (meth)acrylic acid alkyl esters, where the alkyl groups may be straight-chain, branched, or cyclic, but preferably they are straight-chain alkyl groups.

For example, they include methyl (meth)acrylate, ethyl (meth)acrylate, propyl (meth)acrylate, butyl (meth)acrylate, pentyl (meth)acrylate, hexyl (meth)acrylate, cyclohexyl (meth)acrylate, 2-ethylhexyl (meth)acrylate, isooctyl (meth)acrylate, decyl (meth)acrylate, dodecyl (meth)acrylate, tetradecyl (meth)acrylate, hexadecyl (meth)acrylate, octadecyl (meth)acrylate, and the like.

Examples of the acrylic monomers having hydroxyl groups include 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, 4-hydroxybutyl (meth)acrylate, 6-hydroxyhexyl (meth)acrylate, 8-hydroxyoctyl (meth)acrylate, and other (meth)acrylic acid hydroxy alkyl esters, polyethylene glycol mono(meth)acrylate, polypropylene glycol mono(meth)acrylate, 1,4-cyclohexanedimethanol mono(meth)acrylate, and other glycol mono(meth)acrylates, caprolactone-modified (meth)acrylate, hydroxy ethyl acrylamide, and the like.

Also, for the acrylic monomer, acrylic monomers having functional groups other than hydroxyl groups can also be used. Examples of the functional groups other than hydroxyl groups include carboxyl groups, amide bond groups, amino groups, alkylene oxide groups, and the like.

Preferably the vinyl chloride/acrylic-based copolymer has a mass-averaged molecular weight of 10,000 to 70,000.

Also, from the viewpoints of solubility in any environmentally friendly solvent used as the organic solvent, and of adhesion property with respect to base materials, preferably the vinyl chloride/acrylic-based copolymer has hydroxyl groups amounting to 50 to 20 mgKOH/g.

The back printing ink composition can contain the polyurethane resin and (vinyl chloride/vinyl acetate-based copolymer and/or vinyl chloride/acrylic-based copolymer) at a ratio (ratio by mass) of polyurethane resin/(vinyl chloride/vinyl acetate-based copolymer and/or vinyl chloride/acrylic-based copolymer) = 95/5 to 45/55, or preferably 92/8 to 70/30.

It should be noted that the ratio of polyurethane resin/(vinyl chloride/vinyl acetate-based copolymer) may be in a range of 90/10 to 75/25, while that of polyurethane resin/(vinyl chloride/acrylic-based copolymer) may be in a range of 95/5 to 85/15.

By containing the polyurethane resin and vinyl chloride/vinyl acetate-based copolymer and/or vinyl chloride/acrylic-based copolymer at a ratio of 95/5 to 45/55, the back printing ink composition will have superior printability and adhesion property with respect to films. Additionally, when it is to be laminated, it will have superior laminatability.

If the ratio of polyurethane resin/(vinyl chloride/vinyl acetate-based copolymer and/or vinyl chloride/acrylic-based copolymer) exceeds 95/5, the percentage of (vinyl chloride/vinyl acetate-based copolymer and/or vinyl chloride/acrylic-based copolymer) can become low, resulting in insufficient adhesion property with respect to the aforementioned films.

If the ratio of polyurethane resin/(vinyl chloride/vinyl acetate-based copolymer and/or vinyl chloride/acrylic-based copolymer) is below 45/55, on the other hand, the percentage of (vinyl chloride/vinyl acetate-based copolymer and/or vinyl chloride/acrylic-based copolymer) can become high, causing the printed matter formed with the printing ink composition to harden, and again result in insufficient adhesion property with respect to the aforementioned films.

Also, the total content of the polyurethane resin and vinyl chloride/vinyl acetate-based copolymer and/or vinyl chloride/acrylic-based copolymer in the back printing ink composition is favorably 5 to 30% by mass.

Also, the back printing ink composition can contain one or more types selected from adhesion-improving agent and anti-blocking agent, or preferably adhesion-improving agent and anti-blocking agent are used together, to the extent that the intended performance of the present invention will not drop.

### (Adhesion-improving Agent)

Examples of the adhesion-improving agent that can be compounded in the back printing ink composition include rosin or derivative thereof, chlorinated polypropylene, dammar resin, and the like, where preferably at least one or more types, or more preferably two or more types, selected from rosin or derivatives thereof is/are contained.

### (Rosin or Derivative Thereof)

Rosin encompasses gum rosin, tall oil rosin, wood rosin, and the like. In general, rosin is an amber-colored amorphous resin obtained from pine, and exists as a mixture due to its natural origin; however, rosin may be isolated into constitutional components such as abietic acid, neoabietic acid, palustric acid, pimaric acid, isopimaric acid, sandaracopimaric acid, dehydroabietic acid, and used as such, and they are also defined as rosin under the present invention.

A rosin derivative is a compound obtained by modifying rosin, and examples are specifically listed below.
(1) Hydrogenated rosin: Rosin whose weatherability has been improved by adding hydrogen to the conjugated double bonds (hydrogenation).
(2) Disproportionated rosin: Disproportionation refers to a modification involving a reaction of two rosin molecules, converting the abietic acid in the two molecules having conjugated double bonds and turning one molecule into an aromatic molecule and the other into a molecule with isolated double bonds. In general, disproportionated rosin has poorer weatherability than hydrogenated rosin, but demonstrates better weatherability than untreated rosin.
(3) Rosin-modified phenol resin: Rosin-modified phenol resin is sometimes used as a main binder. Rosin-modified phenol resin can be obtained by known manufacturing methods.
(4) Rosin ester: Ester resin derived from rosin, which has been used for a long time as a tackifier in glues/adhesives.
(5) Rosin-modified maleic acid resin: Rosin that has been addition-reacted with maleic acid anhydride, including rosin to which glycerin or other hydroxyl group-containing compound esterified with anhydrous acid groups has been grafted.
(6) Polymerized rosin: Derivative containing a dimerized resin acid, derived from natural resin rosin.

Other types of known rosin or rosin derivatives can also be used, where any one of these can be used alone, or two or more can be combined.

Additionally, preferably each rosin or rosin derivative has an acid value of 120 mgKOH/g or higher. When the acid value is 120 mgKOH/g or higher, lamination strength will improve. More preferably the acid value is 160 mgKOH/g or higher. Also, preferably the total use amount of any rosin or derivative thereof, if compounded in, is 0.1 to 3.0% by mass, in terms of % by mass of solids, in the back printing ink composition.

### (Chlorinated Polypropylene)

For the chlorinated polypropylene, any chlorinated polypropylene with a chlorination degree (a degree of chlorination) of 20 to 50 can be used. Chlorinated polypropylene with a chlorination degree under 20 tends to have lower compatibility with organic solvents. If its chlorination degree exceeds 50, on the other hand, the chlorinated polypropylene tends to have lower adhesion property with respect to films. It should be noted that, under the present invention, the chlorination degree is defined by the % by mass of the chlorine atoms in the chlorinated polypropylene resin. Also, preferably the chlorinated polypropylene is either modified or unmodified chlorinated polypropylene with a mass-averaged molecular weight of 5,000 to 200,000. Chlorinated polypropylene with a mass-averaged molecular weight under 5,000 tends to have lower adhesion property. If its mass-averaged molecular weight exceeds 200,000, on the other hand, the chlorinated polypropylene tends to have lower solubility in organic solvents. Also, the use amount of any chlorinated polypropylene, if compounded in, is 0.1 to 3.0% by mass, in terms of % by mass of solids, in the back printing ink composition.

### (Dammar Resin)

Dammar resin, also denoted as dammar, is a type of plant-derived natural resin. To be specific, it is a type of natural resin obtained from the Dipterocarpaceae or Burseraceae native to Southeast Asia such as Malaysia and Indonesia. When dammar resin is used, it is dissolved in an appropriate organic solvent and made into a varnish. Since dammar resin does not contain chlorine, using it allows for elimination/reduction of chlorine compared to when chlorinated polypropylene is used in the printing ink composition. Also, preferably the use amount of any dammar resin, when compounded in, is 3.0% by mass or lower, in terms of % by mass of solids, in the back printing ink composition.

### (Anti-blocking Agent)

Examples of the anti-blocking agent include silica particles, polyethylene wax, fatty acid amide, cellulose acetate butyrate resin, cellulose acetate propionate resin, nitrocellulose, and the like, where one or more type, or preferably two or more types, selected from silica particles, polyethylene wax, and fatty acid amide is/are contained, and, depending on the type of pigment, preferably cellulose acetate butyrate resin, cellulose acetate propionate resin, or nitrocellulose is further contained.

### <Silica Particles>

The silica particles include those naturally produced or synthesized, crystalline or non-crystalline, hydrophobic or hydrophilic, and the like. Silica particles with an average particle size of 1.0 to 5.0 µm are preferred (it should be noted that the average particle size of silica particles refers to the particle size based on the cumulative 50% value (D50) in particle size distribution, and can be obtained by the coulter counter method). The silica particles may be hydrophilic silica having hydrophilic functional groups on their surface, or hydrophobic silica whose hydrophilic functional groups have been modified with an alkyl silane, etc., and hydrophobized, of which the hydrophilic type is preferred, and the hydrophilic silica particles contained in the printing ink composition also have an effect of promoting the wetting/spreading of the printing ink composition during overprinting to improve overprinting effects (hereinafter also referred to as "trapping property"). The use amount of the silica particles is preferably 0.0 to 3.0% by mass, or more preferably 0.1 to 1.0% by mass, in the back printing ink composition.

### (Polyethylene Wax)

For the polyethylene wax, preferably those with an average particle size in a range of 1.0 to 3.0 µm (it should be noted that the average particle size refers to the particle size measured by Honeywell's Microtrac UPA) are used. If the particle size of the polyethylene wax is smaller than 1.0 µm, slip property and blocking property will drop, while a particle size larger than 3.0 µm can lead to lower trapping property. Also, preferably the content of the polyethylene wax in the back printing ink composition is in a range of 0.1 to 1.5% by mass. If the content is lower than 0.1% by mass, the desired effects cannot be obtained, while a content higher than 1.5% by mass can lead to lower gloss.

### (Nitrocellulose)

For the nitrocellulose, any nitrocellulose conventionally used in gravure printing ink compositions can be used. Nitrocellulose is obtained as a nitric acid ester by reacting natural cellulose with nitric acid to substitute the three hydroxyl groups in the six-member ring of anhydrous glucopyranose groups in the natural cellulose with nitric acid groups. For the nitrocellulose used under the present invention, nitrocellulose having a nitrogen content of 10 to 13% and average degree of polymerization of 35 to 90 is used favorably. Specific examples include SS1/2, SS1/4, SS1/8, TR1/16, NCRS-2 (Korea CNC Ltd.), and the like. Regarding the content of the nitrocellulose, preferably the nitrocellulose is used by a range of 0.1 to 2.0% by mass in the back printing ink composition depending on the type of pigment.

### (Cellulose Acetate Propionate Resin)

For the cellulose acetate propionate resin, those conventionally used in gravure printing ink compositions can be used.

A cellulose acetate propionate resin is obtained by triesterifying cellulose with acetic acid and propionic acid, followed by hydrolyzation. In general, cellulose acetate propionate resins with 0.6 to 2.5% by weight of acetylation, 42 to 46% by weight of propionylation and 1.8 to 5% by weight of hydroxyl groups are commercially available. Preferably the cellulose acetate propionate resin is used by a range of 0.1 to 3.0% by mass in the back printing ink composition depending on the type of pigment.

### (Cellulose Acetate Butyrate Resin)

For the cellulose acetate butyrate resin, those conventionally used in gravure printing ink compositions can be used.

A cellulose acetate butyrate resin is obtained by triesterifying cellulose with acetic acid and butyric acid, followed by hydrolyzation. In general, resins with 2 to 30% by mass of acetylation, 17 to 53% by mass of butyrylation and 1 to 5% by mass of hydroxyl groups are commercially available. Regarding the use amount of the cellulose acetate butyrate resin, preferably it is used by a range of 0.1 to 3.0% by mass in the back printing ink composition depending on the type of pigment.

### (Fatty Acid Amide)

The fatty acid amide is not specifically limited so long as it contains a residue left by removing the acid groups from a fatty acid, and amide groups. Fatty acid amide may be, for example, a monoamide, substituted amide, bisamide, methylolamide, ester amide, or the like, of which at least one type selected from the group that consists of monoamide, substituted amide, and bisamide is preferred in the interest of improving anti-blocking property. Preferably the use amount of the fatty acid amide is in a range of 0.01 to 1.0% by mass in the back printing ink composition.

· Monoamide: A monoamide is expressed by general formula (1) below:

General formula (1) R₁-CONH₂

(In the formula, R₁ represents a residue left by removing COOH from a fatty acid.)

Specific examples of monoamides include lauric acid amide, palmitic acid amide, stearic acid amide, behenic acid amide, hydroxystearic acid amide, oleic acid amide, erucic acid amide, and the like.

· Substituted amide: A substituted amide is expressed by general formula (2) below:

General formula (2) R₂-CONH-R₃

(In the formula, R₂ and R₃ each represent a residue left by removing COOH from a fatty acid, and may be the same or different.)

Specific examples of substituted amides include N-oleyl palmitic acid amide, N-stearyl stearic acid amide, N-stearyl oleic acid amide, N-oleyl stearic acid amide, N-stearyl erucic acid amide, and the like.

· Bisamide: A bisamide is expressed by general formula (3) or general formula (4) below:

General formula (3) R₄-CONH-R₅-HNCO-R₆

General formula (4) R₇-NHCO-R₈-CONH-R₉

(In the formula, R₄, R₆, R₇ and R₉ each represent a residue left by removing COOH from a fatty acid and may be the same or different, while R₅ and R₈ each represent an alkylene group or arylene group with 1 to 10 carbon atoms.)

Specific examples of bisamides include methylene-bis-stearic acid amide, ethylene-bis-capric acid amide, ethylene-bis-lauric acid amide, ethylene-bis-stearic acid amide, ethylene-bis-hydroxystearic acid amide, ethylene-bis-behenic acid amide, hexamethylene-bis-stearic acid amide, hexamethylene-bis-behenic acid amide, hexamethylene-hydroxystearic acid amide, ethylene-bis-oleic acid amide, ethylene-bis-erucic acid amide, hexamethylene-bis-oleic acid amide, N,N'-distearyl adipic acid amide, N,N'-distearyl sebacic acid amide, N,N'-dioleyl adipic acid amide, N,N'-dioleyl sebacic acid amide, and the like.

· Methylolamide: A methylolamide is expressed by general formula (5) below:

General formula (5) R₁₀-CONHCH₂OH

(In the formula, R₁₀ represents a residue left by removing COOH from a fatty acid.)

Specific examples of methylolamides include methylol-palmitic acid amide, methylol-stearic acid amide, methylol-behenic acid amide, methylol-hydroxystearic acid amide, methylol-oleic acid amide, methylol-erucic acid amide, and the like.

· Ester amide: An ester amide is expressed by general formula (6) below:

General formula (6) R₁₁-CONH-R₁₂-OCO-R₁₃

(In the formula, R₁₁ and R₁₃ each represent a residue left by removing COOH from a fatty acid and may be the same or different, while R₁₂ represents an alkylene group or arylene group with 1 to 10 carbon atoms.)

Specific examples of ester amides include stearylamide ethyl stearate, oleylamide ethyl stearate, and the like.

Preferably the melting point of the fatty acid amide is 50 to 150°C.

Also, the fatty acid constituting the fatty acid amide comprises preferably a saturated fatty acid with 12 to 22 carbon atoms and/or unsaturated fatty acid with 16 to 25 carbon atoms, or more preferably a saturated fatty acid with 16 to 18 carbon atoms and/or unsaturated fatty acid with 18 to 22 carbon atoms. For the saturated fatty acid, lauric acid, palmitic acid, stearic acid, behenic acid, and hydroxystearic acid are particularly preferred, while for the unsaturated fatty acid, oleic acid and erucic acid are particularly preferred.

### (Organic Solvent)

The back printing ink composition for forming a printed layer is oily. The organic solvent used is common with what can be used in the ink compositions for front printing and shrink printing, and may be, for example, methanol, ethanol, isopropanol, normal propanol, butanol, isobutanol, tert-butanol, or other alcohol-based solvent, toluene, xylene, or other aromatic hydrocarbon-based solvent, hexane, cyclohexane, methyl cyclohexane, ethyl cyclohexane, or other aliphatic hydrocarbon-based solvent, acetone, methyl ethyl ketone, methyl isobutyl ketone, cyclohexanone, or other ketone-based solvent, ethyl acetate, n-propyl acetate, isopropyl acetate, butyl acetate, isobutyl acetate, sec-butyl acetate, tert-butyl acetate, or other ester-based solvent, ethylene glycol monomethyl ether, ethylene glycol monoethyl ether, ethylene glycol dimethyl ether, ethylene glycol monobutyl ether, propylene glycol monomethyl ether, propylene glycol monoethyl ether, propylene glycol monopropyl ether, propylene glycol monobutyl ether, or other glycol-based solvent or esterified product thereof, where the esterified product to be selected, which is primarily an acetated product, may be, for example, ethylene glycol monomethyl ether acetate, ethylene glycol monoethyl ether acetate, ethylene glycol monobutyl ether acetate, diethylene glycol monoethyl ether acetate, diethylene glycol monobutyl ether acetate, propylene glycol monomethyl ether acetate, propylene glycol monoethyl ether acetate, or the like. Any one of these can be used alone, or two or more types can be combined.

From the aspect of environmental issues, preferably a mixed solvent comprising ester-based organic solvent, alcohol-based organic solvent, and ketone-based organic solvent, or mixed solvent comprising ester-based organic solvent and alcohol-based organic solvent that can better address environmental issues, is used.

Additionally, in the back printing ink composition, a glycol ether-based organic solvent can also be contained by 0.1 to 20% by mass in 100% by mass of organic solvent in order to improve wettability and spreadability. Specific examples of the glycol ether-based organic solvent include ethylene glycol monomethyl ether, diethylene glycol monomethyl ether, ethylene glycol mono-n-propyl ether, ethylene glycol monoisopropyl ether, diethylene glycol monoisopropyl ether, ethylene glycol monobutyl ether, diethylene glycol monobutyl ether, ethylene glycol monoisobutyl ether, propylene glycol monomethyl ether, dipropylene glycol monomethyl ether, propylene glycol mono-n-propyl ether, diethylene glycol dimethyl ether, diethylene glycol methyl ethyl ether, diethylene glycol diethyl ether, and the like.

Preferably water is contained in the back printing ink composition from the viewpoints of mitigation of printing problems caused by static electricity as well as fogging prevention and cell reproducibility. The use amount of the water is preferably 10% by mass or less, or more preferably in a range of 0.1 to 5.0% by mass, in the back printing ink composition.

### (Other Materials)

Various types of additives such as pigment dispersant, anti-static agent, plasticizer, etc., can be added to the back printing ink composition.

Regarding the method for manufacturing the printing ink composition using the constituent materials above, any known method can be used. To be specific, it can be obtained by using a high-speed mixer, ball mill, sand mill, attritor, etc., to knead a mixture of binder resin, organic solvent, and if necessary, pigment dispersant, etc., for example, and then further adding thiocyanate, specified additives, and other remaining materials, and mixing them.

Also, metal tetraalkoxides and/or hydroxy acids may or may not be contained.

### (Method for Manufacturing Back Printing Ink Composition)

Regarding the method for manufacturing the back printing ink composition using these materials, a method of mixing under agitation the pigment, binder resin, organic solvent, and if necessary, pigment dispersant, surfactant, etc., and then kneading the mixture utilizing any of various kneading machines including a bead mill, ball mill, sand mill, attritor, roll mill, pearl mill, etc., for example, and then further adding the fatty acid amide, chelate crosslinking agent, and remaining materials, and mixing them, is utilized.

### (Printing Method Using Back Printing Ink Composition, and Laminate Obtained by Same)

Next, the method for obtaining a laminated printed matter using the back printing ink composition is explained.

It should be noted that the back printing ink composition can also be used in applications other than lamination.

Methods for obtaining a laminated printed matter include at least the printing method below.

For example, the releasing primer composition proposed by the present invention is coated on a known resin film, as the resin base material, that will become a base material for lamination. Thereafter, a gravure lamination printing ink composition is printed inline or offline one or more times by the gravure printing method. Next, at a desired location on the surface side (bottom layer side as viewed from the top layer after the final lamination) of the gravure lamination printing ink layer formed by these printings, other gravure lamination printing ink composition is printed by the gravure printing method and dried with a dryer. The printing speed and drying temperature of the gravure lamination printing ink composition can be adopted from known speeds and temperatures as deemed appropriate.

By laminating a resin film, etc., by any of various methods, on the gravure lamination printing ink composition layer side of the printed matter obtained by the aforementioned method, and thereby forming a sealant layer, a laminated printed matter for packaging bag, etc., can be obtained. For the method for this lamination, the extrusion lamination method wherein a molten polymer is layered on the surface of the printed matter after coating an anchor coating agent thereon or without coating any such agent, or dry lamination method wherein a film-like polymer is bonded on the surface of the printed matter after coating an adhesive thereon, can be utilized.

For this resin layer formed by extrusion lamination or film-like polymer, a resin such as cast polypropylene or VMCPP (aluminum vapor deposition cast polypropylene) can be adopted. Particularly in the case of the latter, the VMCPP itself constituting the sealant layer can be released in the release process using the release solution described below.

The extrusion lamination method represents a method of layering a molten polymer using a known extrusion lamination machine on the surface of the printed matter including the layer formed by the printing ink composition after coating thereon a titanium-based, urethane-based, imine-based, polybutadiene-based or other anchor coating agent as necessary, or without coating any such agent, where additionally a molten resin can be layered as an intermediate layer by sandwiching it between the other materials. It should be noted that, in this case, it is not necessary to use a polyethyleneimine-based anchor coating agent.

For the molten polymer used under the extrusion lamination method, any low-density polyethylene, ethylene-vinyl acetate copolymer, polypropylene, or other conventionally used resin can be used. In particular, the effects of the present invention can be increased under a constitution using a low-density polyethylene that facilitates the production of carbonyl groups due to oxidation at the time of melting.

Meanwhile, the dry lamination method represents a method of bonding a resin film using a known dry lamination machine on the surface of the layer constituted by the gravure lamination printing ink composition after coating a urethane-based, isocyanate-based, or other adhesive thereon. In particular, to obtain a packaging material used in retort applications, an aluminum foil can be sandwiched between the base material and the bonded resin film prior to lamination. Such laminated product can also be made into a bag and filled with a content and then used in boiled-in-retort applications.

The resin film used here may be polyethylene, polypropylene, or other oriented or cast polyolefin, polyester, nylon, cellophane, vinylon, or the like. Additionally, for these resin films, films that have been processed beforehand by coating or kneading in an antifogging agent, surface-coating, or kneading in a matting agent, and the like, can also be used.

Also, various types of plastic films for printing that have been metal vapor-deposited, films on which a barrier layer has been stacked by coating a barrier resin, and the like, can be used as these resin films.

### <<Front Printing>>

The front printing ink composition contains the aforementioned pigment, binder resin and various types of additives.

### <Binder Resin>

For the binder resin contained in the front printing ink composition, for example, a combination of cellulose resin and polyamide resin, combination of cellulose resin and polyurethane resin, combination of polyurethane resin and the aforementioned vinyl chloride/vinyl acetate-based copolymer, combination of acrylic resin and polyurethane resin, combination of cellulose resin and acrylic resin, cellulose resin alone, aforementioned vinyl chloride/vinyl acetate-based copolymer alone, etc., can be selected from the following resins.

### (Cellulose-based Resins)

For the cellulose-based resins, any cellulose-based resins conventionally used in gravure printing ink compositions can be used. Such cellulose-based resins include nitrocellulose (nitro group-substituted product), cellulose acetate, cellulose acetate propionate, cellulose acetate butyrate (CAB), and other lower acyl group-substituted products, methyl cellulose, ethyl cellulose, and other lower alkyl group-substituted products. In terms of the mass-averaged molecular weight, degree of substitution relative to hydroxyl groups, etc., of these cellulose-based resins, resins having these values in the ranges used in standard printing ink compositions and paints can also be utilized under the present invention without problems.

For the degree of substitution of hydroxyl groups, generally resins with a value of 1.3 to 2.7 or so are preferred. Also, using nitro group-substituted products is advantageous from a heat resistance aspect, while lower acyl group-substituted products and lower alkyl group-substituted products are advantageous from an adhesion property aspect, and therefore preferably an appropriate cellulose-based resin is selected and used as deemed appropriate according to the purpose.

When a cellulose-based resin is contained, preferably the content ratio of the polyurethane resin and cellulose-based resin is adjusted to "polyurethane resin : cellulose-based resin = 5:95 to 95:5" in terms of mass. When a polyamide resin is combined with a cellulose-based resin, preferably it is done with a content ratio of "polyamide resin : cellulose-based resin = 95:5 to 70:30." When an acrylic resin is combined with a cellulose-based resin, preferably it is done with a content ratio of "acrylic resin: cellulose-based resin = 95:5 to 30:70."

### (Polyurethane Resin)

For the polyurethane resin, a polyisocyanate compound, diol compound, or if necessary, polyurethane resin obtained by reacting a chain extender, reaction terminator, etc., thereto can be adopted.

Here, for the polyisocyanate compound, hexamethylene diisocyanate, 2,2,4-trimethylhexamethylene diisocyanate, or other aliphatic diisocyanate compound, isophorone diisocyanate, hydrogenated xylylene diisocyanate, 4,4-cyclohexylmethane diisocyanate, or other alicyclic diisocyanate compound, xylylene diisocyanate, α,α,α',α'-tetramethylxylylene diisocyanate, or other aromatic aliphatic diisocyanate compound, tolylene diisocyanate, diphenylmethane diisocyanate, or other aromatic diisocyanate compound, etc., can be adopted.

Additionally, such polyurethane resin can also be used together with any known binder resin for gravure printing.

Next, a favorable form of the diol compound is a high-molecular diol compound whose number-averaged molecular weight is preferably 500 or higher but no higher than 3,000, or more preferably 500 to 2,000, where one type of diol compound may be used alone, or multiple diol compounds may be combined. Diol compounds with a number-averaged molecular weight 500 or lower tend to lower adhesion property, while those with a number-averaged molecular weight exceeding 3,000 tend to lower oil resistance.

Specific examples of the diol compounds include alkylene glycol compounds with a number-averaged molecular weight of 100 or higher, polyethylene glycol, polypropylene glycol, and other polyalkylene glycol compounds, as well as polyether diol compounds obtained by polyaddition of ethylene oxide, propylene oxide, or other oxyalkylene, tetrahydrofuran, etc., to lower-molecular-weight alkylene glycols, bisphenols, and other diol compounds.

Also included are polyester diol compounds obtained by polycondensation of ethylene glycol, 1,3-propanediol, 1,4-butanediol, 1,6-hexanediol or other straight-chain glycol, 1,2-propanediol, neopentyl glycol, 3-methyl-1,5-pentanediol, 2,4-diethyl-1,5-pentanediol, ethyl butyl propanediol, or other branched glycol, diethylene glycol, triethylene glycol, or other ether-based diol, or other lower-molecular diol compound with succinic acid, adipic acid, azelaic acid, sebacic acid, maleic acid, or other saturated or unsaturated aliphatic dicarboxylic acid, phthalic acid, or other aromatic dicarboxylic acid, or other dicarboxylic acid compound, as well as polyester diol compounds obtained from lactone and other cyclic ester compounds through ring-opening reaction.

Additionally, polycarbonate compounds having a straight chain or side chain, as well as polybutadiene glycol compounds, etc., can also be combined.

Also, to obtain good printability with a system which does not contain any aromatic hydrocarbon-based organic solvent (toluene, etc.) in consideration of the environment, and which has a high content percentage of alcohol, ester, or other highly polar organic solvent, preferably polyether diol compounds are utilized as the polyol compounds.

Also, when other solvent is used, in some cases use of polyester diol compounds is preferred.

Additionally, polyurethane resins obtained using chain extenders and reaction terminators can also be utilized, where examples of the chain extenders include ethylenediamine, propylenediamine, tetramethylenediamine, hexamethylenediamine and other aliphatic diamines, isophoronediamine, 4,4'-dicyclohexylmethanediamine and other alicyclic diamines, diethylenetriamine, triethylenetetratriamine and other polyamines, tolylenediamine and other aromatic diamines, xylenediamine and other aromatic aliphatic diamines, N-(2-hydroxyethyl)ethylenediamine, N-(2-hydroxyethyl)propylenediamine, N,N'-di(2-hydroxyethyl)ethylenediamine and other diamines having hydroxyl groups, ethylene glycol, propylene glycol, 1,4-butanediol, neopentyl glycol, diethylene glycol, triethylene glycol and other diol compounds.

The reaction terminators include methanol, ethanol and other monoalcohols, n-propylamine, n-butylamine, di-n-butylamine and other alkylamines, monoethanolamine, diethanolamine and other alkanolamines, ethylenediamine, propylenediamine, tetramethylenediamine, hexamethylenediamine and other aliphatic diamines, isophoronediamine, 1,4-butanediamine, 4,4'-dicyclohexylmethanediamine and other alicyclic diamines, diethylenetriamine, triethylenetetratriamine and other polyamines, tolylenediamine and other aromatic diamines, xylenediamine and other aromatic aliphatic diamines, N-(2-hydroxyethyl)ethylenediamine, N-(2-hydroxyethyl)propylenediamine, N,N'-di(2-hydroxyethyl)ethylenediamine and other diamines having hydroxyl groups, aminoethylethanolamine, and the like.

To obtain a polyurethane resin for use in the present invention by using the above synthesizing components, first a polyisocyanate compound is reacted with a diol compound so that the mol equivalent ratio of the NCO in the former and OH in the latter (equivalent of NCO in the polyisocyanate compound/equivalent of OH in the diol compound) becomes 0.5 or higher but no higher than 3.0, or preferably 1.2 or higher but no higher than 1.5, and next a chain extender or reaction terminator is reacted thereto as necessary.

It should be noted that, if the "equivalent of NCO in the polyisocyanate compound/equivalent of OH in the diol compound" is under 0.5, heat resistance and oil resistance tend to drop; if the "equivalent of NCO in the polyisocyanate compound/equivalent of OH in the diol compound" exceeds 3, on the other hand, stretchability tends to drop.

### (Biomass Polyurethane)

In consideration of the environmental aspect, a diol compound obtained using biomass components derived from plant components can be used for a part or all of the diol compound constituting the polyurethane.

For such diol compound, a polyester polyol compound is preferred, and for this polyester polyol compound, a bio-polyester polyol obtained by reacting a short-chain diol compound with 2 to 4 carbon atoms and a carboxylic acid compound can be adopted. Regarding the bio-polyol component, preferably at least one of its short-chain diol compound and carboxylic acid compound is plant-derived, or more preferably both are plant-derived.

The plant-derived short-chain diol compound with 2 to 4 carbon atoms is not specifically limited. For example, the short-chain diol compound may be 1,3-propanediol, 1,4-butanediol, ethylene glycol, etc., obtained from plant materials according to the methods below.

1,3-propanediol can be manufactured from a glycerol by way of 3-hydroxypropylaldehyde (HPA) according to the fermentation method where a plant resource (such as corn, etc.) is broken down to obtain glucose. A 1,3-propanediol component manufactured by a biotechnology method such as the fermentation method presents superior safety, provides lactic acid and other useful byproducts, and can also keep the manufacturing cost low, compared to a 1,3-propanediol component obtained by the EO manufacturing method. 1,4-butanediol can be manufactured by manufacturing a glycol from a plant resource and fermenting it to obtain a succinic acid, and then hydrogenating the succinic acid. Also, ethylene glycol can be manufactured by way of ethylene from a bioethanol obtained by a conventional method.

The plant-derived carboxylic acid compound is not specifically limited. For example, the carboxylic acid compound may be sebacic acid, succinic acid, lactic acid, glutaric acid, dimer acid, etc. Two or more of these may be combined. Of the above, preferably at least one type selected from the group that consists of sebacic acid, succinic acid and dimer acid is contained as the carboxylic acid compound. Also, 0.05 to 0.5 parts by mass of malic acid may be contained relative to 100 parts by mass of sebacic acid.

The bio-polyester polyol compound is produced as a 100% plant-derived bio-polyester polyol by condensation-reacting a plant-derived short-chain diol compound and a plant-derived carboxylic acid as deemed appropriate. To be specific, polytrimethylene sebacate polyol is obtained by directly dehydration-condensing plant-derived sebacic acid and plant-derived 1,3-propanediol. Also, polybutylene succinate polyol is obtained by directly dehydration-condensing plant-derived succinic acid and plant-derived 1,4-butanediol.

One or more types of these bio-polyester polyol compounds may be used. Urethane prepolymers obtained using these plant-derived components may be contained by 10% by mass or more, or 40% by mass or more, in terms of solids content in all urethane prepolymers.

Even when plant-derived components are adopted as described above, the same aforementioned chain extenders and reaction terminators can still be used.

### (Polyamide Resin)

The polyamide resin is obtained by reacting an acid component that is primarily a polymerized fatty acid and may further contain some aliphatic, alicyclic, or aromatic dicarboxylic acid along with aliphatic monocarboxylic acid, and an amine component that is primarily one of aliphatic, alicyclic, aromatic aliphatic, and aromatic polyamines or a mixture thereof and may further contain some primary or secondary monoamine.

Here, the polymerized fatty acid is obtained by polymerizing an unsaturated fatty acid with 16 to 22 carbon atoms or ester thereof, where examples include monobasic fatty acids, dimerized polymerized fatty acids, trimerized polymerized fatty acids, and the like. Also, the aliphatic dicarboxylic acids include succinic acid, adipic acid, azelaic acid, maleic acid, and the like, alicyclic dicarboxylic acids include cyclohexanedicarboxylic acid, and the like, and aromatic dicarboxylic acids include isophthalic acid, terephthalic acid, and the like. Additionally, the aliphatic monocarboxylic acids include acetic acid, stearic acid, oleic acid, linolic acid, and the like.

Meanwhile, the aliphatic polyamine in the amine component may be ethylenediamine, propylenediamine, hexamethylenediamine, methylaminopropylamine or other aliphatic diamine, diethylenetriamine, triethylenetetramine or other aliphatic polyamine, while the alicyclic polyamine may be cyclohexylenediamine, isophoronediamine, or the like. Also, the aromatic aliphatic polyamine may be xylylenediamine, while the aromatic polyamine may be phenylenediamine, diaminodiphenylmethane, or the like. Furthermore, the primary or secondary monoamine may be butylamine, octylamine, diethylamine, monoethanolamine, monopropanolamine, diethanolamine, dipropanolamine, or the like.

From the aspects of oil resistance, heat resistance, and vinyl chloride anti-blocking property of the printing ink composition, preferably, among other polyamide resins, one using an alkanolamine as the primary or secondary monoamine component and having hydroxyl groups in the molecule is used.

Regarding the method for synthesizing a polyamide resin from the acid component and amine component described above, the ratio of the carboxyl groups/amino group in the reaction components is preferably 0.9/1.0 to 1.0/0.9, or more preferably 1.0/1.0, reaction temperature is preferably 160 to 280°C, or more preferably 180 to 230°C, and reaction is performed in a reduced pressure of approx. 100 torr in the final stage.

### (Thermoplastic Polyamide Resin Using Plant Oil Fatty Acid as Reaction Material)

Among the aforementioned polyamide resins, thermoplastic polyamide resins using a plant oil fatty acid as a reaction material are not specifically limited. For example, the thermoplastic polyamide resins using a plant oil fatty acid as a reaction material include polyamide resins using tall oil, rice bran oil, palm oil, coconut oil, soybean oil, or other plant oil fatty acid as a reaction material, and the like. By using a plant oil fatty acid as a reaction material, these thermoplastic polyamide resins, when used, can reduce burdens on the environment.

A thermoplastic polyamide resin using a plant oil fatty acid as a reaction material is a polycondensation product of a polycarboxylic acid that contains a plant oil fatty acid, and a polyamine. The polyamine is not specifically limited. For example, the polyamine may be an aliphatic polyamine, alicyclic polyamine, aromatic polyamine, or the like. The aliphatic polyamine may be ethylenediamine, diethylenetriamine, triethylenetetramine, tetraethylenepentamine, pentaethylenehexane, piperazine, N-aminoethylpiperazine, or the like. The alicyclic polyamine may be isophoronediamine, bis-aminomethyl cyclohexane, or the like. The aromatic polyamine may be meta-xylenediamine, or the like. Two or more thermoplastic polyamide resins may be combined.

The thermoplastic polyamide resin is not specifically limited in number-averaged molecular weight (Mn). For example, preferably the thermoplastic polyamide resin has an Mn of 1,000 or higher. Also, preferably the Mn is 30,000 or lower. A thermoplastic polyamide resin with an Mn under 1,000 tends to make the printing ink composition lower in anti-blocking property and heat resistance. On the other hand, one with an Mn exceeding 30,000 tends to make the printing ink composition lower in rub resistance.

The thermoplastic polyamide resin is not specifically limited in acid value or amine value. For example, preferably the thermoplastic polyamide resin has an acid value of 10.0 mgKOH/g or lower, and amine value of 5.0 mgKOH/g or lower.

More preferably the thermoplastic polyamide resin has a softening point of 90 to 150°C.

The content of the thermoplastic polyamide resin is not specifically limited. For example, the content of the thermoplastic polyamide resin is preferably 20.0% by mass or higher, and preferably 70.0% by mass or lower, relative to all solids in the printing ink composition.

### (Acrylic Resin)

The acrylic resin can be manufactured using any conventionally known method and the manufacturing method is not specifically limited. The acrylic resin is obtained by polymerizing a monomer having carbon-carbon unsaturated double bonds in one molecule, in a solvent in the presence of a polymerization initiator.

Here, the monomer having carbon-carbon unsaturated double bonds in one molecule may be a (i) (meth)acrylic acid derivative, (ii) aromatic vinyl, (iii) olefin-based hydrocarbon, (iv) vinyl ester, (v) vinyl halide, (vi) vinyl ether, or the like.

The (i) (meth)acrylic acid derivative may be (meth)acrylonitrile, (meth)acrylate, methyl (meth)acrylate, butyl (meth)acrylate, ethylhexyl (meth)acrylate, stearyl (meth)acrylate, or other alkyl (meth)acrylate, benzyl (meth)acrylate, or the like.

The (ii) aromatic vinyl may be styrene, methyl styrene, ethyl styrene, chlorostyrene, monofluoromethyl styrene, difluoromethyl styrene, trifluoromethyl styrene, or other styrene whose hydrogen has been partially substituted by fluorine, or the like.

The (iii) olefin-based hydrocarbon may be ethylene, propylene, butadiene, isobutylene, isoprene, 1,4-pentadiene, or the like.

The (iv) vinyl ester may be vinyl acetate, or the like.

The (v) vinyl halide may be vinyl chloride, vinylidene chloride, or the like.

The (vi) vinyl ether may be vinyl methyl ether, or the like.

Also, a monomer having crosslinkable functional groups can be used as the monomer having carbon-carbon unsaturated double bonds in one molecule. The monomer having such functional groups may be a (vii) monomer having hydroxyl groups, (viii) monomer having isocyano groups, (ix) monomer having epoxy groups, or the like.

The (vii) monomer having hydroxyl groups may be 2-hydroxyethyl (meth)acrylate, 1-hydroxypropyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, or other hydroxyalkyl (meth)acrylate, polyethylene glycol mono(meth)acrylate, polypropylene glycol mono(meth)acrylate, polytetramethylene glycol mono(meth)acrylate, or other glycol mono(meth)acylate, hydroxystyrene, or the like.

The (viii) monomer having isocyano groups may be (meth)acryloyloxyethyl isocyanate, (meth)acryloyloxypropyl isocyanate, or the like, or one obtained by reacting 2-hydroxyethyl (meth)acrylate, 4-hydroxybutyl (meth)acrylate, or other hydroxyalkyl (meth)acrylate with toluene diisocyanate, isophorone diisocyanate, or other polyisocyanate.

The (ix) monomer having epoxy groups may be glycidyl methacrylate, glycidyl cinnamate, glycidyl allyl ether, glycidyl vinyl ether, vinyl cyclohexane monoepoxide, 1,3-butadiene monoepoxide, or the like.

If necessary, one type of these monomers having carbon-carbon unsaturated double bonds in one molecule may be used, or two or more types may be mixed, where the acid value is preferably adjusted to between 100 and 200 mgKOH/g. If the acid value is outside this range, the printing ink will experience phase separation, rising viscosity, and gelation, and present storage stability problems.

For the polymerization initiator used when synthesizing the acrylic resin, any standard peroxide or azo compound, such as benzoyl peroxide, azoisobutylvalenonitrile, azobisisobutyronitrile, di-t-butyl peroxide, t-butyl perbenzoate, t-butyl peroctoate, cumene hydroxyperoxide, or the like, is used, where the polymerization temperature is 50 to 140°C, or preferably 70 to 140°C.

The mass-averaged molecular weight of the obtained polymer is preferably 5,000 to 100,000.

For the nonaromatic solvent used in the aforementioned manufacturing method, acetone, methyl ethyl ketone, methyl isobutyl ketone, cyclohexanone, or other ketone, tetrahydrofuran, dioxane, ethylene glycol dimethyl ether, diethylene glycol dimethyl ether, or other ether, ethyl acetate, butyl acetate, or other ester, or the like, can be used. The solvent may be a mixture of two or more types.

### (Rosin Resin or Derivative Thereof)

For the rosin-based resin, any rosin-based resin may be used as selected from the aforementioned rosin and derivatives thereof that can be used in back printing.

In particular, a rosin-based resin with an acid value of 10 to 350 mgKOH/g is preferred, one with an acid value of 200 to 350 mgKOH/g is more preferred, and one with an acid value of 250 to 350 mgKOH/g is yet more preferred. Also, of the rosin-based resins, a rosin maleic acid resin and/or polymerized rosin, etc., is/are preferred.

The content of the rosin-based resin in the printing ink composition is preferably 0.1 to 5.0% by mass.

### (Other Resins)

Other resins that may be used in the front printing ink composition as necessary include vinyl chloride/vinyl acetate resin, dimer acid-based resin, rosin-based resin, maleic acid-based resin, petroleum resin, terpene resin, ketone resin, dammar resin, copal resin, chlorinated polypropylene, oxidized polypropylene, and the like. When these hard resins are utilized, improved adhesion property can be expected, especially on resin films that are not surface treated. If a hard resin is contained in the gravure printing ink composition, its appropriate content is under 5.0% by mass.

However, if any vinyl chloride/vinyl acetate resin is used, the ratio by solids content of the polyurethane resin and vinyl chloride/vinyl acetate resin, or "polyurethane resin / vinyl chloride/vinyl acetate resin," is preferably 100/0 to 70/30, or more preferably 100/0 to 10.

### (Chelate Crosslinking Agent)

For the chelate crosslinking agent, a metal chelate crosslinking agent such as titanium chelate, zirconium chelate, or the like, can be used.

The titanium chelate may be tetraisopropyl titanate, tetranormalbutyl titanate, butyl titanate dimer, tetra(2-ethylhexyl) titanate, reaction product of tetraisopropoxytitanium and 2-ethylhexanoic acid, tetramethyl titanate, tetrastearyl titanate, or other titanium alkoxide, triethanolamine titanate, titanium acetyl acetate, titanium ethyl acetoacetate, titanium lactate, octylene glycol titanate, titanium tetraacetyl acetonate, n-butyl phosphate ester titanium, propanedioxytitanium bis(ethyl acetyl acetate), or other titanium chelate, or the like.

Examples of the zirconium chelate include zirconium propionate, zirconium acetyl acetate, and the like.

From the viewpoint of the environmental aspect, a chelate crosslinking agent that does not have acetyl acetonate as a ligand, among other chelate crosslinking agents, is preferred so that acetyl acetone will not be produced after the crosslinking reaction.

### (Fatty Acid Amide)

From the viewpoint of anti-blocking property, a fatty acid amide is used. The fatty acid amide may be a saturated fatty acid amide, unsaturated fatty acid amide, modified fatty acid amide, or the like, where use of a modified fatty acid amide is particularly preferred in order to improve anti-blocking property on soft polyvinyl chloride sheets used for tablecloths. If a fatty acid amide is contained, its content is preferably 0.1 to 3.0% by mass, or more preferably 0.5 to 2.0% by mass, in the printing ink composition.

If the content is under 0.1% by mass, anti-blocking property can drop, while a content exceeding 3.0% by mass can lead to lower oil resistance.

### (Organic Solvent)

For the solvent component used in the front printing ink composition with which to form a front printed layer, any solvent that can be used in the back printing ink composition can be adopted. Additionally, the organic solvent is preferably one not containing any aromatic hydrocarbon-based organic solvent in consideration of the environment. Organic solvents not containing any aromatic hydrocarbon-based organic solvent primarily include methanol, ethanol, n-propanol, isopropanol, butanol, and other alcohol-based organic solvents, acetone, methyl ethyl ketone, methyl isobutyl ketone, and other ketone-based organic solvents, methyl acetate, ethyl acetate, propyl acetate, butyl acetate, and other ester-based organic solvents, n-hexane, n-heptane, n-octane, and other aliphatic hydrocarbon-based organic solvents, and cyclohexane, methylcyclohexane, ethylcyclohexane, cycloheptane, cyclooctane, and other alicyclic hydrocarbon-based organic solvents, of which two or more can be mixed in consideration of solubility, drying property, etc., of the binder resin. It should be noted that, in consideration of the environmental aspect, preferably use of ketone-based organic solvents, among the aforementioned organic solvents, is minimized.

Regarding the use amount of such organic solvent, it is contained by preferably 15.0% by mass or more in the printing ink composition proposed by the present invention in consideration of printing properties. Also, from the viewpoint of printability, propyl acetate is contained by preferably 5.0% by mass or more, or more preferably 10.0% by mass or more, in the printing ink composition. Also, to improve printability, preferably 0.1 to 10% by mass of water is contained in the organic solvent.

### <Pigment>

The front printing ink composition can contain any of the aforementioned pigments.

### (Other Materials)

For the purpose of improving rub resistance, a wax can be added to the front printing ink composition to the extent that doing so does not lower performance.

For the wax, polyolefin wax, paraffin wax or any of various other types of known waxes can be utilized.

Additionally, pigment dispersant, leveling agent, surfactant, plasticizer, and various other types of additives for printing inks can be added as desired.

### (Method for Manufacturing Front Printing Ink Composition)

For the method for manufacturing the front printing ink composition utilizing these materials, the same method described above for manufacturing the back printing ink composition can be adopted.

### (Printing Method Using Front Printing Ink Composition, and Laminate Obtained by Same)

Next, the method for obtaining a front printed matter using the front printing ink composition is explained.

On a resin base material for front printing, a releasing primer layer is formed with the releasing primer composition. Next, printing is performed inline or offline with the front printing ink composition utilizing a standard front printing method. Here, the printing speed and drying temperature can be adopted from known speeds and temperatures as deemed appropriate.

For this resin base material, any of the foregoing for back printing can be adopted.

### <<Shrink-packaging Printing>>

The ink composition for shrink packaging contains the aforementioned pigment, binder resin, and various types of additives.

### <Binder Resin>

In terms of the binder resins that can be used, the shrink-packaging printing ink composition contains, for example, carboxyl group-containing acrylic resin, cellulose resin, rosin resin or derivative thereof, and/or urethane resin, in a manner satisfying conditions 1 and 2 below:
Condition 1:
   The ratio of the solids content by mass of carboxyl group-containing acrylic resin and solids content by mass of cellulose resin, or "solids content by mass of carboxyl group-containing acrylic resin/solids content by mass of cellulose resin," is 80/20 to 60/40.
Condition 2:
   Rosin resin or derivative thereof, whose acid value is 150 mgKOH/g or lower, is contained by a range of 1 to 6% by mass in the resin solids.

The shrink-packaging printing ink composition under the present invention is explained specifically below.

The degree of biomass of the shrink-packaging printing ink composition under the present invention is preferably 10 or higher.

The degree of biomass is calculated according to the formula below: Degree of biomass = Amount of biomass component / All solids including pigments in the shrink-packaging printing ink composition × 100Biomass component --- Total amount of biomass-derived weights in the solids content of resins and solids content of additives (Weights of resins x Biomass weight ratios + Weights of additives x Biomass weight ratios)

### (Acid Value)

The acid value under the present invention represents the acid value of the aforementioned polymer, calculated by obtaining a theoretical neutralization amount of potassium hydroxide (KOH) relative to the amount of each of the monomers theoretically needed to obtain 1 gram of carboxyl group-containing acrylic resin, rosin resin, etc., and deriving the total sum of these neutralization amounts in milligrams.

### <Mass-averaged Molecular Weight>

The mass-averaged molecular weight of each resin, under the present invention, can be measured according to the gel permeation chromatography (GPC) method. As an example, a chromatography is performed using the Waters 2690 (Waters Corp.) as a GPC system, PLgel 5 µm MIXED-D (Polymer Laboratories Inc.) as a column, tetrahydrofuran as a developing solvent, and an RI detector, under the conditions of 25°C in column temperature, 1 mL/min in flow rate, 10 mg/mL in sample injection concentration, and 100 µL in injection volume, to obtain a mass-averaged molecular weight in terms of polystyrene.

### (Carboxyl Group-containing Acrylic Resin)

The carboxyl group-containing acrylic resin may be a copolymer of a radically polymerizable carboxylic acid monomer and a radically polymerizable acrylic-based monomer, or a copolymer containing a radically polymerizable monomer other than radically polymerizable carboxylic acid monomer and radically polymerizable acrylic-based monomer.

The radically polymerizable carboxylic acid monomer may be acrylic acid, methacrylic acid, crotonic acid; monoester or monoamide of maleic acid, fumaric acid, citraconic acid, itaconic acid or other dicarboxylic acid; maleic acid anhydride, citraconic acid anhydride, itaconic acid anhydride; ester of vinyl alcohol and acetic acid, propionic acid, lauric acid, stearic acid or other saturated carboxylic acid with 2 to 18 carbon atoms, or the like.

The radically polymerizable acrylic-based monomer may be acrylic acid or methacrylic acid-based methyl, ethyl, propyl, butyl, pentyl alcohol, or other alcohol ester, ethylene glycol, propylene glycol, or other diester. Also, the radically polymerizable monomer (c) other than radically polymerizable carboxylic acid monomer and radically polymerizable acrylic-based monomer may be styrene, α-methyl styrene, or the like.

Of these carboxyl group-containing acrylic resins, a copolymer whose carboxyl groups are derived from a methacrylic acid monomer is preferred, and a copolymer comprising methacrylic acid (MAA), methyl methacrylate (MMA), or butyl methacrylate (BMA) is more preferred.

The acid value of the carboxyl group-containing acrylic resin obtained by copolymerizing any of the aforementioned monomers is preferably 2 to 20 mgKOH/g. It is more preferably 3 mgKOH/g or higher, or more preferably 15 mgKOH/g or lower, or yet more preferably 10 mgKOH/g or lower. If it is under 2 mgKOH/g, problems are likely to occur regarding compatibility with the cellulose resin, while higher than 20 mgKOH/g tends to cause poor utility (resistance to surfactant, resistance to alkali) with content components.

Also, the mass-averaged molecular weight of the carboxyl group-containing acrylic resin is preferably 30,000 to 100,000. In particular, it is more preferably 35,000 or higher, or yet more preferably 40,000 or higher. Also, it is preferably 90,000 or lower, or more preferably 80,000 or lower.

If the mass-averaged molecular weight is under 30,000, anti-blocking property, adhesion property, etc., tend to drop, while a mass-averaged molecular weight exceeding 100,000 tends to lower solubility and its compatibility with the cellulose resin.

The content of the carboxyl group-containing acrylic resin in the solids content of the shrink-packaging printing ink composition under the present invention is preferably 10.0% by mass or higher, or more preferably 13.0% by mass or higher, or yet more preferably 14.0% by mass or higher. Also, it is preferably 40.0% by mass or lower, or more preferably 35.0% by mass or lower, or yet more preferably 30.0% by mass or lower.

### (Cellulose Resin)

For the cellulose resin, any cellulose acetate propionate resin, cellulose acetate butyrate resin, nitrocellulose resin, etc., conventionally used in gravure ink compositions can be used. From the viewpoint of improving resistance to surfactants, resistance to alkali, etc., a cellulose acetate propionate resin or cellulose acetate butyrate resin is preferred.

The cellulose resin in the shrink-packaging printing ink composition under the present invention satisfies the following.

The ratio of the solids content by mass of carboxyl group-containing acrylic resin, and solids content by mass of cellulose resin, or "solids content by mass of carboxyl group-containing acrylic resin/solids content by mass of cellulose resin," in the shrink-packaging printing ink composition, is 80/20 to 60/40. It is preferably 75/25 to 65/35. If the percentage of the solids content of cellulose resin is higher than 40, utility (resistance to surfactants, resistance to alkali) with content components tends to drop, while a percentage lower than 20 tends to lower anti-blocking property, etc.

Also, the total sum of the content of each cellulose resin in the solids content of the shrink-packaging printing ink composition under the present invention is preferably 3.0% by mass or higher, or more preferably 5.0% by mass or higher, or yet more preferably 7.0% by mass or higher. Also, it is preferably 20.0% by mass or lower, or more preferably 15.0% by mass or lower, or yet more preferably 11.0% by mass or lower.

### (Cellulose Acetate Propionate Resin)

For the cellulose acetate propionate resin, any known cellulose acetate propionate resin conventionally used in gravure printing ink compositions can be used.

A cellulose acetate propionate resin is obtained by triesterifying cellulose with acetic acid and propionic acid, followed by hydrolyzation. In general, cellulose acetate propionate resins with an acetyl group content of 0.6 to 2.5% by weight, propionate group content of 42.0 to 46.0% by weight, and hydroxyl groups of 1.8 to 5.0% by weight, in the resin, are commercially available.

Of these, preferably a resin having lower molecular weight is used in order to improve the degree of biomass.

The content of the cellulose acetate propionate resin in the solids content of the shrink-packaging printing ink composition under the present invention is preferably 3.0% by mass or higher, or more preferably 5.0% by mass or higher, or yet more preferably 7.0% by mass or higher. Also, it is preferably 20.0% by mass or lower, or more preferably 15.0% by mass or lower, or yet more preferably 11.0% by mass or lower.

### (Cellulose Acetate Butyrate Resin)

For the cellulose acetate propionate resin, any such resin conventionally used in gravure printing ink compositions can be used. A cellulose acetate butyrate resin is obtained by triesterifying cellulose with acetic acid and butyric acid, followed by hydrolyzation. In general, cellulose acetate butyrate resins with 2 to 30% by weight of acetylation, 17 to 53% by weight of butyrylation and 1 to 5% by weight of hydroxyl groups are commercially available. Of these, preferably a resin having lower molecular weight is used in order to improve the degree of biomass.

The content of the cellulose acetate butyrate resin in the solids content of the shrink-packaging printing ink composition under the present invention is preferably 3.0% by mass or higher, or more preferably 5.0% by mass or higher, or yet more preferably 7.0% by mass or higher. Also, it is preferably 20.0% by mass or lower, or more preferably 15.0% by mass or lower, or yet more preferably 11.0% by mass or lower.

### (Nitrocellulose Resin)

For the nitrocellulose resin, any nitrocellulose resin conventionally used in gravure printing ink compositions can be used. A nitrocellulose resin is obtained as a nitric acid ester by reacting natural cellulose with nitric acid to substitute the three hydroxyl groups in the six-member ring of anhydrous glucopyranose groups in the natural cellulose with nitric acid groups. For the nitrocellulose resin used under the present invention, one having a nitrogen content of 10 to 13% and average degree of polymerization of 35 to 90 is used favorably. Specific examples include SS1/2, SS1/4, SS1/8, TR1/16, NCRS-2 (Korea CNC Ltd.), and the like.

The content of the nitrocellulose resin in the solids content of the shrink-packaging printing ink composition under the present invention is preferably 3.0% by mass or higher, or more preferably 5.0% by mass or higher, or yet more preferably 7.0% by mass or higher. Also, it is preferably 20.0% by mass or lower, or more preferably 15.0% by mass or lower, or yet more preferably 11.0% by mass or lower.

### (Rosin Resin or Derivative Thereof)

For the rosin-based resin or derivative thereof, any rosin-based resin or derivative thereof may be used as selected from the aforementioned rosin and derivatives thereof that can be used in back printing.

Regarding this rosin resin or derivative thereof, the acid value of the rosin resin or derivative thereof is preferably 150 mgKOH/g or lower. If it exceeds 150 mgKOH/g, stability and utility (resistance to alkali and resistance to surfactants) with content components of the ink composition may drop. Additionally, from the viewpoint of excellent utility with content components, the acid value is more preferably 100 mgKOH/g or lower, or yet more preferably 50 mgKOH/g or lower, or even more preferably 30 mgKOH/g or lower, or further more preferably 20 mgKOH/g or lower, or most preferably 10 mgKOH/g or lower.

The content of the rosin resin or derivative thereof in the solids content of the shrink-packaging printing ink composition under the present invention is preferably 3.0 to 20.0% by mass. It is more preferably 5.0% by mass or higher, or yet more preferably 7.0% by mass or higher. Also, it is more preferably 15.0% by mass or lower, or yet more preferably 11.0% by mass or lower.

### (Other Resins)

The shrink-packaging printing composition under the present invention may combine other resins, if necessary and as deemed appropriate, as resin components other than the aforementioned carboxyl group-containing acrylic resin, cellulose resin, and rosin resin or derivative thereof, to the extent that doing so does not impair the effects of the present invention.

The other resins include polyurethane urea resins, polyurethane resins, vinyl chloride/vinyl acetate copolymer resins, polyamide resins, acrylic resins, ethylene/vinyl acetate copolymer resins, chlorinated olefin resins, alkyd resins, vinyl acetate resins, ketone resins, polybutyral resins, cyclized rubber-based resins, chlorinated rubber-based resins, petroleum resins, olefin-based resins, polyester resins, polylactic acid resins, and the like.

It should be noted that acrylic resins having phosphoric acid groups may or may not be contained.

### (Pigment)

The shrink-packaging printing ink composition can contain any of the aforementioned pigments.

### (Plasticizer)

For the plasticizer, dioctyl sebacate, fatty acid triglyceride, ethyl toluene sulfonic acid amide, tributyl acetylcitrate, 2-ethylhexyl stearate ester, 2-ethylhexyl palmitate ester, and the like, which are conventionally used in gravure printing inks, as well as epoxylated plant oils, can be used. Of these, epoxylated soybean oil, epoxylated linseed oil, and other epoxylated plant oils are preferred from the viewpoints of utility (resistance to surfactants, resistance to alkali) with content components and degree of biomass.

The content of the plasticizer is not specifically limited. For example, the content of the plasticizer is preferably 0.05% by mass or higher, or more preferably 0.5% by mass or higher, and preferably 5.0% by mass or lower, or more preferably 3.0% by mass or lower, in the shrink-packaging printing ink composition. When the content of the plasticizer is within the aforementioned ranges, the obtained shrink-packaging printing ink composition will have improved utility (resistance to surfactants, resistance to alkali)

### (Amide Compound)

Additionally, from the viewpoint of further improving the scratch resistance, adhesion property with respect to base materials, abrasion resistance, and utility with content components (resistance to surfactants, resistance to alkali), preferably an amide compound is contained in the shrink-packaging printing ink composition. The amide compound may be, for example, palmitic acid amide, stearic acid amide, ethylene-bis-oleic acid amide, hexamethylene-bis-oleic acid amide, or the like, where any of these may be used alone, or two or more may be combined. If any amide compound is added, preferably it is contained by 0.1 to 5.0% by mass in the shrink-packaging printing ink composition. In particular, to achieve all of scratch resistance, adhesion property with respect to base materials, abrasion resistance, resistance to surfactants, and resistance to alkali, it is contained by preferably 0.1 to 4.0% by mass, or more preferably 0.3 to 2.5% by mass.

### (Solvent Component)

For the solvent component used in the shrink-packaging printing ink composition with which to form a printed layer under the present invention, any of the aforementioned solvents that can be used in the back printing ink composition can be adopted.

Of these solvent components, from the environmental aspect, preferably an alcohol-based solvent and/or ester-based solvent is/are used, where an alcohol-based solvent and/or ester-based solvent with 1 to 4 carbon atoms is/are more preferred. Additionally, an alcohol-based solvent and an ester-based solvent, with 1 to 4 carbon atoms, are used so that their ratio by mass, or "alcohol-based solvent/ester-based solvent" is preferably 60/40 to 80/20, or more preferably 63/37 to 75/25. If the ratio of the ester-based solvent is higher than 40, the ink composition may attack shrink OPS (shrinkable untreated polystyrene) films. If the ratio of the ester-based solvent is lower than 20, the solubility of the resin components tends to drop.

### (Other Components)

Other than the above, if necessary, rub resistance-strengthening agent, anti-blocking agent, pigment dispersant, antistatic agent, lubricant, crosslinking agent, defoaming agent, drying-adjusting agent, other plasticizer, tackifier, adhesion-improving agent, leveling agent, antioxidant, etc., can be added to the shrink-packaging printing ink composition under the present invention, and of these, additives that are biomass-derived are even better.

For the lubricant, polyethylene (PE) wax, polypropylene wax, PTFE-based wax, paraffin wax, microcrystalline wax, Fischer Tropsch wax, montan wax, carnauba wax, shellac wax, amide wax, organic polymers, beeswax, wax comprising a mixture thereof, and the like, are preferred, and of these, polyethylene wax and polypropylene wax are more preferred.

### (Method for Manufacturing Shrink Printing Ink Composition)

For the method for manufacturing the shrink printing ink composition utilizing these materials, the same method described above for manufacturing the back printing ink composition can be adopted.

### (Printing Method Using Shrink Printing Ink Composition, and Laminate Obtained by Same)

Next, the method for obtaining a shrink printed matter using the shrink printing ink composition is explained.

On a resin base material for shrink printing, a releasing primer layer is formed with the releasing primer composition. Next, shrink printing is performed inline or offline with the shrink printing ink composition utilizing the standard printing method. Here, the printing speed and drying temperature can be adopted from known speeds and temperatures as deemed appropriate.

For this resin base material, any of the aforementioned resin base materials for back printing can be adopted.

### <<Printing on Paper Base Material Side of Laminated Paper>>

For the printing ink composition used for printing on the paper base material side of a laminated paper, an aqueous flexographic printing ink composition can be used, for example. The aqueous flexographic printing ink composition contains the aforementioned pigment, binder resin, and various types of additives.

### <Binder Resin>

For the binders that can be used, any resins obtained by polymerizing a monomer having unsaturated double bonds that are used in standard aqueous flexographic printing ink compositions, resins obtained by causing functional groups to react with each other, and the like, can be used without specific limitations. Specifically, favorable examples include water-soluble acrylic-based resins, water-soluble styrene-acrylic resins, water-soluble styrene-maleic acid resins, water-soluble styrene-acrylic-maleic acid resins, water-soluble polyurethane resins, water-soluble polyester resins, and various other types of binder resins obtained by copolymerizing an acrylic acid, methacrylic acid, or alkyl ester thereof, or styrene, etc., as the primary monomer component. Preferably the content of the binder resin is 1 to 20% by weight in the aqueous flexographic printing ink composition.

### (Solvent Component)

For the solvent component used in the aqueous flexographic printing ink composition with which to form a printed layer under the present invention, any aqueous medium can be adopted.

The aqueous medium may be water, or a mixture of water and a water-miscible solvent. The water-miscible solvent may be, for example, lower alcohol, polyhydric alcohol, or alkyl ether or alkyl ester thereof, or the like, or specifically methanol, ethanol, normal propanol, isopropanol, or other lower alcohol, ethylene glycol, propylene glycol, diethylene glycol, dipropylene glycol, glycerin, or other polyhydric alcohol, ethylene glycol monomethyl ether, ethylene glycol monoethyl ether, ethylene glycol monoacetate, propylene glycol monomethyl ether, propylene glycol monoethyl ether, propylene glycol monoacetate, diethylene glycol monomethyl ether, dipropylene glycol monomethyl ether, or the like.

### (Other Components)

Other than the components denoted above, film-forming agent, pigment dispersant or pigment-dispersing resin, anti-blocking agent, humectant, viscosity-adjusting agent, pH-adjusting agent, defoaming agent, general surfactant and various other additives can be selected and used as deemed appropriate in the aqueous flexographic printing ink composition under the present invention.

### (Method for Manufacturing Aqueous Flexographic Printing Ink Composition)

Regarding the method for manufacturing the aqueous flexographic printing ink composition utilizing these materials, a method of mixing and kneading the pigment, binder resin, and aqueous medium, and then further adding and mixing additives, aqueous media, and the remainder of the specified materials, is generally used.

### (Printing Method Using Aqueous Flexographic Printing Ink Composition, and Laminate Obtained by Same)

Next, the method for obtaining a printed matter using the aqueous flexographic printing ink composition is explained.

On a resin base material, the releasing primer composition is coated to form a releasing primer layer. Next, an adhesive is coated and a paper base material is layered thereon, after which flexographic printing is performed inline or offline with the aqueous flexographic printing ink composition utilizing conventional printing methods. Here, the printing speed and drying temperature can be adopted from known speeds and temperatures as deemed appropriate.

For this resin base material, the aforementioned polyethylene (PE), etc., can be adopted.

### Examples

The present invention is explained below using examples; however, the present invention is not limited to these examples alone. It should be noted that, unless otherwise specified, "%" refers to "% by mass," while "part" refers to "part by mass." Also, the number indicating the amount of each material in the tables also represents "parts by mass." The releasing primer compositions used in the examples and comparative examples are mixtures whose solvent makeup by mass is ethanol 8 : water 2. It should be noted that they are not limited to these mixtures.

### <A. Examples and Comparative Examples of Using Polyethyleneimine Compound>

First, cases of using primer compositions when they contain a polyethyleneimine-based compound are explained.

The polyethyleneimine compound has an amine value of preferably 10.0 mmol/g or higher, and preferably 25.0 mmol/g or lower.

### <A1. Examples and Comparative Examples of Back Printing Using Polyethyleneimine Compound>

### <Example of Manufacturing Polyurethane Resin Varnish 1 (Biomass Polyurethane)>

In a four-way flask fitted with an agitator, a cooling tube, and a nitrogen gas introduction tube, 200 parts by mass of a polyester diol of 2,000 in mass-averaged molecular weight obtained from 30/70 (ratio by mass) sebacic acid (derived from castor oil)/succinic acid (plant-derived) and 1,3-propanediol (plant-derived), 17.6 parts by mass of isophorone diisocyanate and 21.0 parts by mass of hydrogenated MDI were added, and the materials were reacted for 6 hours at 100 to 105°C while introducing nitrogen gas. After letting the mixture cool to near room temperature, 400 parts by mass of ethyl acetate and 171 parts by mass of isopropyl alcohol were added, after which 8.2 parts by mass of isophoronediamine were added to extend the chain, and 0.35 parts by mass of monoethanolamine were further added to cause reaction, and subsequently 1.3 parts by mass of isophoronediamine and 0.6 parts by mass of diethylenetriamine were added to terminate the reaction, to obtain polyurethane resin varnish 1 (solids content 30% by mass, amine value 6.4 mgKOH/g).

### <Example of Manufacturing Polyurethane Resin Varnish 2 (Not Biomass Polyurethane)>

In a four-way flask fitted with an agitator, a cooling tube, and a nitrogen gas introduction tube, 100 parts by mass of a 3-methyl-1,5-pentylene adipate diol of 2,000 in number-averaged molecular weight, 100 parts by mass of a polypropylene glycol of 2,000 in mass-averaged molecular weight, 17.6 parts by mass of isophorone diisocyanate, and 21.0 parts by mass of hydrogenated MDI were added, and the materials were reacted for 6 hours at 100 to 105°C while introducing nitrogen gas. After letting the mixture cool to near room temperature, 400 parts by mass of ethyl acetate and 171 parts by mass of isopropyl alcohol were added, after which 8.2 parts by mass of isophoronediamine were added to extend the chain, and 0.35 parts by mass of monoethanolamine were further added to cause reaction, and subsequently 1.3 parts by mass of isophoronediamine and 0.6 parts by mass of diethylenetriamine were added to terminate the reaction, to obtain polyurethane resin varnish 2 (solids content 30% by mass, amine value 6.4 mgKOH/g).

### <Polyurethane Resin Varnish 3 Obtained Using Compound Resulting from Ketiminating Amino Groups in Polyamine Compound with Ketone Compound>

### (Method for Manufacturing Ketimine Solution 1)

51 parts of isophoronediamine, 31.2 parts of N-(2-hydroxyethyl)ethylenediamine, and 174 parts of acetone were mixed, and the mixture was agitated for 1 hour at room temperature, to obtain ketimine solution 1.

### (Method for Manufacturing Polyurethane Resin)

In a four-way flask fitted with an agitator, a cooling tube, and a nitrogen gas introduction tube, 400 parts of a 3-methyl-1,5-pentylene adipate diol of 4,000 in number-averaged molecular weight, 33.3 parts of isophorone diisocyanate, and 0.04 parts of tetrabutyl titanate were added, and the mixture was reacted for 6 hours at 90 to 100°C while introducing nitrogen gas.

Next, 812 parts of propyl acetate and 203 parts of isopropyl alcohol were added, after which the mixture was cooled to near room temperature, and then 32.29 parts of ketimine solution 1 were added and the mixture was agitated for 20 minutes, and 3 parts of water were further added and the mixture was agitated for 15 minutes, to obtain polyurethane resin varnish 3 of 35,000 in mass-averaged molecular weight and 6.5 mgKOH/g in amine value (solids content 30%).

### <Vinyl Chloride/Vinyl Acetate-based Copolymer>

SOLBIN TA-3, Nissin Chemical Industry Co., Ltd.

### <Rosin or Derivative Thereof>

Polymerized rosin: Acid value 160 mgKOH/g

### <Chlorinated Polypropylene Varnish>

40 parts by mass of a chlorinated polypropylene (solids content 50%) of 40% in chlorination degree and 100,000 in mass-averaged molecular weight and 60 parts by mass of methylcyclohexane were mixed under agitation, to obtain a chlorinated polypropylene varnish of 20% in solids content.

### <Silica Particles>

Average particle size: 4.5 µm

### <Polyethylene Wax>

Average particle size: 2.11 µm

### <Fatty Acid Amide>

Ethylene-bis-stearic acid amide

### <Example of Manufacturing Back Printing Ink Composition>

10 parts by mass of a pigment (C. I. PB 15:4), 30 parts by mass of polyurethane resin varnish 1, and 3 parts by mass of a vinyl chloride/vinyl acetate-based copolymer (SOLBIN TA-3) were kneaded using a paint conditioner by Red Devil, Inc., to which 2 parts by mass of a chlorinated propylene varnish (solids content 20%), 0.5 parts by mass of polymerized rosin, 0.5 parts by mass of silica particles, 0.2 parts by mass of polyethylene wax, 0.2 parts by mass of ethylene-bis-stearic acid amide, 51 parts by mass of solvent, and 2 parts by mass of water were further added, to obtain a back printing ink composition.

Also, two types of back printing ink compositions were obtained in the same manner except that polyurethane resin varnishes 2 and 3 were used in place of polyurethane resin varnish 1 above, and thus a total of three types of back printing ink compositions were obtained.

### (Printing Base Material)

P-2161 #25: Biaxially oriented polypropylene film (thickness 25 µm) (Toyobo Co., Ltd.)

### (Releasing Primer)

Polyethyleneimines shown in Table 1 below (product name EPOMIN (Nippon Shokubai Co., Ltd.), product name Lupasol P (manufactured by BASF SE))

**[Table 1]**

| Polyethyleneimine product number | Number-averaged molecular weight | Mass-averaged molecular weight | Amine value (mmol/g) | Amine ratio (primary: secondary: tertiary (%)) |
|---|---|---|---|---|
| SP-018 | 1,800 | 4,600 | 19 | 35/35/30 |
| P-1000 | 70,000 | 350,000 | 18 | 25/50/25 |
| P-3000 | 100,000 | 450,000 | 18 | 30/40/30 |
| Lupasol P | - | 750,000 | 18 | 37/37/26 |

### Number-averaged molecular weight: SP-018/Number-averaged molecular weight based on boiling point elevation (Mn)

P-1000, P-3000/Number-averaged molecular weight based on viscosity method (Mn)
Mass-averaged molecular weight: Mass-averaged molecular weight based on GPC method (Mw)
Amine value: Measured by acid titration in a nonaqueous system.
Amine ratio: Measured by NMR (13C).

### (Back Printing, Laminate Creation, Test Results>

### <Dry Laminate 1 (Base Material Film: Standard Film)>

On one side (treated side) of P-2161 #25, each releasing primer composition, obtained by diluting as shown in Table 2 below each polyethyleneimine shown in Table 1 above, was coated using a gravure printing machine, and dried under the following conditions to achieve laminate structure 1 below. It should be noted that the coating amount (g/m²) in Table 2 represents an amount of polyethyleneimine. On the surface of each such polyethyleneimine, each diluted ink composition, obtained by adding an 80/20 mixed solvent of normal propyl acetate/isopropyl alcohol to each back printing ink composition and diluting the mixture to 16 seconds using Zahn Cup No. 3 manufactured by Rigosha & Co., Ltd., was further printed using a gravure printing machine, and dried under the following conditions, to obtain a printed matter.

Thereon, an adhesive (TAKELAC A-969V/TAKELAC A-5, solids content 30% by mass) was coated, and VMCPP was further adhered using a dry lamination machine, to create a laminated printed matter of laminate structure 1 below.

### <Dry Laminate 2 (Base Material Film: Transparent Vapor Deposition Film)>

On the treated side of each of the respective types of films including transparent vapor deposition PET and transparent vapor deposition NY, each releasing primer composition, obtained by diluting as shown in Table 2 below each polyethyleneimine shown in Table 1 above, was coated using a gravure printing machine, and dried under the following conditions to achieve laminate structure 2 below. It should be noted that the coating amount (g/m²) in Table 2 represents an amount of polyethyleneimine. On the surface of each such polyethyleneimine, each diluted ink composition, obtained by adding an 80/20 mixed solvent of normal propyl acetate/isopropyl alcohol to each back printing ink composition and diluting the mixture to 16 seconds using Zahn Cup No. 3 manufactured by Rigosha & Co., Ltd., was further printed using a gravure printing machine and dried under the following conditions, to obtain a printed matter.

Thereon, an adhesive (TAKELAC A-515/TAKELAC A-50, solids content 30% by mass) was coated, and RXC-22 #60 was further adhered using a dry lamination machine, to create a laminated printed matter of laminate structure 2 below.

### <Extruded Laminate 1>

On the treated side of each of the respective types of films including PET, NY, transparent vapor deposition PET and transparent vapor deposition NY, each releasing primer composition, obtained by diluting as shown in Table 2 below each polyethyleneimine shown in Table 1 above, was coated using a gravure printing machine and dried under the following conditions to achieve laminate structure 3 below. It should be noted that the coating amount (g/m²) in Table 2 represents an amount of polyethyleneimine. On the surface of each such polyethyleneimine, each diluted ink composition, obtained by adding an 80/20 mixed solvent of normal propyl acetate/isopropyl alcohol to each back printing ink composition and diluting the mixture to 16 seconds using Zahn Cup No. 3 manufactured by Rigosha & Co., Ltd., was further printed using a gravure printing machine and dried under the following conditions, to obtain a printed matter.

Thereon, an AC agent (TAKELAC A-3210/TAKELAC A-3072, solids content 7% by mass) was coated, and molten polyethylene was further layered using an extrusion lamination machine, to create a laminated printed matter of laminate structure 3 below.

### <Extruded Laminate 2>

On the treated side of an OPP film, each releasing primer composition, obtained by diluting as shown in Table 2 below each polyethyleneimine shown in Table 1 above, was coated using a gravure printing machine and dried under the following conditions to achieve laminate structure 4 below. It should be noted that the coating amount (g/m²) in Table 2 represents an amount of polyethyleneimine. On the surface of each such polyethyleneimine, each diluted ink composition, obtained by adding an 80/20 mixed solvent of normal propyl acetate/isopropyl alcohol to each back printing ink composition and diluting the mixture to 16 seconds using Zahn Cup No. 3 manufactured by Rigosha & Co., Ltd., was further printed using a gravure printing machine and dried under the following conditions, to obtain a printed matter.

Thereon, an AC agent (EPOMIN P-1000, solids content 0.7% by mass) was coated, and molten polyethylene was further layered using an extrusion lamination machine, to create a laminated printed matter of laminate structure 4 below.

### (Conditions for Coating Each Releasing Primer Composition)

Coating machine: Gravure printing machine
Coating speed: 100 m/min
Printing plate: Helio 175 lines/inch (130°) solid plate (wet coating amount approx. 6 g/m²)
Drying temperature: 70°C

### (Conditions for Printing Back Printing Ink Composition)

Coating machine: Gravure printing machine
Coating speed: 100 m/min
Printing plate: Helio 175 lines/inch (130°) solid plate
Drying temperature: 55°C

**[Table 2]**

| Coating amount (g/m²) | % by mass of solids in releasing primer |
|---|---|
| 0.01 | 0.165 |
| 0.02 | 0.33 |
| 0.18 | 3 |
| 0.36 | 6 |

In the examples and comparative examples below, the results pertaining to laminate structure 1 are shown in Table 3, results pertaining to laminate structure 2 are shown in Table 4, results pertaining to laminate structure 3 are shown in Table 5, and results pertaining to laminate structure 4 are shown in Table 6, respectively.
Laminate Structure 1
: P-2161 #25/each polyethyleneimine-based compound/each back printing ink composition/adhesive (TAKELAC A-969V/TAKELAC A-5, solids content 30%)/VMCPP
P-2161 #25: Biaxially oriented polypropylene film (thickness 25 µm) (Toyobo Co., Ltd.)
Adhesive (TAKELAC A-969V/TAKELAC A-5): 2-liquid adhesive, solids content 30% by mass (Mitsui Chemicals, Inc.)
VMCPP: Aluminum vapor deposition cast polypropylene (Toray Industries, Inc.)
· Laminate Structure 2
: Transparent vapor deposition PET or transparent vapor deposition NY/each polyethyleneimine-based compound/each back printing ink composition/adhesive (TAKELAC A-515/TAKELAC A-50, solids content 30% by mass) solids content 30% by mass)/RXC-22 #60
Vapor deposition PET: GL-ARH-F (Toppan Printing Co., Ltd.)
Transparent vapor deposition NY: GL-ARH-W (Toppan Printing Co., Ltd.)
Adhesive (TAKELAC A-515/TAKELAC A-50): 2-liquid adhesive, solids content 30% by mass (Mitsui Chemicals, Inc.)
RXC-22 #60: Cast propylene film (Mitsui Chemicals Tohcello, Inc.)
· Laminate Structure 3
: PET or NY or transparent vapor deposition PET or transparent vapor deposition NY/each polyethyleneimine-based compound/each back printing ink composition/AC agent (TAKELAC A-3210/TAKELAC A-3072, solids content 7% by mass)/molten polyethylene
PET: Polyethylene terephthalate film E-5102 #12 (Toyobo Co., Ltd.)
NY: Nylon film ON-15 #12 (Unitika Ltd.)
Vapor deposition PET: GL-ARH-F (Toppan Printing Co., Ltd.)
Transparent vapor deposition NY: GL-ARH-W (Toppan Printing Co., Ltd.)
AC agent (TAKELAC A-3210/TAKELAC A-3072): Solids content 7% by mass (Mitsui Chemicals, Inc.)
Molten polyethylene: SUMIKATHENE L705, resin temperature 355°C (Sumitomo Chemical Co., Ltd.)
· Laminate Structure 4
: OPP/each polyethyleneimine-based compound/each back printing ink composition/AC agent (EPOMIN P-1000, solids content 0.7% by mass)/molten polyethylene
OPP film: Corona-discharged biaxially oriented propylene film P-2161 #25 (Toyobo Co., Ltd.)
NY: Nylon film ON-15 #12 (Toyobo Co., Ltd.)
AC agent (EPOMIN P-1000): Polyethyleneimine, solids content 0.7% by mass (Three Nippon Shokubai Co., Ltd.)
Molten polyethylene: SUMIKATHENE L705, resin temperature 355°C (Sumitomo Chemical Co., Ltd.)

### <Evaluation of Ink Release Property>

Each of the above printed matters that had been fully dried after printing was taken by 1.5 g and shredded into small pieces of approximately MD 15 mm x TD 25 mm, to obtain ink release property test samples.

### (Preparation of Release Solution 1 Comprising Water)

Release solution 1 comprising water alone.

### (Preparation of Release Solution 2 Comprising Aqueous Alkali Solution)

2.0 parts by mass of sodium hydroxide were added to 98.0 parts by mass of water and dissolved under agitation, to obtain release solution 2 comprising aqueous alkali solution.

### (Preheating of Release Solution 1 Comprising Water)

100 grams of release solution 1 comprising water were put in each HDPE (high-density polyethylene) container of 200 cc in volume, and the container was heated in a hot water bath until the solution temperature reached 70°C.

### (Preheating of Release Solution 2 Comprising Aqueous Alkali Solution)

100 grams of release solution 2 comprising aqueous alkali solution were put in each HDPE (high-density polyethylene) container of 200 cc in volume, and the container was heated in a hot water bath until the solution temperature reached 70°C.

### (Releasing)

After the release solutions had reached 70°C, the above ink release property test samples were put into release solution 1 comprising water and release solution 2 comprising aqueous alkali solution above, respectively, and the mixtures were agitated using stainless-steel agitation blades of 25 mm in blade diameter for 60 minutes in the case of release solution 1 comprising water, or 30 minutes in the case of release solution 2 comprising aqueous alkali solution. After the agitation, the HDPE (high-density polyethylene) containers were removed from the hot water baths and let stand stationary for 5 minutes at room temperature. The release solutions and film pieces of respective types were separated using a stainless-steel net of approx. 2 mm in mesh size.

### (Rinsing)

The released films of respective types were transferred to a 200-cc HDPE container to which 100 g of water were added. The water was agitated for 5 minutes using stainless-steel agitation blades of 25 mm in blade diameter. After the water had been left stationary for 5 minutes, the films of respective types and water were separated using a stainless-steel net. After drying the film pieces of respective types, the release property of the ink from the films of respective types was visually evaluated.

Releasing conditions (alkali): Agitate for 30 minutes in a 70°C, 2% aqueous sodium hydroxide solution.

### (Evaluation Criteria for Laminate Structures 1 to 4)

○: The ink film completely peels off from the film as a film piece.
×: The ink film does not peel.

Releasing conditions (hot water): Agitate for 60 minutes in 70°C hot water.

### (Evaluation Criteria for Laminate Structures 1 to 4)

○: The ink film completely peels off from the film as a film piece.
×: The ink film does not peel.

### Tape Adhesion Strength (Each Printed Matter Immediately after Printing and Drying)

On the treated side of each of the respective types of films, each releasing primer composition, obtained by diluting each of the above polyethyleneimines as shown in Tables 3 to 6 below in order to achieve a specified coating amount, was coated using a gravure printing machine, and dried under the following conditions. On the surface of this releasing primer composition layer, each diluted back printing ink composition, obtained by adding an 80/20 mixed solvent of normal propyl acetate/isopropyl alcohol to each back printing ink composition and diluting the mixture to 16 seconds using Zahn Cup No. 3 manufactured by Rigosha & Co., Ltd., was further printed using a gravure printing machine and dried under the above conditions, to obtain a printed matter.

An adhesive cellophane tape was adhered to the printed side of each of the obtained printed matters and quickly peeled, to evaluate the adhesion property according to the evaluation criteria below based on the degree of peeling of the printed film.

### (Evaluation Criteria)

○: The printed film peels from the film by less than 5% in area ratio.
△: The printed film peels from the film by 5% or more but less than 30 in area ratio.
×: The printed film peels from the film by 30% or more in area ratio.

### Lamination Strength

Once obtained, the laminated printed matters of laminate structures 1 to 4 were each cut to 15 mm in width and measured for T peel-strength using a peel tester manufactured by Yasuda Seiki Seisakusho, Ltd.

### (Evaluation Criteria for Laminate Structures 1 and 4)

○: The peel strength is 1.2 N/15 mm or higher.
△: The peel strength is 0.7 N/15 mm or higher but under 1.2 N/15 mm.
×: The peel strength is under 0.7 N/15 mm.

### (Evaluation Criteria for Laminate Structures 2 and 3)

○: The peel strength is 5 N/15 mm or higher.
△: The peel strength is 3 N/15 mm or higher but under 5 N/15 mm.
×: The peel strength is under 3 N/15 mm.

### Blocking Property

On the treated side of each of the respective types of films, each releasing primer composition, obtained by diluting the polyethyleneimine as shown in Table 3 below in order to achieve a specified coating amount, was coated using a gravure printing machine and dried under the following conditions. On the surface of each such releasing primer composition layer, each diluted back printing ink composition, obtained by adding an 80/20 mixed solvent of normal propyl acetate/isopropyl alcohol to each back printing ink composition and diluting the mixture to 16 seconds using Zahn Cup No. 3 manufactured by Rigosha & Co., Ltd., was further printed using a gravure printing machine and dried under the following conditions; thereafter, the printed side of each printed matter and untreated side of each film were put together and left standing for 12 hours at 40°C under a load of 400 g/cm², after which each film was peeled to evaluate the anti-blocking property based on the peeling condition.

### (Evaluation Criteria)

○: The film peels without resistance and there is no transfer of the ink film at all.
△: Resistance is felt, but there is no transfer of the ink film at all.
×: Transfer of the ink film is observed.

The evaluations below were the same regardless of which of the back printing ink compositions using three types of polyurethane resin varnishes (polyurethane resin varnish (biomass polyurethane), polyurethane resin varnish (not biomass polyurethane), polyurethane resin varnish obtained using a compound resulting from ketiminating the amino groups in a polyamine compound with a ketone compound) was used. Accordingly, the results pertaining to the polyurethane resin varnish (biomass polyurethane) are shown below.

**[Table 3]**

| Releasing primer composition | Coating amount of releasing primer in solids content (g/m²) | Release solution 2, aqueous alkali solution | Release solution 1, water | Adhesion property immediately after printing | Lamination strength | Anti-blocking property |
|---|---|---|---|---|---|---|
| Not coated | - | × | × | Δ | ○ | ○ |
| SP-018 | 0.1 | ○ | - | Δ | Δ | ○ |
| P-1000 | 0.02 | ○ | ○ | ○ | ○ | ○ |
| | 0.18 | ○ | ○ | ○ | ○ | ○ |
| | 0.36 | ○ | ○ | ○ | ○ | ○ |
| P-3000 | 0.02 | ○ | ○ | ○ | ○ | ○ |
| | 0.18 | ○ | ○ | ○ | ○ | ○ |
| Lupasol P | 0.02 | ○ | ○ | ○ | ○ | ○ |
| | 0.18 | ○ | ○ | ○ | ○ | ○ |

**[Table 4]**

| Releasing primer composition polyethyleneimine species | Coating amount of releasing primer in solids content (g/m²) | Release solution 2, aqueous alkali solution | Release solution 1, water | Adhesion property immediately after printing | Lamination strength | Anti-blocking property |
|---|---|---|---|---|---|---|
| Not coated | - | × | × | ○ | ○ | ○ |
| SP-018 | 0.1 | ○ | ○ | ○ | Δ | ○ |
| P-1000 | 0.02 | ○ | ○ | ○ | ○ | ○ |
| | 0.18 | ○ | ○ | ○ | ○ | ○ |
| | 0.36 | ○ | ○ | ○ | ○ | ○ |
| P-3000 | 0.02 | ○ | ○ | ○ | ○ | ○ |
| | 0.18 | ○ | ○ | ○ | ○ | ○ |
| Lupasol P | 0.02 | ○ | ○ | ○ | ○ | ○ |
| | 0.18 | ○ | ○ | ○ | ○ | ○ |

**[Table 5]**

| Releasing primer composition polyethyleneimine species | Coating amount of releasing primer in solids content (g/m²) | Release solution 2, aqueous alkali solution | Release solution 1, water | Adhesion property immediately after printing | Lamination strength | Anti-blocking property |
|---|---|---|---|---|---|---|
| Not coated | - | × | × | ○ | ○ | ○ |
| SP-018 | 0.1 | ○ | ○ | ○ | Δ | ○ |
| P-1000 | 0.02 | ○ | ○ | ○ | ○ | ○ |
| | 0.18 | ○ | ○ | ○ | ○ | ○ |
| | 0.36 | ○ | ○ | ○ | ○ | ○ |
| P-3000 | 0.02 | ○ | ○ | ○ | ○ | ○ |
| | 0.18 | ○ | ○ | ○ | ○ | ○ |
| Lupasol P | 0.02 | ○ | ○ | ○ | ○ | ○ |
| | 0.18 | ○ | ○ | ○ | ○ | ○ |

**[Table 6]**

| Releasing primer composition polyethyleneimine species | Coating amount of releasing primer in solids content (g/m²) | Release solution 2, aqueous alkali solution | Release solution 1, water | Adhesion property immediately after printing | Lamination strength | Anti-blocking property |
|---|---|---|---|---|---|---|
| Not coated | - | × | × | Δ | ○ | ○ |
| SP-018 | 0.1 | ○ | ○ | Δ | Δ | ○ |
| P-1000 | 0.02 | ○ | ○ | ○ | ○ | ○ |
| | 0.18 | ○ | ○ | ○ | ○ | ○ |
| | 0.36 | ○ | ○ | ○ | ○ | ○ |
| P-3000 | 0.02 | ○ | ○ | ○ | ○ | ○ |
| | 0.18 | ○ | ○ | ○ | ○ | ○ |
| Lupasol P | 0.02 | ○ | ○ | ○ | ○ | ○ |
| | 0.18 | ○ | ○ | ○ | ○ | ○ |

### <Dry Laminate 1 in Comparative Examples (Base Material Film: Standard Film)>

On the treated side of each of the respective types of films, each releasing primer composition in the comparative examples that had been diluted to achieve a specified coating amount was coated using a gravure printing machine and dried under the following conditions, to achieve laminate structure 1 in the comparative examples below. On the surface of each such releasing primer composition layer, each diluted back printing ink composition obtained by adding an 80/20 mixed solvent of normal propyl acetate/isopropyl alcohol to each back printing ink composition and diluting the mixture to 16 seconds using Zahn Cup No. 3 manufactured by Rigosha & Co., Ltd., was further printed using a gravure printing machine and dried under the following conditions, to obtain a printed matter.

Thereon, an adhesive (TAKELAC A-969V/TAKELAC A-5, solids content 30% by mass) was coated, and VMCPP was further adhered using a dry lamination machine, to create a laminated printed matter of laminate structure 1 below.

### <Dry Laminate 2 in Comparative Examples (Base Material Film: Transparent Vapor Deposition Film)>

On the treated side of each of the respective types of films including transparent vapor deposition PET and transparent vapor deposition NY, each releasing primer composition in the comparative examples that had been diluted to achieve a specified coating amount was coated using a gravure printing machine and dried under the following conditions to achieve laminate structure 2 below, to obtain a printed matter. Additionally, each diluted ink composition obtained by adding an 80/20 mixed solvent of normal propyl acetate/isopropyl alcohol to each back printing ink composition and diluting the mixture to 16 seconds using Zahn Cup No. 3 manufactured by Rigosha & Co., Ltd., was printed using a gravure printing machine and dried under the following conditions, to obtain a printed matter.

Thereon, an adhesive (TAKELAC A-515/TAKELAC A-50, solids content 30% by mass) was coated, and RXC-22 #60 was further adhered using a dry lamination machine, to create a laminated printed matter of laminate structure 2 below.

### <Extruded Laminate 1 in Comparative Examples>

On the treated side of each of the respective types of films including PET, NY, transparent vapor deposition PET and transparent vapor deposition NY, each releasing primer composition in the comparative examples that had been diluted to achieve a specified coating amount was coated using a gravure printing machine and dried under the following conditions to achieve laminate structure 3 below, to obtain a printed matter. Additionally, each diluted ink composition obtained by adding an 80/20 mixed solvent of normal propyl acetate/isopropyl alcohol to each back printing ink composition and diluting the mixture to 16 seconds using Zahn Cup No. 3 manufactured by Rigosha & Co., Ltd., was printed using a gravure printing machine and dried under the following conditions, to obtain a printed matter.

Thereon, an AC agent (TAKELAC A-3210/TAKELAC A-3072, solids content 7% by mass) was coated, and molten polyethylene was further layered using an extrusion lamination machine, to create a laminated printed matter of laminate structure 3 below.

### <Extruded Laminate 2 in Comparative Examples>

On one side (treated side) of an OPP film, each releasing primer composition in the comparative examples that had been diluted to achieve a specified coating amount was coated using a gravure printing machine and dried under the following conditions to achieve laminate structure 4 below, to obtain a printed matter. On the surface of each such releasing primer composition, each diluted ink composition obtained by adding an 80/20 mixed solvent of normal propyl acetate/isopropyl alcohol to each back printing ink composition and diluting the mixture to 16 seconds using Zahn Cup No. 3 manufactured by Rigosha & Co., Ltd., was further printed using a gravure printing machine and dried under the following conditions, to obtain a printed matter.

Thereon, an AC agent (TAKELAC A-3210/TAKELAC A-3072, solids content 7% by mass) was coated, and molten polyethylene was further layered using an extrusion lamination machine, to create a laminated printed matter of laminate structure 4 below.

### (Method for Coating/Conditions for Coating Each Releasing Primer Composition in Comparative Examples)

Coating machine: Gravure printing machine
Coating speed: 100 m/min
Printing plate: Helio 175 lines/inch (130°) solid plate
Drying temperature: 70°C

### (Method for Printing/Conditions for Printing Back Printing Ink Composition)

Coating machine: Gravure printing machine
Coating speed: 100 m/min
Printing plate: Helio 175 lines/inch (130°) solid plate
Drying temperature: 55°C

· Laminate Structure 1 in Comparative Examples: P-2161 #25/each releasing primer composition in comparative examples/each back printing ink composition/adhesive (TAKELAC A-969V/TAKELAC A-5, solids content 30%)/VMCPP
P-2161 #25: Biaxially oriented polypropylene film (thickness 25 µm) (Toyobo Co., Ltd.)
Adhesive (TAKELAC A-969V/TAKELAC A-5): Aromatic ether-based 2-liquid adhesive, solids content 30% by mass (Mitsui Chemicals, Inc.)
VMCPP: Aluminum vapor deposition cast polypropylene (Toray Industries, Inc.)

### · Laminate Structure 2 in Comparative Examples

: Transparent vapor deposition PET or transparent vapor deposition NY/each releasing primer composition in comparative examples/each back printing ink composition/adhesive (TAKELAC A-515/TAKELAC A-50, solids content 30% by mass) solids content 30% by mass)/RXC-22 #60
Transparent vapor deposition PET: GL-ARH-F (Toppan Printing Co., Ltd.)
Transparent vapor deposition NY: GL-ARH-W (Toppan Printing Co., Ltd.)
Adhesive (TAKELAC A-515/TAKELAC A-50): 2-liquid adhesive, solids content 30% by mass (Mitsui Chemicals, Inc.)
RXC-22 #60: Cast propylene film (Mitsui Chemicals Tohcello, Inc.)

### · Laminate Structure 3 in Comparative Examples

: PET or NY or transparent vapor deposition PET or transparent vapor deposition NY/each releasing primer composition in comparative examples/each back printing ink composition/AC agent (TAKELAC A-3210/TAKELAC A-3072, solids content 7% by mass)/molten polyethylene
PET: Polyethylene terephthalate film E-5102 #12 (Toyobo Co., Ltd.)
NY: Nylon film ON-15 #12 (Unitika Ltd.)
Vapor deposition PET: GL-ARH-F (Toppan Printing Co., Ltd.)
Transparent vapor deposition NY: GL-ARH-W (Toppan Printing Co., Ltd.)
AC agent (TAKELAC A-3210/TAKELAC A-3072): Solids content 7% by mass (Mitsui Chemicals, Inc.)
Molten polyethylene: SUMIKATHENE L705, resin temperature 355°C (Sumitomo Chemical Co., Ltd.)

### · Laminate Structure 4 in Comparative Examples

: OPP/each releasing primer composition in comparative examples/each back printing ink composition/AC agent (EPOMIN P-1000, solids content 0.7% by mass)/molten polyethylene
OPP film: Corona-discharged biaxially oriented propylene film P-2161 #25 (Toyobo Co., Ltd.)
NY: Nylon film ON-15 #12 (Toyobo Co., Ltd.)
AC agent (EPOMIN P-1000): Polyethyleneimine, solids content 0.7% by mass (Three Nippon Shokubai Co., Ltd.)
Molten polyethylene: SUMIKATHENE L705, resin temperature 355°C (Sumitomo Chemical Co., Ltd.)

### (Each Releasing Primer Composition in Comparative Examples)

PVA: POVAL 28-98 (polyvinyl alcohol of 90% or higher in degree of saponification) (Kuraray Co., Ltd.)
General-purpose polyurethane: Aforementioned polyurethan resin varnish (not biomass polyurethane)

The evaluations below were the same regardless of which of the back printing ink compositions using three types of polyurethane resin varnishes (polyurethane resin varnish (biomass polyurethane), polyurethane resin varnish (not biomass polyurethane), polyurethane resin varnish obtained using a compound resulting from ketiminating the amino groups in a polyamine compound with a ketone compound) was used. Accordingly, the results pertaining to the polyurethane resin varnish (biomass polyurethane) are shown below.

Ink release property, adhesion property, and lamination strength were evaluated according to the same methods and criteria described above.

It should be noted that ink release property was evaluated using the aqueous alkali solution of release solution 2. For release solution 2 comprising aqueous alkali solution, a release solution constituted by an aqueous alkali solution obtained by adding 2 parts by mass of sodium hydroxide to 98.0 parts by mass of water and dissolving the sodium hydroxide under agitation was used.

Laminate structures 1 to 4 in the comparative examples all produced the same results. Accordingly, the results pertaining to laminate structure 1 are shown in Table 7 below.

**[Table 7]**

| Releasing primer | Coating amount of releasing primer in solids content (g/m²) | Release solution 2, aqueous alkali solution | Adhesion property | Lamination strength |
|---|---|---|---|---|
| PVA | 0.18 | ○ | × | × |
| General-purpose polyurethane | 0.18 | × | ○ | ○ |

When the releasing primer compositions conforming to the present invention were coated, the films could be released smoothly in both the water and aqueous alkali solution. Their adhesion property immediately after printing, lamination strength, and anti-blocking property were also excellent.

The results in Tables 3 to 7 show, however, that release property and excellent lamination strength could not be achieved simultaneously when the releasing primer compositions conforming to the present invention were not coated and also when the PVA and general-purpose polyurethane were coated.

### <A2. Examples of Front Printing Using Polyethyleneimine Compound>

### (Polyurethane Resin Varnish)

In a four-way flask fitted with an agitator, a cooling tube, and a nitrogen gas introduction tube, 100 parts by mass of a 3-methyl-1,5-pentylene adipate diol of 2,000 in number-averaged molecular weight, 100 parts by mass of a polypropylene glycol of 2,000 in mass-averaged molecular weight, 17.6 parts by mass of isophorone diisocyanate, and 21.0 parts by mass of hydrogenated MDI were added, and the materials were reacted for 6 hours at 100 to 105°C while introducing nitrogen gas. After letting the mixture cool to near room temperature, 523.3 parts by mass of ethyl acetate and 223.8 parts by mass of isopropyl alcohol were added, after which 8.2 parts by mass of isophoronediamine were added to extend the chain, and 0.35 parts by mass of monoethanolamine were further added to cause reaction, and subsequently 1.3 parts by mass of isophoronediamine and 0.6 parts by mass of diethylenetriamine were added to terminate the reaction, to obtain a urethane resin (polyurethane resin varnish (solids content 25% by mass)).

### (CAB)

Cellulose acetate butyrate (Eastman Chemical Company, number-averaged molecular weight 70,000, degree of butyrylation 35 to 39%)

### (Nitrocellulose)

35 parts by mass of nitrocellulose (in a hydrate state, achieved with 30% by weight of water) (DLX5-8, Nobel NC Co., Ltd.) were dissolved in a mixed solvent comprising 58 parts of ethyl acetate and 7 parts of isopropyl alcohol, to obtain a nitrocellulose solution of 35% by mass in solids content.

### (Polyamide Resin)

Thermoplastic polyamide resin using tall oil fatty acid as a reaction material (Mw 8,000, acid value 2, softening point 110°C)
(Polyvinyl Chloride)
   SOLBIN TA5R (Nissin Chemical Industry Co., Ltd.)
(Acrylic Resin)
   HIROS-X/RL-4032 (solids content 40% by mass) (Seiko PMC Corporation)
(Polyethylene Wax)
   PA-60 (solids content 25% by mass) (Polycon Co., Ltd.)
(Titanium Oxide)
   TIPAQUE PFR209 (Ishihara Sangyo Kaisha, Ltd.)

### <Preparation of Printing Ink Composition>

According to the mass percentages (% by mass) in Table 8 below, the respective materials were kneaded with a paint conditioner to prepare a printing ink composition. Also, the obtained printing ink composition was gravure-printed under the following conditions to obtain a printed matter. The obtained printed matter was evaluated for adhesion property and release property according to the evaluation methods below.

### <Preparation of Printed Matter>

On corona-discharged oriented polypropylene films (product name OPP P-2161, 25 µm, Toyobo Co., Ltd.), the aforementioned releasing primer (polyethyleneimine P-1000) that had been diluted to achieve a specified coating amount was coated using a gravure printing machine, and dried under the following conditions. On the surface of each such polyethyleneimine layer, each diluted front printing ink composition obtained by adding each mixed solvent to each front printing ink composition in Table 8 below and diluting the mixture to 16 seconds using Zahn Cup No. 3 by Rigosha & Co., Ltd., was printed using a gravure printing machine and dried under the following conditions, to obtain each front printing ink composition-printed matter. This printed matter of each front printing ink composition was taken by 1.5 g and shredded into small pieces of MD 15 mm × TD 25 mm or so, to obtain ink layer peel test samples.

### (Method for Coating/Conditions for Coating Releasing Primer Composition)

Coating machine: Gravure printing machine
Coating speed: 100 m/min
Printing plate: Helio 175 lines/inch (130°) solid plate
Drying temperature: 70°C

### (Method for Printing/Conditions for Printing Front Printing Ink Composition)

Coating machine: Gravure printing machine
Coating speed: 100 m/min
Printing plate: Helio 175 lines/inch (130°) solid plate
Drying temperature: 55°C

Ink release property and adhesion property were evaluated according to the same methods and criteria described above.

### <Evaluation of Adhesion Property with Respect to Base Material>

An adhesive cellophane tape was adhered to the printed side of each of the printed matters obtained per "Preparation of Printed Matter" and quickly peeled, to evaluate the adhesion property according to the evaluation criteria below based on the degree of peeling of the printed film. Hereafter in this Specification, adhesion property was evaluated according to this evaluation.

### (Evaluation Criteria)

○: The printed film peels from the film by less than 5% in area ratio.
△: The printed film peels from the film by 5% or more but less than 30% in area ratio.
×: The printed film peels from the film by 30% or more in area ratio.

### <Method of Printed Layer Peel Test>

### (Preparation of Release Solution 1 Comprising Water)

Release solution 1 comprising water alone.

### (Preparation of Release Solution 2 Comprising Aqueous Alkali Solution)

2.0 parts by mass of sodium hydroxide were added to 98.0 parts by mass of water and dissolved under agitation, to obtain release solution 2 comprising aqueous alkali solution.

### (Preheating of Release Solution 1)

100 grams of release solution 1 comprising water were put in each HDPE (high-density polyethylene) container of 200 cc in volume, and the container was heated in a hot water bath until the solution temperature reached 70°C.

### (Preheating of Release Solution 2)

100 grams of release solution 2 comprising aqueous alkali solution were put in each HDPE (high-density polyethylene) container of 200 cc in volume, and the container was heated in a hot water bath until the solution temperature reached 70°C.

### (Releasing)

After each release solution had reached 70°C, the above ink layer peel test samples were put into the release solution and the mixture was agitated using stainless-steel agitation blades of 25 mm in blade diameter for 60 minutes in the case of release solution 1 comprising water, or 30 minutes in the case of release solution 2 comprising aqueous alkali solution. After the agitation, the HDPE (high-density polyethylene) container was removed from the hot water bath and let stand stationary for 5 minutes at room temperature. The release solution and film pieces were separated using a stainless-steel net of approx. 2 mm in mesh size.

### (Rinsing)

The released films were transferred to a 200-cc HDPE container to which 100 g of water were added. The water was agitated for 5 minutes using stainless-steel agitation blades of 25 mm in blade diameter. After the water had been left stationary for 5 minutes, the film pieces and water were separated using a stainless-steel net. After drying the film pieces, the release property of the ink from the films was visually evaluated.

Releasing conditions (alkali): Agitate for 30 minutes in a 70°C, 2% aqueous sodium hydroxide solution.

### (Evaluation Criteria)

○: The ink film completely peels off from the film as a film piece.
×: The ink film does not peel.

Releasing conditions (hot water): Agitate for 60 minutes in 70°C hot water.

### (Evaluation Criteria)

○: The ink film completely peels off from the film as a film piece.
×: The ink film does not peel.

**[Table 8]**

| | Printing ink compositions | | | | | | | |
|---|---|---|---|---|---|---|---|---|
| | 1 | 2 | 3 | 4 | 5 | 6 | 7 | 8 |
| Urethane resin (NV 25%) | 20.0 | 28.0 | | | | | 20.0 | |
| CAB | 5.0 | 3.0 | | | | 3.0 | | |
| Nitrocellulose (NV 35%) | | | 12.0 | 41.0 | 12.0 | | | |
| Polyamide resin | | | | | 7.0 | | | |
| Polyvinyl chloride | | | | | | | 5.0 | 10.0 |
| Acrylic resin (NV 40%) | | | 17.5 | | | 17.5 | | |
| Polyethylene wax (NV 25%) | 3.0 | 3.0 | 3.0 | 3.0 | 3.0 | 3.0 | 3.0 | 3.0 |
| Titanium oxide | 30.0 | 30.0 | 30.0 | 30.0 | 30.0 | 30.0 | 30.0 | 30.0 |
| Ethyl acetate | 5.5 | 20.0 | 12.5 | 11.0 | 8.0 | 3.5 | | |
| IPA | 6.0 | 3.5 | 25.0 | 15.0 | 8.0 | 25.0 | 6.0 | 9.0 |
| NPAc | 30.5 | 12.5 | | | | 18.0 | | 25.0 |
| Methylcyclohexane | | | | | 24.0 | | | |
| Toluene | | | | | | | 15.0 | |
| MEK | | | | | | | 21.0 | 23.0 |
| Methanol | | | | | 8.0 | | | |
| Total | 100.0 | 100.0 | 100.0 | 100.0 | 100.0 | 100.0 | 100.0 | 100.0 |

**[Table 9]**

| Printing ink composition | Coating amount of releasing primer P-1000 in solids content (g/m²) | Release solution 2 | Release solution 1 | Adhesion property |
|---|---|---|---|---|
| | | Aqueous alkali solution | Water | Immediately after printing |
| 1 | 0.18 | ○ | ○ | ○ |
| 2 | 0.18 | ○ | ○ | ○ |
| 3 | 0.18 | ○ | ○ | ○ |
| 4 | 0.18 | ○ | ○ | ○ |
| 5 | 0.18 | ○ | ○ | ○ |
| 6 | 0.18 | ○ | ○ | ○ |
| 7 | 0.18 | ○ | ○ | ○ |
| 8 | 0.18 | ○ | ○ | ○ |

When the releasing primer composition (polyethyleneimine P-1000) in Table 9 was coated, all of front printing ink compositions 1 to 8 could be released regardless of whether the water or aqueous alkali solution was used as a release solution, and their adhesive force with respect to the corona-discharged oriented polypropylene film (product name OPP P-2161, 25 µm, Toyobo Co., Ltd.) was also good.

### <A3. Examples of Shrink Printing Using Polyethyleneimine Compound>

### (Synthesis of Acrylic Resin)

Used was that obtained by polymerization according to a solution polymerization based on the monomer makeup [n-butyl methacrylate/n-butyl acrylate/2-hydroxyethyl methacrylate/methyl methacrylate = 35/20/15/30 (ratio by mass)], followed by evaporation of the solvent. Its mass-averaged molecular weight was 60,000 and hydroxyl group value was 60 mgKOH/g.

### (Manufacture of Shrink-packaging Printing Ink Composition 1)

10.0 parts by mass of a pigment (C. I. PB 15:4), 10.0 parts by mass of the above acrylic resin, 3.5 parts by mass of nitrocellulose (product name: LIG 1/8, Snpe Japan K.K.), 20.0 parts by mass of methylcyclohexane, 35.5 parts by mass of isopropyl alcohol, and 21.0 parts by mass of ethyl acetate were kneaded and dispersed according to a conventional method, to manufacture shrink-packaging printing ink composition 1.

### (Manufacture of Shrink-packaging Printing Ink Composition 2)

10.0 parts by mass of a pigment (C. I. PB 15:4), 9.0 parts by mass of a carboxyl group-containing acrylic resin (monomer makeup: MAA/MMA/BMA, theoretical acid value 3 mgKOH/g, mass-averaged molecular weight 60,000), 10.0 parts by mass of isopropyl alcohol, and 15.0 parts by mass of ethyl acetate were kneaded using a paint conditioner, to which 1.2 parts by mass of the above carboxyl group-containing acrylic resin, 5.0 parts by mass of a cellulose acetate butyrate (CAB-381-0.5, Eastman Chemical Company, number-averaged molecular weight 30,000), 5.0 parts by mass of a rosin ester (acid value 7 mgKOH/g), 1.0 part by mass of epoxylated soybean oil, 0.5 parts by mass of stearic acid amide, 2.2 parts by mass of SPRAY 30 (Sasol Limited), 0.3 parts by mass of BYK-094 (BYK-Chemie GmbH), 4.5 parts by mass of normal propyl alcohol, 27.4 parts by mass of isopropyl alcohol, and 9.1 parts by mass of ethyl acetate were added and the materials were mixed, to prepare shrink-packaging printing ink composition 2.

### (Preparation of Printed Matter)

On a crystallizable PET (polyethylene terephthalate) shrink film, the releasing primer composition (polyethyleneimine P-1000) that had been diluted to achieve a specified coating amount was coated using a gravure printing machine and dried under the following conditions. On the surface of each such polyethyleneimine each diluted shrink-packaging printing ink composition obtained by adding each mixed solvent to each of the shrink-packaging printing ink compositions above and diluting the mixture to 16 seconds using Zahn Cup No. 3 by Rigosha & Co., Ltd., was printed using a gravure printing machine and dried under the following conditions, to obtain each printed matter. This printed matter of each shrink-packaging printing ink composition was taken by 1.5 g and shredded into small pieces of MD 15 mm x TD 25 mm or so, to obtain printed layer peel test samples.

### (Method for Coating/Conditions for Coating Releasing Primer Composition)

Coating machine: Gravure printing machine
Coating speed: 100 m/min
Printing plate: Helio 175 lines/inch (130°) solid plate
Drying temperature: 70°C

### (Method for Printing/Conditions for Printing Shrink-packaging Printing Ink Composition)

Coating machine: Gravure printing machine
Coating speed: 100 m/min
Printing plate: Helio 175 lines/inch (130°) solid plate
Drying temperature: 55°C

### <Evaluation of Adhesion Property with Respect to Base Material>

An adhesive cellophane tape was adhered to the printed side of each of the printed matters obtained per "Preparation of Printed Matter" and quickly peeled, to evaluate the adhesion property according to the evaluation criteria below based on the degree of peeling of the printed film.

### (Evaluation Criteria)

○: The printed film peels from the film by less than 5% in area ratio.
△: The printed film peels from the film by 5% or more but less than 30 in area ratio.
×: The printed film peels from the film by 30% or more in area ratio.

### <Method of Printed Layer Peel Test>

### (Preparation of Release Solution 1 Comprising Water)

Release solution 1 comprising water alone.

### (Preparation of Release Solution 2 Comprising Aqueous Alkali Solution)

2.0 parts by mass of sodium hydroxide were added to 98.0 parts by mass of water and dissolved under agitation, to obtain release solution 2 comprising aqueous alkali solution.

### (Preheating of Release Solution 1)

100 grams of release solution 1 comprising water were put in each HDPE (high-density polyethylene) container of 200 cc in volume, and the container was heated in a hot water bath until the solution temperature reached 70°C.

### (Preheating of Release Solution 2)

100 grams of release solution 2 comprising aqueous alkali solution were put in each HDPE (high-density polyethylene) container of 200 cc in volume, and the container was heated in a hot water bath until the solution temperature reached 70°C.

### (Releasing)

After the release solutions had reached 70°C, the above printed layer peel test samples were put into each release solution and the mixture was agitated using stainless-steel agitation blades of 25 mm in blade diameter for 60 minutes in the case of release solution 1 comprising water, or 30 minutes in the case of release solution 2 comprising aqueous alkali solution. After the agitation, the HDPE container was removed from the hot water bath and let stand stationary for 5 minutes at room temperature. The release solution and PET (polyethylene terephthalate) film pieces were separated using a stainless-steel net of approx. 2 mm in mesh size.

Releasing conditions (alkali): Agitate for 30 minutes in a 70°C, 2% aqueous sodium hydroxide solution.

### (Evaluation Criteria)

○: The ink film completely peels off from the film as a film piece.
×: The ink film does not peel.

Releasing conditions (hot water): Agitate for 60 minutes in 70°C hot water.

### (Evaluation Criteria)

○: The ink film completely peels off from the film as a film piece.
×: The ink film does not peel.

**[Table 10]**

| Shrink-packaging printing ink composition | Coating amount of releasing primer P-1000 in solids content (g/m²) | Release solution 2, aqueous alkali solution | Release solution 1, water | Adhesion property immediately after printing |
|---|---|---|---|---|
| 1 | 0.18 | ○ | ○ | ○ |
| 2 | 0.18 | ○ | ○ | ○ |

Table 10 shows that, when the polyethyleneimine P-1000 was coated, both shrink-packaging printing ink compositions 1 and 2 could be released regardless of whether the water or aqueous alkali solution was used as a release solution, and their adhesive force with respect to the crystallizable PET shrink film was also good.

### <A4. Examples of Printing on Paper Base Material Side of Laminated Paper Using Polyethyleneimine Compound>

### (Manufacture of Aqueous Flexographic Printing Ink Composition)

### <Method for Manufacturing Aqueous Printing Ink>

A mixture of 15 parts by mass of a pigment (phthalocyanine blue, C. I. Pigment Blue 15:3), 15 parts by mass of an alkali-soluble type water-soluble resin (JONCRYL HPD-671, manufactured by BASF SE, solids content 25%), 0.5 parts by mass of an (ethylene oxide/propylene oxide) block polymer ((EO/PO) block polymer, HLB value 14, Mw 16,000), 0.03 parts by mass of dibutyl glycol, and 22.97 parts by mass of water was kneaded and dispersed in a bead mill, after which 43.25 parts by mass of a styrene-acrylic-based resin emulsion (acid value 38 mgKOH/g, glass transition temperature 9°C, solids content 38.5%), 2.5 parts by mass of a polyethylene wax (CHEMIPEARL W-100, solids content 35% by mass, manufactured by Mitsui Chemicals, Inc.), and 0.75 parts by mass of a defoaming agent (SN Defoamer 777 #C, San Nopco Limited) were added and the materials were mixed, to obtain an aqueous flexographic printing ink composition.

### (Preparation of Printed Matter)

On a straight-chain low-density polyethylene film (TUX-HC #50, thickness 25 µm, Mitsui Chemicals Tohcello, Inc.), each releasing primer composition obtained by diluting as shown in Table 2 below each polyethyleneimine shown in Table 1 above was coated using a gravure printing machine and dried under the following conditions. Thereon, an adhesive (TAKELAC A-969V/TAKELAC A-5, solids content 30% by mass) was coated, and a thick machine-glazed bleached kraft paper (OK BLIZZARD, 770 g/m², Oji Materia Co., Ltd.) was further adhered using a dry lamination machine, to obtain a laminated paper pursuant to the present invention. On the surface of this paper, a drawdown of the above flexographic printing ink composition was preformed using a 200-line hand-proofer, followed by drying, to obtain a printed matter. Each such printed matter was taken by 1.5 g and shredded into small pieces of MD 15 mm × TD 25 mm or so, to obtain printed layer peel test samples.

### (Method for Coating/Conditions for Coating Releasing Primer Composition)

Coating machine: Gravure printing machine
Coating speed: 100 m/min
Printing plate: Helio 175 lines/inch (130°) solid plate
Drying temperature: 70°C

### Laminate Structure:

TUX-HC #50/each polyethyleneimine/adhesive (TAKELAC A-969V/TAKELAC A-5, solids content 30%)/OK BLIZZARD (70 g/m²)/flexographic printing ink composition

### <Method of Printed Layer Peel Test>

### (Preparation of Release Solution 1 Comprising Water)

Release solution 1 comprising water alone.

### (Preparation of Release Solution 2 Comprising Aqueous Alkali Solution)

2.0 parts by mass of sodium hydroxide were added to 98.0 parts by mass of water and dissolved under agitation, to obtain release solution 2 comprising aqueous alkali solution.

### (Preheating of Release Solution 1)

100 grams of release solution 1 comprising water were put in each HDPE (high-density polyethylene) container of 200 cc in volume, and the container was heated in a hot water bath until the solution temperature reached 70°C.

### (Preheating of Release Solution 2)

100 grams of release solution 2 comprising aqueous alkali solution were put in each HDPE (high-density polyethylene) container of 200 cc in volume, and the container was heated in a hot water bath until the solution temperature reached 70°C.

### (Releasing)

After the release solutions had reached 70°C, the above ink layer peel test samples were put into each release solution and the mixture was agitated using stainless-steel agitation blades of 25 mm in blade diameter for 60 minutes in the case of release solution 1 comprising water, or 30 minutes in the case of release solution 2 comprising aqueous alkali solution. After the agitation, the HDPE container was removed from the hot water bath and let stand stationary for 5 minutes at room temperature. The release solution and PET (polyethylene terephthalate) film pieces were separated using a stainless-steel net of approx. 2 mm in mesh size.

Releasing conditions (alkali): Agitate for 30 minutes in a 70°C, 2% aqueous sodium hydroxide solution.

### (Evaluation Criteria)

○: The paper completely peels off from the film as a film piece.
×: The paper does not peel.
Releasing conditions (hot water): Agitate for 60 minutes in 70°C hot water.

### (Evaluation Criteria)

○: The paper completely peels off from the film as a film piece.
×: The paper does not peel.

### Lamination Strength

The above printed matters were each cut to 15 mm in width and measured for T-peel strength using a peel tester manufactured by Yasuda Seiki Seisakusho, Ltd. Hereafter in this Specification, adhesion property was evaluated according to this evaluation.

### (Evaluation Criteria for Laminate Structure 1)

○: The peel strength is 1.2 N/15 mm or higher.
△: The peel strength is 0.7 N/15 mm or higher but under 1.2 N/15 mm.
×: The peel strength is under 0.7 N/15 mm.

The evaluation results are shown in Table 11 below.

**[Table 11]**

| Releasing primer composition, polyethyleneimine | Coating amount of releasing primer in solids content (g/m²) | Release solution 2, aqueous alkali solution | Release solution 1, water | Lamination strength |
|---|---|---|---|---|
| Not coated | - | × | × | ○ |
| SP-018 | 0.1 | ○ | ○ | ○ |
| P-1000 | 0.02 | ○ | ○ | ○ |
| | 0.18 | ○ | ○ | ○ |
| | 0.36 | ○ | ○ | ○ |
| P-3000 | 0.02 | ○ | ○ | ○ |
| | 0.18 | ○ | ○ | ○ |
| Lupasol P | 0.02 | ○ | ○ | ○ |
| | 0.18 | ○ | ○ | ○ |

When the releasing primer compositions conforming to the present invention were coated, the films could be released smoothly in both the water and aqueous alkali solution. Their lamination strength immediately after printing was also excellent.

According to the results shown in Table 11, however, release property and excellent lamination strength could not be achieved simultaneously when the releasing primer compositions conforming to the present invention were not coated.

### <B. Examples and Comparative Examples of Using Mixture Containing Polyethyleneimine Compound and Glycidyl Group-containing Silane Coupling Agent and/or Isocyanate Group-containing Silane Coupling Agent>

Next, cases of using primer compositions when a glycidyl group-containing silane coupling agent and/or isocyanate group-containing silane coupling agent is/are contained in a polyethylene imine compound are explained.

Under the present invention, a silane coupling agent containing glycidyl groups and/or silane coupling agent containing isocyanate groups can be contained in the primer composition from the viewpoint of improving the adhesion property. Examples of the silane coupling agent containing glycidyl groups include 3-glycidyloxypropyl trimethoxysilane, 3-glycidyloxypropyl methoxydimethoxysilane, 3-glycidyloxypropyl methoxydiethoxysilane, 3-glycidyloxypropylt triethoxysilane, and the like. Examples of the silane coupling agent containing isocyanate groups include triethoxy(3-isocyanatopropyl)silane, and the like.

Preferably the silane coupling agent containing glycidyl groups and/or silane coupling agent containing isocyanate groups is/are compounded in so that the ratio of the (number of glycidyl groups + number of isocyanate groups in the silane coupling agent(s)) relative to the (number of amino groups in the polyethyleneimine-based compound), or specifically ((Number of glycidyl groups in the silane coupling agent + Number of isocyanate groups in the silane coupling agent) / Total sum of the number of primary amino groups and number of secondary amino groups in the polyethyleneimine-based compound), becomes 0.20 to 2.50. And, it is more preferably 0.30 or higher, or yet more preferably 0.50 or higher, and it is more preferably 2.20 or lower, or yet more preferably 1.90 or lower.

It should be noted that the number of amino groups represents the total sum of the numbers of primary amino groups and secondary amino groups, respectively.

The total ratios of these numbers, i.e., ((Number of glycidyl groups in the silane coupling agent + Number of isocyanate groups in the silane coupling agent) / Number of primary amino groups and secondary amino groups in the polyethyleneimine compound), can be obtained by the concept formula below:
[(Coating amount of the glycidyl group-containing silane coupling agent (g/m²) x Average number of glycidyl groups in one molecule) / Average molecular weight of the glycidyl group-containing silane coupling agent (g/mmol)] + [(Coating amount of the isocyanate group-containing silane coupling agent (g/m²) x Average number of isocyanate groups in one molecule) / Average molecular weight of the isocyanate group-containing silane coupling agent (g/mmol)] divided by [(Coating amount of the polyethyleneimine compound (g/m²) x Amine value (mmol/g)) x (Average (number of primary amino groups + number of secondary amino groups) in one molecule) / (Average (number of primary amino groups + number of secondary amino groups + number of tertiary amino groups in one molecule)].

### <Releasing Primer Layer>

Each releasing primer composition having each solids concentration of releasing primer composition shown in Table 12 below was coated using a gravure printing machine and dried under the following conditions so as to achieve each coating amount shown in Table 13 below. It should be noted that the coating amount of each component of releasing primer composition in each example in Table 13 represents the amount of solids of each component contained in the coating layer per unit area. The solids concentration of each releasing primer composition represents, when it is made into a coating layer, the concentration, corresponding to the polyethyleneimine-based compound in the coating layer, and the concentration corresponding to the content of the silane coupling agent having glycidyl groups and that of the silane coupling agent having isocyanate groups, in the coating layer. In addition, the ratio of the number of glycidyl groups in the silane coupling agent or the number of glycidyl groups in the glycidyl group-containing silane coupling agent and/or number of isocyanate groups in the isocyanate group-containing silane coupling agent, relative to the number of amino groups in the polyethyleneimine compound, in Table 13, is obtained according to the aforementioned concept and represents the value obtained by dividing the number of glycidyl groups and/or number of isocyanate groups, by the total sum of the number of primary amino groups and number of secondary amino groups, in the coated releasing primer composition.

### (Conditions for Coating Each Releasing Primer Composition)

Coating machine: Gravure printing machine
Coating speed: 100 m/min
Printing plate: Helio 175 lines/inch (130°) solid plate (wet coating amount approx. 6 g/m²)
Drying temperature: 70°C

In printing using a gravure printing machine, diluting the releasing primer to each % by mass of solids below and then printing it using a gravure printing machine under the container conditions results in each coating amount (g/m²) below.

**[Table 12]**

| Coating amount (g/m²) | % by mass of solids in releasing primer |
|---|---|
| 0.01 | 0.165 |
| 0.02 | 0.33 |
| 0.18 | 3 |
| 0.36 | 6 |

**[Table 13]**

| | | Polyethyleneimine compound | | Silane coupling agent having glycidyl groups | | Equivalent number of glycidyl groups in silane coupling agent relative to amino groups in polyethyleneimine compound | Solids content of releasing primer when printing with Helio 175 lines/inch (130°) (%) |
|---|---|---|---|---|---|---|---|
| | | Product number | Coating amount of releasing primer in solids content (g/m²) | Compound | Coating amount of releasing primer in solids content (g/m²) | | |
| Examples | B1 | P-1000 | 0.02 | 3-glycidyloxypropyl trimethoxysilane | 0.02 | 0.31 | 0.66 |
| | B2 | | 0.02 | | 0.06 | 0.94 | 1.32 |
| | B3 | | 0.02 | | 0.1 | 1.6 | 1.65 |
| | B4 | | 0.02 | | 0.14 | 2.2 | 2.64 |
| | B5 | | 0.02 | 3-glycidyloxypropyl triethoxysilane | 0.1 | 1.4 | 1.65 |
| | B6 | P-3000 | 0.02 | 3-glycidyloxypropyl trimethoxysilane | 0.06 | 1 | 1.32 |
| | B7 | | 0.02 | | 0.1 | 1.7 | 1.65 |
| | B8 | | 0.02 | | 0.14 | 2.4 | 2.64 |
| | B9 | Lupasol P | 0.02 | 3-glycidyloxypropyl trimethoxysilane | 0.06 | | 1.32 |
| | B10 | | 0.02 | | 0.1 | | 1.65 |
| | B11 | | 0.02 | | 0.14 | | 2.64 |

| | | Polyethyleneimine compound | | Silane coupling agent having isocyanate groups | | Equivalent number of isocyanate groups in silane coupling agent relative to amino groups in polyethyleneimine compound | Solids content of releasing primer when printing with Helio 175 lines/inch (130°) (%) |
|---|---|---|---|---|---|---|---|
| | | Product number | Coating amount of releasing primer in solids content (g/m²) | Compound | Coating amount of releasing primer in solids content (g/m²) | | |
| Examples | B12 | P-1000 | 0.02 | Triethoxy(3-isocyanatopropyl)silane | 0.06 | 0.9 | 1.32 |
| | B13 | | 0.02 | | 0.1 | 1.5 | 1.65 |

Examples and comparative examples of the types of printing using the releasing primer composition containing silane coupling agents or the B. mixture containing a polyethyleneimine compound, and a glycidyl group-containing silane coupling agent and/or isocyanate group-containing silane coupling agent, pertaining to the present invention, are explained below in the order of back printing, front printing, shrink printing, and printing on the paper base material side of a laminated paper obtained by coating an adhesive on a base material film and bonding a paper base material thereon.

It should be noted that those parts that are the same as in the aforementioned examples and comparative examples of the types of printing of back printing, front printing, shrink printing, and printing on the paper material side of a laminated paper obtained by coating an adhesive on a base material film and bonding a paper base material thereon, using releasing primer compositions not containing silane coupling agents, are omitted.

### <B1. Examples and Comparative Examples of Back Printing Using Mixture Containing Polyethyleneimine Compound and Glycidyl Group-containing Silane Coupling Agent and/or Isocyanate Group-containing Silane Coupling Agent>

### (Dry Laminate)

Laminate Structure 1
   : P-2161 #25/each silane coupling agent + each polyethyleneimine/each back printing ink composition/adhesive (TAKELAC A-969V/TAKELAC A-5, solids content 30%)/VMCPP
Laminate Structure 2
   : Transparent vapor deposition PET or transparent vapor deposition NY/each silane coupling agent + each polyethyleneimine/each back printing ink composition/adhesive (TAKELAC A-515/TAKELAC A-50, solids content 30% by mass)/RXC-22 #60

### (Extruded Laminate)

Laminate Structure 3
   : PET or NY or transparent vapor deposition PET or transparent vapor deposition NY/each silane coupling agent + each polyethyleneimine/each back printing ink composition/AC agent (TAKELAC A-3210/TAKELAC A-3072, solids content 7% by mass)/molten polyethylene
Laminate Structure 4
   : OPP/each silane coupling agent + each polyethyleneimine/each back printing ink composition/AC agent (EPOMIN P-1000, solids content 0.7% by mass)/molten polyethylene

### <Deinking (Evaluation of Ink Release Property)>

Deinking (evaluation of ink release property) was performed as follows.

Each of the above printed matters that had been fully dried after printing was taken by 1.5 g and shredded into small pieces of MD 15 mm x TD 25 mm or so, to obtain ink release property test samples.

### (Preparation of Release Solution Comprising Aqueous Alkali Solution)

2.0 parts by mass of sodium hydroxide were added to 98.0 parts by mass of water and dissolved under agitation, to obtain a release solution comprising aqueous alkali solution.

### (Preheating of Release Solution Comprising Aqueous Alkali Solution)

100 grams of the release solution comprising aqueous alkali solution were put in each HDPE (high-density polyethylene) container of 200 cc in volume, and the container was heated in a hot water bath until the solution temperature reached 70°C.

### (Releasing)

After each release solution had reached 70°C, the above ink release property test samples were put into the release solution comprising aqueous alkali solution and the mixture was agitated using stainless-steel agitation blades of 25 mm in blade diameter for 30 minutes in the case of the release solution comprising aqueous alkali solution. After the agitation, the HDPE (high-density polyethylene) container was removed from the hot water bath and let stand stationary for 5 minutes at room temperature. The release solution and film pieces of respective types were separated using a stainless-steel net of approx. 2 mm in mesh size.

### (Rinsing)

The released films of respective types were transferred to a 200-cc HDPE container to which 100 g of water were added. The water was agitated for 5 minutes using stainless-steel agitation blades of 25 mm in blade diameter. After the water had been left stationary for 5 minutes, the film pieces of respective types and water were separated using a stainless-steel net. After drying the film pieces of respective types, the release property of the ink from the films of respective types was visually evaluated.

Releasing conditions (alkali): Agitate for 30 minutes in a 70°C, 2% aqueous sodium hydroxide solution.

### (Evaluation Criteria)

○: The ink film completely peels off from the resin base material film as a film piece.
×: The ink film does not peel from the resin base material film as a film piece.

Laminate structures 1 to 4 produced the same results as shown in Table 14.

**[Table 14]**

| | Release solution (aqueous alkali solution) | Adhesion property immediately after printing | Lamination strength | Anti-blocking property |
|---|---|---|---|---|
| Example B1 | ○ | ○ | ○ | ○ |
| Example B2 | ○ | ○ | ○ | ○ |
| Example B3 | ○ | ○ | ○ | ○ |
| Example B4 | ○ | ○ | ○ | ○ |
| Example B5 | ○ | ○ | ○ | ○ |
| Example B6 | ○ | ○ | ○ | ○ |
| Example B7 | ○ | ○ | ○ | ○ |
| Example B8 | ○ | ○ | ○ | ○ |
| Example B9 | ○ | ○ | ○ | ○ |
| Example B10 | ○ | ○ | ○ | ○ |
| Example B11 | ○ | ○ | ○ | ○ |
| Example B12 | ○ | ○ | ○ | ○ |
| Example B13 | ○ | ○ | ○ | ○ |

### <B2. Examples of Front Printing Using Mixture Containing Polyethyleneimine Compound and Glycidyl Group-containing Silane Coupling Agent and/or Isocyanate Group-containing Silane Coupling Agent>

Evaluations were performed in the same manner as in the above examples of front printing not using silane coupling agent, except that the releasing primer compositions were changed to the silane coupling agent-containing releasing primer compositions above.

Front printing ink compositions 1 to 8 all produced the same results as shown in Table 15.

**[Table 15]**

| | Releasing primer | Release solution (aqueous alkali solution) | Adhesion property immediately after printing |
|---|---|---|---|
| Front printing ink compositions 1 to 8 | Example B1 | ○ | ○ |
| | Example B2 | ○ | ○ |
| | Example B3 | ○ | ○ |
| | Example B4 | ○ | ○ |
| | Example B5 | ○ | ○ |
| | Example B6 | ○ | ○ |
| | Example B7 | ○ | ○ |
| | Example B8 | ○ | ○ |
| | Example B9 | ○ | ○ |
| | Example B10 | ○ | ○ |
| | Example B11 | ○ | ○ |
| | Example B12 | ○ | ○ |
| | Example B13 | ○ | ○ |

### <B3. Examples of Shrink Printing Using Mixture Containing Polyethyleneimine Compound and Glycidyl Group-containing Silane Coupling Agent and/or Isocyanate Group-containing Silane Coupling Agent>

Evaluations were performed in the same manner as in the above examples of shrink printing not using silane coupling agent, except that the releasing primers were changed to the silane coupling agent-containing releasing primer compositions above.

Shrink-packaging printing ink compositions 1 and 2 both produced the same results as shown in Table 16.

**[Table 16]**

| | Releasing primer | Release solution (aqueous alkali solution) | Adhesion property immediately after printing |
|---|---|---|---|
| Shrink-packaging printing ink compositions 1 and 2 | Example B1 | ○ | ○ |
| | Example B2 | ○ | ○ |
| | Example B3 | ○ | ○ |
| | Example B4 | ○ | ○ |
| | Example B5 | ○ | ○ |
| | Example B6 | ○ | ○ |
| | Example B7 | ○ | ○ |
| | Example B8 | ○ | ○ |
| | Example B9 | ○ | ○ |
| | Example B10 | ○ | ○ |
| | Example B11 | ○ | ○ |
| | Example B12 | ○ | ○ |
| | Example B13 | ○ | ○ |

### <B4. Examples of Printing on Paper Base Material Side of Laminated Paper Using Mixture Containing Polyethyleneimine Compound and Glycidyl Group-containing Silane Coupling Agent and/or Isocyanate Group-containing Silane Coupling Agent>

Evaluations were performed in the same manner as in the above examples of printing on the paper base material side of a laminated paper not using silane coupling agent, except that the releasing primer compositions were changed to the silane coupling agent-containing releasing primer compositions above. The evaluation results are shown in Table 17.

**[Table 17]**

| | Release solution (aqueous alkali solution) | Adhesion property immediately after printing | Lamination strength |
|---|---|---|---|
| Example B1 | ○ | ○ | Δ |
| Example B2 | ○ | ○ | ○ |
| Example B3 | ○ | ○ | ○ |
| Example B4 | ○ | ○ | ○ |
| Example B5 | ○ | ○ | ○ |
| Example B6 | ○ | ○ | ○ |
| Example B7 | ○ | ○ | ○ |
| Example B8 | ○ | ○ | ○ |
| Example B9 | ○ | ○ | ○ |
| Example B10 | ○ | ○ | ○ |
| Example B11 | ○ | ○ | ○ |
| Example B12 | ○ | ○ | ○ |
| Example B13 | ○ | ○ | ○ |

### <C. Examples and Comparative Examples of Using Siloxane-modified Polyethyleneimine Compound>

Next, cases of using releasing primer compositions when they contain the C. siloxane-modified polyethyleneimine compound are explained.

Under the present invention, the releasing primer composition can contain a siloxane-modified polyethyleneimine compound from the viewpoint of adhesion property. For the siloxane-modified polyethyleneimine compound, any siloxane-modified polyethyleneimine compound obtained by reacting a polyethyleneimine and a component containing at least one type of amine-reactive hydrolysable organosilane expressed by the formula: R-Z-SiY₃ [in the formula, R represents an amine-reactive group selected from the group that consists of isocyanate group, oxiranyl group, glycidoxy group, acryloxy group, carboethoxy group, carbomethoxy group, vinyl sulfonyl group, and acrylamide group, Z represents a divalent organic group containing carbon atoms, and Y's each independently represent a hydrolysable group] can be used.

### <Releasing Primer Layer>

Each releasing primer composition having each % by mass of solids in releasing primer composition shown in Table 18 below was coated using a gravure printing machine and dried under the following conditions. It should be noted that the coating amount of the releasing primer composition in each example in the table represents the amount of solids in the coating layer per unit area. The solids concentration of the releasing primer composition represents the concentration, when it is made into a coating layer, corresponding to the siloxane-modified polyethyleneimine-based compound in the coating layer.

### (Conditions for Coating Releasing Primer Composition)

Coating machine: Gravure printing machine
Coating speed: 100 m/min
Printing plate: Helio 175 lines/inch (130°) solid plate (wet coating amount approx. 6 g/m²)
Drying temperature: 70°C

In the case of printing using a gravure printing machine, diluting the releasing primer to each % by mass of solids below and then printing it using a gravure printing machine under the container conditions results in each coating amount (g/m²) below.

Siloxane-modified polyethyleneimine compound: Trimethoxysilylpropyl-modified (polyethyleneimine) (product name: SSP-060, Gelest, Inc., molecular weight 1,500 to 1,800, amine value 100 mmol/g; the amine value is measured by acid titration in a nonaqueous system, while the amine ratio is measured by NMR (13C).)

**[Table 18]**

| Coating amount (g/m²) | % by mass of solids in releasing primer |
|---|---|
| 0.12 | 1.98 |
| 0.18 | 3 |

Examples and comparative examples of the types of printing using the releasing primer composition containing siloxane-modified polyethyleneimine compound proposed by the present invention are explained below in the order of back printing, front printing, shrink printing, and printing on the paper base material side of a laminated paper obtained by coating an adhesive on a base material film and bonding a paper base material thereon.

It should be noted that those parts that are the same as in the aforementioned examples and comparative examples of the types of printing of back printing, front printing, shrink printing, and printing on the paper material side of a laminated paper obtained by coating an adhesive on a base material film and bonding a paper base material thereon, using releasing primer compositions not containing siloxane-modified polyethyleneimine compound, are omitted.

### <C1. Examples and Comparative Examples of Back Printing Using Siloxane-modified Polyethyleneimine Compound>

### (Dry Laminate)

Laminate Structure 1
   : P-2161 #25/siloxane-modified polyethyleneimine compound/each back printing ink composition/adhesive (TAKELAC A-969V/TAKELAC A-5, solids content 30%)/VMCPP
Laminate Structure 2
   : Transparent vapor deposition PET or transparent vapor deposition NY/siloxane-modified polyethyleneimine compound/each back printing ink composition/adhesive (TAKELAC A-515/TAKELAC A-50, solids content 30% by mass) solids content 30% by mass)/RXC-22 #60

### (Extruded Laminate)

Laminate Structure 3
   : PET or NY or transparent vapor deposition PET or transparent vapor deposition NY/siloxane-modified polyethyleneimine compound/each back printing ink composition/AC agent (TAKELAC A-3210/TAKELAC A-3072, solids content 7% by mass)/molten polyethylene
· Laminate Structure 4
   : OPP/siloxane-modified polyethyleneimine compound/each back printing ink composition/AC agent (EPOMIN P-1000, solids content 0.7% by mass)/molten polyethylene

### <Deinking (Evaluation of Ink Release Property)>

Deinking (evaluation of ink release property) was performed as follows.

Each of the above printed matters that had been fully dried after printing was taken by 1.5 g and shredded into small pieces of MD 15 mm x TD 25 mm or so, to obtain ink release property test samples.

### (Preparation of Release Solution Comprising Aqueous Alkali Solution)

2.0 parts by mass of sodium hydroxide were added to 98.0 parts by mass of water and dissolved under agitation, to obtain a release solution comprising aqueous alkali solution.

### (Preheating of Release Solution Comprising Aqueous Alkali Solution)

100 grams of the release solution comprising aqueous alkali solution were put in each HDPE (high-density polyethylene) container of 200 cc in volume, and the container was heated in a hot water bath until the solution temperature reached 70°C.

### (Releasing)

After each release solution had reached 70°C, the above ink release property test samples were put into the release solution comprising aqueous alkali solution and the mixture was agitated using stainless-steel agitation blades of 25 mm in blade diameter for 30 minutes in the case of the release solution comprising aqueous alkali solution. After the agitation, the HDPE (high-density polyethylene) container was removed from the hot water bath and let stand stationary for 5 minutes at room temperature. The release solution and film pieces of respective types were separated using a stainless-steel net of approx. 2 mm in mesh size.

### (Rinsing)

The released films of respective types were transferred to a 200-cc HDPE container to which 100 g of water were added. The water was agitated for 5 minutes using stainless-steel agitation blades of 25 mm in blade diameter. After the water had been left stationary for 5 minutes, the film pieces of respective types and water were separated using a stainless-steel net. After drying the film pieces of respective types, the release property of the ink from the films of respective types was visually evaluated.

Releasing conditions (alkali): Agitate for 30 minutes in a 70°C, 2% aqueous sodium hydroxide solution.

### (Evaluation Criteria)

○: The ink film completely peels off from the resin base material film as a film piece.
×: The ink film does not peel from the resin base material film as a film piece.

Laminate structures 1 to 4 all produced the same results as shown in Table 19.

**[Table 19]**

| Releasing primer composition | Coating amount of releasing primer in solids content (g/m²) | Release solution (aqueous alkali solution) | Adhesion property immediately after printing | Lamination strength | Anti-blocking property |
|---|---|---|---|---|---|
| Trimethoxysilylpropyl-modified (polyethyleneimine) | 0.12 | ○ | ○ | ○ | ○ |
| | 0.18 | ○ | ○ | ○ | ○ |

### <C2. Examples of Front Printing Using Siloxane-modified Polyethyleneimine Compound>

Evaluations were performed in the same manner as in the above examples of front printing not using silane compiling agent, except that the releasing primer composition was changed to the silane compiling-modified polyethyleneimine-containing releasing primer above.

Front printing ink compositions 1 to 8 all produced the same results. The results pertaining to front printing ink composition 1 are shown in Table 20 below.

**[Table 20]**

| Ink composition | Releasing primer composition | Coating amount of releasing primer in solids content (g/m²) | Release solution (aqueous alkali solution) | Adhesion property immediately after printing |
|---|---|---|---|---|
| Front printing ink compositions 1 to 8 | Trimethoxysilylpropyl-modified (polyethyleneimine) | 0.12 | ○ | ○ |
| | | 0.18 | ○ | ○ |

### <C3. Examples of Shrink Printing Using Siloxane-modified Polyethyleneimine Compound>

Evaluations were performed in the same manner as in the above examples of shrink printing not using silane compiling agent, except that the releasing primer was changed to the silane compiling-modified polyethyleneimine-containing releasing primer above.

Shrink-packaging printing ink compositions 1 and 2 both produced the same results. The results pertaining to shrink-packaging printing ink compositions 1 and 2 are shown in Table 21 below.

**[Table 21]**

| Ink composition | Releasing primer composition | Coating amount of releasing primer in solids content (g/m²) | Release solution (aqueous alkali solution) | Adhesion property immediately after printing |
|---|---|---|---|---|
| Shrink-packaging printing ink compositions 1 and 2 | Trimethoxysilylpropyl-modified (polyethyleneimine) | 0.12 | ○ | ○ |
| | | 0.18 | ○ | ○ |

### <C4. Examples of Printing on Paper Base Material Side of Laminated Paper Using Siloxane-modified Polyethyleneimine Compound>

Evaluations were performed in the same manner as in the above examples of printing on the paper base material side of a laminated paper not using silane compiling agent, except that the releasing primer was changed to the siloxane-modified polyethyleneimine-containing releasing primer above. The results are shown in Table 22.

**[Table 22]**

| Releasing primer composition | Coating amount of releasing primer in solids content (g/m²) | Release solution (aqueous alkali solution) | Lamination strength |
|---|---|---|---|
| Trimethoxysilylpropyl-modified (polyethyleneimine) | 0.12 | ○ | ○ |
| | 0.18 | ○ | ○ |

As shown by the results in Tables 19 to 22 above, the printed layers could be released by the aqueous alkali solution when the primer composition conforming to the present invention was used. Also, the printed layers had sufficiently high lamination strength.

### <D. Examples and Comparative Examples of Using Polybutadiene-based Compound>

Next, cases of using releasing primer compositions when they contain a polybutadiene-based compound are explained.

### <D1. Examples of Back Printing Using Releasing Primer Composition Containing Polybutadiene-based Compound>

### <Polyurethane Resin Varnish 1 (Biomass Polyurethane), Polyurethane Resin Varnish 2 (Not Biomass Polyurethane) and Polyurethane Resin Varnish 3 (Polyurethane Resin Varnish Obtained Using Compound Resulting from Ketiminating Amino Groups in Polyamine Compound with Ketone Compound)>

Polyurethane resin varnishes 1 to 3 above were obtained by the same manufacturing method in <A. Examples and Comparative Examples of Back Printing Using Polyethyleneimine Compound> above.

### <Vinyl Chloride/Vinyl Acetate-based Copolymer>

SOLBIN TA-3, Nissin Chemical Industry Co., Ltd.

### <Rosin or Derivative Thereof>

Polymerized rosin: Acid value 160 mgKOH/g

### <Chlorinated Polypropylene Varnish>

40 parts by mass of a chlorinated polypropylene (solids content 50% by mass) of 40% in chlorination degree and 100,000 in mass-averaged molecular weight and 60 parts by mass of methylcyclohexane were mixed under agitation, to obtain a chlorinated polypropylene varnish of 20% by mass in solids content.

### <Silica Particles>

Average particle size: 4.5 µm

### <Polyethylene Wax>

Average particle size: 2.11 µm

### <Fatty Acid Amide>

Ethylene-bis-stearic acid amide

### <Example of Manufacturing Back Printing Ink Composition>

Three types of back printing ink compositions respectively containing polyurethane resin varnishes 1 to 3 above were obtained by the same manufacturing method in <A. Examples and Comparative Examples of Back Printing Using Polyethyleneimine Compound> above.

### <Printing Base Material>

P-2161 #25: Biaxially oriented polypropylene film (thickness 25 µm) (Toyobo Co., Ltd.)

### (Releasing Primer)

Polybutadiene-based compound (product name: TITABOND T-180E (solids concentration 10% by mass), Nippon Soda Co., Ltd.)

### <Back Printing, Creation of Laminated Printed Matter, Test Results)

### <Dry Laminate 1 (Base Material Film: Standard Film)>

On one side (treated side) of P-2161 #25, each releasing primer composition, obtained by diluting the above polybutadiene-based compound to achieve each coating amount in Table 23 below, was coated using a gravure printing machine, and dried under the following conditions, to achieve laminate structure 1 below. It should be noted that the coating amounts in Tables 23 and 24 represent the amounts of polybutadiene-based compound. On the surface of this polybutadiene layer constituting a releasing primer layer, each diluted ink composition obtained by adding an 80/20 mixed solvent of normal propyl acetate/isopropyl alcohol to each back printing ink composition and diluting the mixture to 16 seconds using Zahn Cup No. 3 manufactured by Rigosha & Co., Ltd., was further printed using a gravure printing machine and dried under the following conditions, to obtain a printed matter.

Thereon, an adhesive (TAKELAC A-969V/TAKELAC A-5, solids content 30% by mass) was coated, and aluminum vapor deposition CPP was further adhered using a dry lamination machine, to create a laminated printed matter of laminate structure 1 below.

### <Dry Laminate 2 (Base Material Film: Transparent Vapor Deposition Film)>

On one side (treated side) of transparent vapor deposition PET or transparent vapor deposition NY, each releasing primer composition obtained by diluting the above polybutadiene-based compound to achieve each coating amount in Table 1 below was coated using a gravure printing machine and dried under the following conditions, to achieve laminate structure 2 below. It should be noted that the coating amounts in Tables 23 and 25 represent the amounts of polybutadiene-based compound. On the surface of this polybutadiene layer constituting a releasing primer layer, each diluted ink composition obtained by adding an 80/20 mixed solvent of normal propyl acetate/isopropyl alcohol to each back printing ink composition and diluting the mixture to 16 seconds using Zahn Cup No. 3 manufactured by Rigosha & Co., Ltd., was further printed using a gravure printing machine and dried under the following conditions, to obtain a printed matter.

Thereon, an adhesive (TAKELAC A-515/TAKELAC A-50, solids content 30% by mass) was coated, and RXC-22 #60 below was further adhered using a dry lamination machine, to create a laminated printed matter of laminate structure 2 below.

### <Extruded Laminate 1>

On one side (treated side) of PET or NY or transparent vapor deposition PET or transparent vapor deposition NY, each releasing primer composition obtained by diluting the above polybutadiene-based compound to achieve each coating amount in Table 23 below was coated using a gravure printing machine and dried under the following conditions, to achieve laminate structure 3 below. It should be noted that the coating amounts in Tables 23 and 26 represent the amounts of polybutadiene-based compound. On the surface of this polybutadiene layer constituting a releasing primer layer, each diluted ink composition, obtained by adding an 80/20 mixed solvent of normal propyl acetate/isopropyl alcohol to each back printing ink composition and diluting the mixture to 16 seconds using Zahn Cup No. 3 manufactured by Rigosha & Co., Ltd., was further printed using a gravure printing machine and dried under the following conditions, to obtain a printed matter.

Thereon, an AC agent (TAKELAC A-3210/TAKELAC A-3072, solids content 7% by mass) was coated, and molten polyethylene was further layered using an extrusion lamination machine, to create a laminated printed matter of laminate structure 3 below.

### <Extruded Laminate 2>

On the treated side of an OPP film, each releasing primer composition, obtained by diluting the above polybutadiene-based compound to achieve each coating amount in Table 23 below, was coated using a gravure printing machine and dried under the following conditions. It should be noted that the coating amounts in Table 27 represent the amounts of polybutadiene-based compound. On the surface of this polybutadiene layer constituting a releasing primer layer, each diluted ink composition obtained by adding an 80/20 mixed solvent of normal propyl acetate/isopropyl alcohol to each back printing ink composition and diluting the mixture to 16 seconds using Zahn Cup No. 3 manufactured by Rigosha & Co., Ltd., was further printed using a gravure printing machine and dried under the following conditions, to obtain a printed matter.

Thereon, an AC agent (EPOMIN P-1000, solids content 0.7% by mass) was coated, and molten polyethylene was further layered using an extrusion lamination machine, to create a laminated printed matter of laminate structure 4 below.

### (Conditions for Coating Each Releasing Primer Composition)

Coating machine: Gravure printing machine
Coating speed: 100 m/min
Printing plate: Helio 175 lines/inch (130°) solid plate (wet coating amount approx. 6 g/m²)
Drying temperature: 70°C

### (Conditions for Printing Back Printing Ink Composition)

Coating machine: Gravure printing machine
Coating speed: 100 m/min
Printing plate: Helio 175 lines/inch (130°) solid plate
Drying temperature: 55°C

**[Table 23]**

| Coating amount (g/m²) | % by mass of solids in releasing primer |
|---|---|
| 0.06 | 1 |
| 0.18 | 3 |

### (Laminate Structure 1)

: OPP film/polybutadiene-based compound/back printing ink composition 1/adhesive (TAKELAC A-969V/TAKELAC A-5, solids content 30% by mass)/aluminum vapor deposition CPP film
OPP film: Corona-discharged biaxially oriented propylene film P-2161 #25 (thickness 25 µm) (Toyobo Co., Ltd.)
Adhesive (TAKELAC A-969V/TAKELAC A-5): Aromatic ether-based 2-liquid adhesive, solids content 30% by mass (Mitsui Chemicals, Inc.)
Aluminum vapor deposition CPP film: Product name CP WS (Mitsui Chemicals Tohcello, Inc.)

### (Laminate Structure 2)

: Transparent vapor deposition PET film or transparent vapor deposition NY film/polybutadiene/each back printing ink composition/adhesive (TAKELAC A-515/TAKELAC A-50, solids content 30% by mass)/RXC-22 #60
Vapor deposition PET film: GL-ARH-F (Toppan Printing Co., Ltd.)
Transparent vapor deposition NY film: GL-ARH-W (Toppan Printing Co., Ltd.)
Adhesive (TAKELAC A-515/TAKELAC A-50): 2-liquid adhesive, solids content 30% by mass (Mitsui Chemicals, Inc.)
RXC-22 #60: Cast propylene film (Mitsui Chemicals Tohcello, Inc.)

### (Laminate Structure 3)

: PET film or NY film or transparent vapor deposition PET film or transparent vapor deposition NY film/polybutadiene/each back printing ink composition/AC agent (TAKELAC A-3210/TAKELAC A-3072, solids content 7% by mass)/molten polyethylene
PET film: Polyester film E-5102 #12 (Toyobo Co., Ltd.)
NY film: Nylon film ON-15 #12 (Unitika Ltd.)
Vapor deposition PET film: GL-ARH-F (Toppan Printing Co., Ltd.)
Transparent vapor deposition NY film: GL-ARH-W (Toppan Printing Co., Ltd.)
AC agent (TAKELAC A-3210/TAKELAC A-3072): Solids content 7% by mass

### (Mitsui Chemicals, Inc.)

Molten polyethylene: SUMIKATHENE L705, resin temperature 355°C (Sumitomo Chemical Co., Ltd.)

### (Laminate Structure 4)

: OPP film/polybutadiene/each back printing ink composition/AC agent (EPOMIN P-1000, solids content 0.7% by mass)/molten polyethylene
OPP film: Corona-discharged biaxially oriented propylene film P-2161 #25 (Toyobo Co., Ltd.)
AC agent (EPOMIN P-1000): Polyethyleneimine, solids content 0.7% by mass (Three Nippon Shokubai Co., Ltd.)
Molten polyethylene: SUMIKATHENE L705, resin temperature 355°C (Sumitomo Chemical Co., Ltd.)

### <Evaluation of Ink Release Property>

### (Ink Release Property Test Samples)

Each of the above printed matters that had been fully dried after printing was taken by 1.5 g and shredded into small pieces of MD 15 mm × TD 25 mm or so, to obtain ink release property test samples.

### (Preparation of Release Solution 1 Comprising Water)

Release solution 1 comprising water alone.

### (Preparation of Release Solution 2 Comprising Aqueous Alkali Solution)

2.0 parts by mass of sodium hydroxide were added to 98.0 parts by mass of water and dissolved under agitation, to obtain release solution 2 comprising aqueous alkali solution.

### (Preheating of Release Solution 1)

100 grams of release solution 1 comprising water were put in each HDPE (high-density polyethylene) container of 200 cc in volume, and the container was heated in a hot water bath until the solution temperature reached 70°C.

### (Preheating of Release Solution 2)

100 grams of release solution 2 comprising aqueous alkali solution were put in each HDPE (high-density polyethylene) container of 200 cc in volume, and the container was heated in a hot water bath until the solution temperature reached 70°C.

### (Releasing)

After the release solutions had reached 70°C, the above ink release property test samples were put into release solution 1 comprising water and release solution 2 comprising aqueous alkali solution above, respectively, and the mixtures were agitated using stainless-steel agitation blades of 25 mm in blade diameter for 60 minutes in the case of release solution 1 comprising water, or 30 minutes in the case of release solution 2 comprising aqueous alkali solution. After the agitation, the HDPE (high-density polyethylene) containers were removed from the hot water baths and let stand stationary for 5 minutes at room temperature. The release solutions and film pieces of respective types were separated using a stainless-steel net of approx. 2 mm in mesh size.

### (Rinsing)

The released films of respective types were transferred to a 200-cc HDPE container to which 100 g of water were added. The water was agitated for 5 minutes using stainless-steel agitation blades of 25 mm in blade diameter. After the water had been left stationary for 5 minutes, the films of respective types and water were separated using a stainless-steel net. After drying the film pieces of respective types, the release property of the ink from the films of respective types was visually evaluated.

Releasing conditions (alkali): Agitate for 30 minutes in a 70°C, 2% aqueous sodium hydroxide solution.

### (Evaluation Criteria)

O: The ink film completely peels off from the film as a film piece.
×: The ink film does not peel.

Releasing conditions (hot water): Agitate for 60 minutes in 70°C hot water.

### (Evaluation Criteria)

O: The ink film completely peels off from the film as a film piece.
×: It does not peel.

### Tape Adhesion Strength (Each Printed Matter Immediately after Printing and Drying)

On the treated side of each of the respective types of films, each releasing primer composition obtained by diluting the above polybutadiene-based compound as deemed appropriate as shown in Table 1 above in order to achieve a specified coating amount was coated using a gravure printing machine and dried under the above conditions. On the surface of each of these layers constituted by the polybutadiene-based compound, diluted ink composition 1, obtained by adding an 80/20 mixed solvent of normal propyl acetate/isopropyl alcohol to back printing ink composition 1 and diluting the mixture to 16 seconds using Zahn Cup No. 3 manufactured by Rigosha & Co., Ltd., was further printed using a gravure printing machine and dried under the following conditions, to obtain each printed matter.

An adhesive cellophane tape was adhered to the printed side of each of the obtained printed matters and quickly peeled, to evaluate the adhesion property according to the evaluation criteria below based on the degree of peeling of the printed film.

### (Evaluation Criteria)

O: The printed film peels from the film by less than 5% in area ratio.
△: The printed film peels from the film by 5% or more but less than 30 in area ratio.
×: The printed film peels from the film by 30% or more in area ratio.

### Lamination Strength

Once obtained, each laminated printed matter was cut to 15 mm in width and measured for T peel-strength using a peel tester manufactured by Yasuda Seiki Seisakusho, Ltd.

### (Evaluation Criteria)

O: The peel strength is 1.2 N/15 mm or higher.
△: The peel strength is 0.7 N/15 mm or higher but under 1.2 N/15 mm.
×: The peel strength is under 0.7 N/15 mm.

### Anti-blocking Property

On the treated side of each of the respective types of films, each releasing primer composition, obtained by diluting the above polybutadiene-based compound as deemed appropriate as shown in Table 1 above in order to achieve a specified coating amount, was coated using a gravure printing machine and dried under the above conditions. On the surface of each of these layers constituted by the polybutadiene-based compound, diluted ink composition 1 obtained by adding an 80/20 mixed solvent of normal propyl acetate/isopropyl alcohol to back printing ink composition 1 and diluting the mixture to 16 seconds using Zahn Cup No. 3 manufactured by Rigosha & Co., Ltd., was further printed using a gravure printing machine and dried under the following conditions; thereafter, the printed side of each printed matter and untreated side of each film were put together and left standing for 12 hours at 40°C under a load of 400 g/cm², after which each film was peeled to evaluate the anti-blocking property based on the peeling condition.

### (Evaluation Criteria)

O: The film peels without resistance and there is no transfer of the ink film at all.
△: Resistance is felt, but there is no transfer of the ink film at all.
×: Transfer of the ink film is observed.

With respect to the back printing ink compositions, the evaluations below were the same regardless of which of the back printing ink compositions using three types of polyurethane resin varnishes (polyurethane resin varnish 1 (biomass polyurethane), polyurethane resin varnish 2 (not biomass polyurethane), polyurethane resin varnish 3 obtained using a compound resulting from ketiminating the amino groups in a polyamine compound with a ketone compound) was used. Accordingly, the results pertaining to polyurethane resin varnish 1 (biomass polyurethane) are shown below.

Table 24 shows the results for laminate structure 1, Table 25 shows the results for laminate structure 2, Table 26 shows the results for laminate structure 3, and Table 27 shows the results for laminate structure 4.

**[Table 24]**

| Releasing primer composition | Coating amount of releasing primer composition in solids content (g/m²) | Releasing conditions (alkali) | Releasing conditions (hot water) | Adhesion property immediately after printing | Lamination strength | Anti-blocking property |
|---|---|---|---|---|---|---|
| Not coated | - | x | x | Δ | ○ | ○ |
| T-180E | 0.06 | ○ | ○ | ○ | ○ | ○ |
| | 0.18 | ○ | ○ | ○ | ○ | ○ |

**[Table 25]**

| Releasing primer composition | Coating amount of releasing primer composition in solids content (g/m²) | Releasing conditions (alkali) | Releasing conditions (hot water) | Adhesion property immediately after printing | Lamination strength | Anti-blocking property |
|---|---|---|---|---|---|---|
| Not coated | - | x | x | ○ | ○ | ○ |
| T-180E | 0.06 | ○ | ○ | ○ | ○ | ○ |
| | 0.18 | ○ | ○ | ○ | ○ | ○ |

**[Table 26]**

| Releasing primer composition | Coating amount of releasing primer composition in solids content (g/m²) | Releasing conditions (alkali) | Releasing conditions (hot water) | Adhesion property immediately after printing | Lamination strength | Anti-blocking property |
|---|---|---|---|---|---|---|
| Not coated | - | x | x | ○ | ○ | ○ |
| T-180E | 0.06 | ○ | ○ | ○ | ○ | ○ |
| | 0.18 | ○ | ○ | ○ | ○ | ○ |

**[Table 27]**

| Releasing primer composition | Coating amount of releasing primer composition in solids content (g/m²) | Releasing conditions (alkali) | Releasing conditions (hot water) | Adhesion property immediately after printing | Lamination strength | Anti-blocking property |
|---|---|---|---|---|---|---|
| Not coated | - | x | x | △ | ○ | ○ |
| T-180E | 0.06 | ○ | ○ | ○ | ○ | ○ |
| | 0.18 | ○ | ○ | ○ | ○ | ○ |

### <Comparative Examples of Back Printing>

As comparative examples, dry laminates 1 and 2 and extruded laminates 1 and 2 were created. Dry laminate 1 in the comparative examples was obtained using the same materials and method as with dry laminate 1 in the examples, except that the primer composition used was changed. Similarly, below, dry laminate 2 in the comparative examples, dry laminate 1 in the comparative examples, and dry laminate 2 in the comparative examples were obtained using the same materials and methods as with dry laminate 2 in the examples, extruded laminate 1 in the examples, and extruded laminate 2 in the examples, respectively, except that the primer composition used was changed.

With dry laminates 1 and 2 and extruded laminates 1 and 2 in the comparative examples, two types including one using the PVA below and another using the general-purpose polyurethane below, as the releasing primer composition, were used for each laminate.

### <Dry Laminate 1 in Comparative Examples (Base Material Film: Standard Film)>

(It should be noted that, also with dry laminate 2 in the comparative examples and extruded laminates 1 and 2 in the comparative examples below, samples that each use one of the following two types of releasing primer compositions in the comparative examples were created for each laminate structure, just like with dry laminate 1 in the comparative examples. Accordingly, the laminate structures in the comparative examples were obtained in two types including one using the PVA below and another using the general-purpose polyurethane below.)

On one side (treated side) of P-2161 #25, each releasing primer composition in the comparative examples that had been diluted as deemed appropriate to achieve a specified coating amount was coated using a gravure printing machine and dried under the following conditions to achieve laminate structure 1 below. On the surface of each such releasing primer composition layer, diluted ink composition 1 obtained by adding an 80/20 mixed solvent of normal propyl acetate/isopropyl alcohol to back printing ink composition 1 and diluting the mixture to 16 seconds using Zahn Cup No. 3 manufactured by Rigosha & Co., Ltd., was further printed using a gravure printing machine and dried under the following conditions, to obtain a printed matter.

Thereon, an adhesive (TAKELAC A-969V/TAKELAC A-5, solids content 30% by mass) was coated, and an aluminum vapor deposition CPP film was further adhered using a dry lamination machine, to create a laminated printed matter of structure below.

### <Dry Laminate 2 in Comparative Examples (Base Material Film: Transparent Vapor Deposition Film)>

On the treated side of a film of each type, or namely transparent vapor deposition PET or transparent vapor deposition NY, each releasing primer composition in the comparative examples below that had been diluted to achieve a specified coating amount was coated using a gravure printing machine and dried under the following conditions to achieve laminate structure 2 below, to obtain a printed matter. Each diluted ink composition obtained by adding an 80/20 mixed solvent of normal propyl acetate/isopropyl alcohol and diluting the mixture to 16 seconds using Zahn Cup No. 3 manufactured by Rigosha & Co., Ltd., was further printed using a gravure printing machine and dried under the following conditions, to obtain a printed matter.

Thereon, an adhesive (TAKELAC A-515/TAKELAC A-50, solids content 30% by mass) was coated, and RXC-22 #60 was further adhered using a dry lamination machine, to create a laminated printed matter of structure 2 below.

### <Extruded Laminate 1 in Comparative Examples>

On the treated side of PET or NY or transparent vapor deposition PET or transparent vapor deposition NY, each releasing primer composition in the comparative examples below that had been diluted to achieve a specified coating amount was coated using a gravure printing machine and dried under the following conditions to achieve laminate structure 3 below, to obtain two resin base materials with a releasing primer layer already formed on them. Thereon, each diluted ink composition obtained by adding an 80/20 mixed solvent of normal propyl acetate/isopropyl alcohol and diluting the mixture to 16 seconds using Zahn Cup No. 3 manufactured by Rigosha & Co., Ltd., was further printed using a gravure printing machine and dried under the following conditions, to obtain a printed matter.

Thereon, an AC agent (TAKELAC A-3210/TAKELAC A-3072, solids content 7% by mass) was coated, and molten polyethylene was further layered using an extrusion lamination machine, to create a laminated printed matter of structure 3 below.

### <Extruded Laminate 2 in Comparative Examples>

On one side (treated side) of an OPP film, each releasing primer composition in the comparative examples below that had been diluted to achieve a specified coating amount was coated using a gravure printing machine and dried under the following conditions to achieve laminate structure 4 below, to obtain two resin base materials with a releasing primer layer already formed on them. On the surface of each such releasing primer composition, each diluted ink composition obtained by adding an 80/20 mixed solvent of normal propyl acetate/isopropyl alcohol to each back printing ink composition and diluting the mixture to 16 seconds using Zahn Cup No. 3 manufactured by Rigosha & Co., Ltd., was further printed using a gravure printing machine and dried under the following conditions, to obtain a printed matter.

Thereon, an AC agent (EPOMIN P-1000, solids content 0.7% by mass) was coated, and molten polyethylene was further layered using an extrusion lamination machine, to create a laminated printed matter of structure 4 below.

### (Method for Coating/Conditions for Coating Each Releasing Primer Composition in Comparative Examples)

Coating machine: Gravure printing machine
Coating speed: 100 m/min
Printing plate: Helio 175 lines/inch (130°) solid plate
Drying temperature: 70°C

### (Method for Printing/Conditions for Printing Back Printing Ink Composition)

Coating machine: Gravure printing machine
Coating speed: 100 m/min
Printing plate: Helio 175 lines/inch (130°) solid plate
Drying temperature: 55°C

### Laminate Structure 1 in Comparative Example

(It should be noted that, also with laminate structures 2 to 4 in the comparative examples below, samples that each use one of the following two types of releasing primer compositions in the comparative examples were created for each laminate structure, just like with laminate structure 1 in the comparative examples. Accordingly, the laminate structures in the comparative examples were obtained in two types including one using the PVA below and another using the general-purpose polyurethane below.)
: OPP film/each releasing primer composition in comparative examples/each back printing ink composition/adhesive (TAKELAC A-969V/TAKELAC A-5, solids content 30% by mass)/aluminum vapor deposition CPP film
OPP film: Corona-discharged biaxially oriented propylene film P-2161 #25 (thickness 25 µm) (Toyobo Co., Ltd.)
Adhesive (TAKELAC A-969V/TAKELAC A-5): Aromatic ether-based 2-liquid adhesive, solids content 30% by mass (Mitsui Chemicals, Inc.)
Aluminum vapor deposition CPP film: Product name CP WS (Mitsui Chemicals Tohcello, Inc.)

### Laminate Structure 2 in Comparative Examples

: Transparent vapor deposition PET film or transparent vapor deposition NY film/following releasing primer composition in comparative examples/each back printing ink composition/adhesive (TAKELAC A-515/TAKELAC A-50, solids content 30% by mass) solids content 30% by mass)/RXC-22 #60
Transparent vapor deposition PET film: GL-ARH-F (Toppan Printing Co., Ltd.)
Transparent vapor deposition NY film: GL-ARH-W (Toppan Printing Co., Ltd.)
Adhesive (TAKELAC A-515/TAKELAC A-50): 2-liquid adhesive, solids content 30% by mass (Mitsui Chemicals, Inc.)
RXC-22 #60: Cast propylene film (Mitsui Chemicals Tohcello, Inc.)

### Laminate Structure 3 in Comparative Examples

: PET film or NY film or transparent vapor deposition PET film or transparent vapor deposition NY film/each releasing primer composition in comparative examples/each back printing ink composition/AC agent (TAKELAC A-3210/TAKELAC A-3072, solids content 30% by mass)/molten polyethylene
PET film: Polyester film E-5102 #12 (Toyobo Co., Ltd.)
NY film: Nylon film ON-15 #12 (Unitika Ltd.)
Transparent vapor deposition PET film: GL-ARH-F (Toppan Printing Co., Ltd.)
Transparent vapor deposition NY film: GL-ARH-W (Toppan Printing Co., Ltd.)
AC agent (TAKELAC A-3210/TAKELAC A-3072): Solids content 30% by mass (Mitsui Chemicals, Inc.)
Molten polyethylene: SUMIKATHENE L705, resin temperature 355°C (Sumitomo Chemical Co., Ltd.)

### Laminate Structure 4 in Comparative Examples

: OPP film/each releasing primer composition in comparative examples/each back printing ink composition/AC agent (EPOMIN P-1000, solids content 0.7% by mass)/molten polyethylene
OPP film: Corona-discharged biaxially oriented propylene film P-2161 #25 (Toyobo Co., Ltd.)
AC agent (EPOMIN P-1000): Polyethyleneimine, solids content 0.7% by mass (Three Nippon Shokubai Co., Ltd.)
Molten polyethylene: SUMIKATHENE L705, resin temperature 355°C (Sumitomo Chemical Co., Ltd.)

### (Releasing Primer Compositions in Comparative Examples)

PVA: POVAL 28-98 (polyvinyl alcohol of 90% or higher in degree of saponification) (Kuraray Co., Ltd.)
General-purpose polyurethane: Aforementioned polyurethane resin 2 (not biomass polyurethane)

With respect to the back printing ink compositions, the evaluations below were the same regardless of which of the back printing ink compositions using three types of polyurethane resin varnishes (polyurethane resin varnish 1 (biomass polyurethane), polyurethane resin varnish 2 (not biomass polyurethane), polyurethane resin varnish 3 obtained using a compound resulting from ketiminating the amino groups in a polyamine compound with a ketone compound) was used. Accordingly, the results pertaining to polyurethane resin varnish 1 (biomass polyurethane) are shown below.

Table 6 shows the results for laminate structure 1 in the comparative examples, Table 7 shows the results for laminate structure 2 in the comparative examples, Table 8 shows the results for laminate structure 3 in the comparative examples, and Table 9 shows the results for laminate structure 4 in the comparative examples.

Ink release property, adhesion property and lamination strength were evaluated according to the same methods and criteria described above.

It should be noted that ink release property was evaluated using the aqueous alkali solution of release solution 2. Release solution 2 was obtained by adding 2 parts by mass of sodium hydroxide to 98.0 parts by mass of water and dissolving the sodium hydroxide under agitation.

**[Table 28]**

| Releasing primer composition | Coating amount of releasing primer composition in solids content (g/m²) | Releasing conditions (alkali) | Adhesion property immediately after printing | Lamination strength |
|---|---|---|---|---|
| PVA | 0.18 | ○ | x | x |
| General-purpose polyurethane | 0.18 | x | ○ | ○ |

**[Table 29]**

| Releasing primer composition | Coating amount of releasing primer composition in solids content (g/m²) | Releasing conditions (alkali) | Adhesion property immediately after printing | Lamination strength |
|---|---|---|---|---|
| PVA | 0.18 | ○ | x | x |
| General-purpose polyurethane | 0.18 | x | ○ | ○ |

**[Table 30]**

| Releasing primer composition | Coating amount of releasing primer composition in solids content (g/m²) | Releasing conditions (alkali) | Adhesion property immediately after printing | Lamination strength |
|---|---|---|---|---|
| PVA | 0.18 | ○ | x | x |
| General-purpose polyurethane | 0.18 | x | ○ | ○ |

**[Table 31]**

| Releasing primer composition | Coating amount of releasing primer composition in solids content (g/m²) | Releasing conditions (alkali) | Adhesion property immediately after printing | Lamination strength |
|---|---|---|---|---|
| PVA | 0.18 | ○ | x | x |
| General-purpose polyurethane | 0.18 | x | ○ | ○ |

According to the results shown in Tables 24 to 27, the films could be released smoothly using both the water and aqueous alkali solution when the releasing primer compositions conforming to the present invention were coated. They also had excellent adhesion property immediately after printing, lamination strength, and anti-blocking property.

However, release property and excellent lamination strength could not be achieved simultaneously when the releasing primer compositions conforming to the present invention were not coated and also when the PVA and general-purpose polyurethane in Tables 28 to 31 were coated.

With regard to these comparative examples, the same results were obtained when polyurethane resin varnishes 2 and 3 were adopted in place of polyurethane resin varnish 1.

### <D2. Examples of Front Printing Using Releasing Primer Composition Containing Polybutadiene-based Compound>

### (Polyurethane Resin Varnish)

In a four-way flask fitted with an agitator, a cooling tube, and a nitrogen gas introduction tube, 100 parts by mass of a 3-methyl-1,5-pentylene adipate diol of 2,000 in number-averaged molecular weight, 100 parts by mass of a polypropylene glycol of 2,000 in mass-averaged molecular weight, 17.6 parts by mass of isophorone diisocyanate, and 21.0 parts by mass of hydrogenated MDI were added, and the materials were reacted for 6 hours at 100 to 105°C while introducing nitrogen gas. After letting the mixture cool to near room temperature, 523.3 parts by mass of ethyl acetate and 223.8 parts by mass of isopropyl alcohol were added, after which 8.2 parts by mass of isophoronediamine were added to extend the chain, and 0.35 parts by mass of monoethanolamine were further added to cause reaction, and subsequently 1.3 parts by mass of isophoronediamine and 0.6 parts by mass of diethylenetriamine were added to terminate the reaction, to obtain a urethane resin (polyurethane resin varnish (solids content 25% by mass)).

### (CAB)

Cellulose acetate butyrate (Eastman Chemical Company, number-averaged molecular weight 70,000, degree of butyrylation 35 to 39%)

### (Nitrocellulose)

35 parts by mass of nitrocellulose (in a hydrate state, achieved with 30% by weight of water) (DLX5-8, Nobel NC Co., Ltd.) were dissolved in a mixed solvent comprising 58 parts of ethyl acetate and 7 parts of isopropyl alcohol, to obtain a nitrocellulose solution of 35% by mass in solids content.

### (Polyamide Resin)

Thermoplastic polyamide resin using tall oil fatty acid as a reaction material (Mw 8,000, acid value 2, softening point 110°C)
(Polyvinyl Chloride)
   SOLBIN TA5R (Nissin Chemical Industry Co., Ltd.)
(Acrylic Resin)
   HIROS-X/RL-4032 (solids content 40% by mass) (Seiko PMC Corporation)
(Polyethylene Wax)
   PA-60 (solids content 25% by mass) (Polycon Co., Ltd.)
(Titanium Oxide)
   TIPAQUE PFR209 (Ishihara Sangyo Kaisha, Ltd.)

### <Preparation of Printing Ink Composition>

According to the mass percentages (% by mass) in Table 32 below, the respective materials were kneaded with a paint conditioner to prepare a printing ink composition. Also, the obtained printing ink composition was gravure-printed under the following conditions to obtain a printed matter. The obtained printed matter was evaluated for adhesion property and release property according to the evaluation methods below.

### <Preparation of Printed Matter>

On a corona-discharged oriented polypropylene film (product name OPP P-2161, 25 µm, Toyobo Co., Ltd.), a polybutadiene-based compound (TITABOND-180E) that had been diluted as deemed appropriate to achieve a specific coating amount was coated using a gravure printing machine and dried under the following conditions, to obtain a layer constituted by the polybutadiene-based compound of the coating amount in Table 11. Also, each diluted front printing ink composition was obtained by adding a solvent to each front printing ink composition in Table 10 below so as not to change the types of the solvents contained in each front printing ink composition or ratio by mass of the content of each solvent, and then diluting the mixture to 16 seconds using Zahn Cup No. 3 by Rigosha & Co., Ltd. Next, on the surface of the layer constituted by the above polybutadiene-based compound, each diluted front printing ink composition was printed using a gravure printing machine and dried under the following conditions, to obtain each front printing ink composition-printed matter. This printed matter of each front printing ink composition was taken by 1.5 g and shredded into small pieces of MD 15 mm × TD 25 mm or so, to obtain ink layer peel test samples.

### (Method for Coating/Conditions for Releasing Primer Composition)

Coating machine: Gravure printing machine
Coating speed: 100 m/min
Printing plate: Helio 175 lines/inch (130°) solid plate
Drying temperature: 70°C

### (Method for Printing/Conditions for Printing Front Printing Ink Composition)

Coating machine: Gravure printing machine
Coating speed: 100 m/min
Printing plate: Helio 175 lines/inch (130°) solid plate
Drying temperature: 55°C

Ink release property and adhesion property were evaluated according to the same methods and criteria described above.

### <Evaluation of Adhesion Property with Respect to Base Material>

An adhesive cellophane tape was adhered to the printed side of each of the printed matters obtained per "Preparation of Printed Matter" and quickly peeled, to evaluate the adhesion property according to the evaluation criteria below based on the degree of peeling of the printed film.

### (Evaluation Criteria)

O: The printed film peels from the film by less than 5% in area ratio.
△: The printed film peels from the film by 5% or more but less than 30% in area ratio
×: The printed film peels from the film by 30 or more in area ratio.

<Method of Printed Layer Peel Test>

### (Preparation of Release Solution 1 Comprising Water)

Release solution 1 comprising water alone.

### (Preparation of Release Solution 2 Comprising Aqueous Alkali Solution)

2.0 parts by mass of sodium hydroxide were added to 98.0 parts by mass of water and dissolved under agitation, to obtain release solution 2 comprising aqueous alkali solution.

### (Preheating of Release Solution 1)

100 grams of release solution 1 comprising water were put in each HDPE (high-density polyethylene) container of 200 cc in volume, and the container was heated in a hot water bath until the solution temperature reached 70°C.

### (Preheating of Release Solution 2)

100 grams of release solution 2 comprising aqueous alkali solution were put in each HDPE (high-density polyethylene) container of 200 cc in volume, and the container was heated in a hot water bath until the solution temperature reached 70°C.

### (Releasing)

After each release solution had reached 70°C, the above ink layer peel test samples were put into the release solution and the mixture was agitated using stainless-steel agitation blades of 25 mm in blade diameter for 60 minutes in the case of release solution 1 comprising water, or 30 minutes in the case of release solution 2 comprising aqueous alkali solution. After the agitation, the HDPE (high-density polyethylene) container was removed from the hot water bath and let stand stationary for 5 minutes at room temperature. The release solution and film pieces were separated using a stainless-steel net of approx. 2 mm in mesh size.

### (Rinsing)

The released films were transferred to a 200-cc HDPE container to which 100 g of water were added. The water was agitated for 5 minutes using stainless-steel agitation blades of 25 mm in blade diameter. After the water had been left stationary for 5 minutes, the film pieces and water were separated using a stainless-steel net. After drying the film pieces, the release property of the ink from the films was visually evaluated.

Releasing conditions (alkali): Agitate for 30 minutes in a 70°C, 2% aqueous sodium hydroxide solution.

### (Evaluation Criteria)

O: The ink film completely peels off from the film as a film piece.
×: The ink film does not peel.

Releasing conditions (hot water): Agitate for 60 minutes in 70°C hot water.

### (Evaluation Criteria)

O: The ink film completely peels off from the film as a film piece.
×: The ink film does not peel.

**[Table 32]**

| | Front printing ink compositions | | | | | | | |
|---|---|---|---|---|---|---|---|---|
| | 1 | 2 | 3 | 4 | 5 | 6 | 7 | 8 |
| Urethane resin (solids content 25%) | 20.0 | 28.0 | | | | | 20.0 | |
| CAB | 5.0 | 3.0 | | | | 3.0 | | |
| Nitrocellulose (solids content 35%) | | | 12.0 | 41.0 | 12.0 | | | |
| Polyamide resin | | | | | 7.0 | | | |
| Polyvinyl chloride | | | | | | | 5.0 | 10.0 |
| Acrylic resin (solids content 40%) | | | 17.5 | | | 17.5 | | |
| Polyethylene wax (solids content 25%) | 3.0 | 3.0 | 3.0 | 3.0 | 3.0 | 3.0 | 3.0 | 3.0 |
| Titanium oxide | 30.0 | 30.0 | 30.0 | 30.0 | 30.0 | 30.0 | 30.0 | 30.0 |
| Ethyl acetate | 5.5 | 20.0 | 12.5 | 11.0 | 8.0 | 3.5 | | |
| IPA | 6.0 | 3.5 | 25.0 | 15.0 | 8.0 | 25.0 | 6.0 | 9.0 |
| NPAc | 30.5 | 12.5 | | | | 18.0 | | 25.0 |
| Methylcyclohexane | | | | | 24.0 | | | |
| Toluene | | | | | | | 15.0 | |
| MEK | | | | | | | 21.0 | 23.0 |
| Methanol | | | | | 8.0 | | | |
| Total | 100.0 | | | | | | | |

**[Table 33]**

| Front printing ink composition | Coating amount of releasing primer composition in solids content (g/m²) | Releasing conditions (alkali) | Releasing conditions (hot water) | Adhesion property immediately after printing |
|---|---|---|---|---|
| 1 | 0.18 | ○ | ○ | ○ |
| 2 | 0.18 | ○ | ○ | ○ |
| 3 | 0.18 | ○ | ○ | ○ |
| 4 | 0.18 | ○ | ○ | ○ |
| 5 | 0.18 | ○ | ○ | ○ |
| 6 | 0.18 | ○ | ○ | ○ |
| 7 | 0.18 | ○ | ○ | ○ |
| 8 | 0.18 | ○ | ○ | ○ |

When the releasing primer composition (polybutadiene-based compound) in Table 11 was coated, all of front printing ink compositions 1 to 8 could be released regardless of whether the water or aqueous alkali solution was used as a release solution, and their adhesive force with respect to the corona-discharged oriented polypropylene film (product name OPP P-2161, 25 µm, Toyobo Co., Ltd.) was also good.

### <D3. Examples of Shrink Printing Using Releasing Primer Composition Containing Polybutadiene-based Compound>

### (Synthesis of Acrylic Resin)

Used was that obtained by polymerization according to a solution polymerization based on the monomer makeup [n-butyl methacrylate/n-butyl acrylate/2-hydroxyethyl methacrylate/methyl methacrylate = 35/20/15/30 (ratio by mass)], followed by evaporation of the solvent. Its mass-averaged molecular weight was 60,000 and hydroxyl group value was 60 mgKOH/g.

### (Manufacture of Shrink-packaging Printing Ink Composition 1)

10.0 parts by mass of a pigment (C. I. PB 15:4), 10.0 parts by mass of the above acrylic resin, 3.5 parts by mass of a nitrocellulose (product name: LIG 1/8, Snpe Japan K.K.), 20.0 parts by mass of methylcyclohexane, 35.5 parts by mass of isopropyl alcohol and 21.0 parts by mass of ethyl acetate were kneaded and dispersed according to a conventional method, to manufacture shrink-packaging printing ink composition 1.

### (Manufacture of Shrink-packaging Printing Ink Composition 2)

10.0 parts by mass of a pigment (C. I. PB 15:4), 9.0 parts by mass of a carboxyl group-containing acrylic resin (monomer makeup: MAA/MMA/BMA, theoretical acid value 3 mgKOH/g, mass-averaged molecular weight 60,000), 10.0 parts by mass of isopropyl alcohol, and 15.0 parts by mass of ethyl acetate were kneaded using a paint conditioner, to which 1.2 parts by mass of the above carboxyl group-containing acrylic resin, 5.0 parts by mass of a cellulose acetate butyrate (CAB-381-0.5, Eastman Chemical Company, number-averaged molecular weight 30,000), 5.0 parts by mass of a rosin ester (acid value 7 mgKOH/g), 1.0 part by mass of epoxylated soybean oil, 0.5 parts by mass of stearic acid amide, 2.2 parts by mass of SPRAY 30 (Sasol Limited), 0.3 parts by mass of BYK-094 (BYK-Chemie GmbH), 4.5 parts by mass of normal propyl alcohol, 27.4 parts by mass of isopropyl alcohol, and 9.1 parts by mass of ethyl acetate were added and the materials were mixed, to prepare shrink-packaging printing ink composition 2.

### (Preparation of Printed Matter)

On a crystallizable PET (polyethylene terephthalate) shrink film, the above polybutadiene-based compound (TITABOND T-180E) that had been diluted as deemed appropriate to achieve a specified coating amount was coated using a gravure printing machine and dried under the following conditions, to obtain a layer constituted by the polybutadiene-based compound in the coating amount shown in Table 34. Also, each diluted shrink-packaging printing ink composition was obtained by adding a solvent to each of the shrink-packaging printing ink compositions so as not to change the types of the solvents contained in each shrink-packaging printing ink composition or ratio by mass of the content of each solvent, and then diluting the mixture to 16 seconds using Zahn Cup No. 3 by Rigosha & Co., Ltd. Next, on the surface of the layer constituted by the above polybutadiene-based compound, each diluted shrink-packaging printing ink composition was printed using a gravure printing machine and dried under the following conditions, to obtain each printed matter. This printed matter of each shrink-packaging printing ink composition was taken by 1.5 g and shredded into small pieces of MD 15 mm × TD 25 mm or so, to obtain printed layer peel test samples.

### (Method for Coating/Conditions for Coating Releasing Primer Composition)

Coating machine: Gravure printing machine
Coating speed: 100 m/min
Printing plate: Helio 175 lines/inch (130°) solid plate
Drying temperature: 70°C

### (Method for Printing/Conditions for Printing Shrink-packaging Printing Ink Composition)

Coating machine: Gravure printing machine
Coating speed: 100 m/min
Printing plate: Helio 175 lines/inch (130°) solid plate
Drying temperature: 55°C

### <Evaluation of Adhesion Property with Respect to Base Material>

An adhesive cellophane tape was adhered to the printed side of each of the printed matters obtained per "Preparation of Printed Matter" and quickly peeled, to evaluate the adhesion property according to the evaluation criteria below based on the degree of peeling of the printed film.

### (Evaluation Criteria)

O: The printed film peels from the film by less than 5% in area ratio.
△: The printed film peels from the film by 5% or more but less than 30 in area ratio
×: The printed film peels from the film by 30% or more in area ratio.

### <Method of Printed Layer Peel Test>

### (Preparation of Release Solution 1 Comprising Water)

Release solution 1 comprising water alone.

### (Preparation of Release Solution 2 Comprising Aqueous Alkali Solution)

2.0 parts by mass of sodium hydroxide were added to 98.0 parts by mass of water and dissolved under agitation, to obtain release solution 2 comprising aqueous alkali solution.

### (Preheating of Release Solution 1)

100 grams of release solution 1 comprising water were put in each HDPE (high-density polyethylene) container of 200 cc in volume, and the container was heated in a hot water bath until the solution temperature reached 70°C.

### (Preheating of Release Solution 2)

100 grams of release solution 2 comprising aqueous alkali solution were put in each HDPE (high-density polyethylene) container of 200 cc in volume, and the container was heated in a hot water bath until the solution temperature reached 70°C.

### (Releasing)

After the release solutions had reached 70°C, the above printed layer peel test samples were put into each release solution and the mixture was agitated using stainless-steel agitation blades of 25 mm in blade diameter for 60 minutes in the case of release solution 1 comprising water, or 30 minutes in the case of release solution 2 comprising aqueous alkali solution. After the agitation, the HDPE container was removed from the hot water bath and let stand stationary for 5 minutes at room temperature. The release solution and PET (polyethylene terephthalate) film pieces were separated using a stainless-steel net of approx. 2 mm in mesh size.

Releasing conditions (alkali): Agitate for 30 minutes in a 70°C, 2% aqueous sodium hydroxide solution.

### (Evaluation Criteria)

O: The ink film completely peels off from the film as a film piece.
×: The ink film does not peel.

Releasing conditions (hot water): Agitate for 60 minutes in 70°C hot water.

### (Evaluation Criteria)

O: The ink film completely peels off from the film as a film piece.
×: The ink film does not peel.

**[Table 34]**

| Shrink-packaging printing ink composition | Coating amount of releasing primer composition in solids content (g/m²) | Releasing conditions (alkali) | Releasing conditions (hot water) | Adhesion property immediately after printing |
|---|---|---|---|---|
| 1 | 0.18 | ○ | ○ | ○ |
| 2 | 0.18 | ○ | ○ | ○ |

Table 34 shows that, when the polybutadiene-based compound was coated, both shrink-packaging printing ink compositions 1 and 2 could be released regardless of whether the water or aqueous alkali solution was used as a release solution, and their adhesive force with respect to the crystallizable PET shrink film was also good.

### <D4. Examples of Printing on Paper Base Material Side of Laminated Paper Using Releasing Primer Composition Containing Polybutadiene-based Compound>

### (Manufacture of Aqueous Flexographic Printing Ink Composition)

### <Method for Manufacturing Aqueous Printing Ink>

A mixture of 15 parts by mass of a pigment (phthalocyanine blue, C. I. Pigment Blue 15:3), 15 parts by mass of an alkali-soluble type water-soluble resin (JONCRYL HPD-671, manufactured by BASF SE, solids content 25%), 0.5 parts by mass of an (ethylene oxide/propylene oxide) block polymer ((EO/PO) block polymer, HLB value 14, Mw 16,000), 0.03 parts by mass of dibutyl glycol, and 22.97 parts by mass of water was kneaded and dispersed in a bead mill, after which 43.25 parts by mass of a styrene-acrylic-based resin emulsion (acid value 38 mgKOH/g, glass transition temperature 9°C, solids content 38.5%), 2.5 parts by mass of a polyethylene wax (CHEMIPEARL W-100, solids content 35% by mass, Mitsui Chemicals, Inc.), and 0.75 parts by mass of a defoaming agent (SN Defoamer 777 #C, San Nopco Limited) were added and the materials were mixed, to obtain an aqueous flexographic printing ink composition.

### (Preparation of Printed Matter)

On a straight-chain low-density polyethylene film (TUX-HC #50, thickness 25 µm, Mitsui Chemicals Tohcello, Inc.), each releasing primer composition obtained by diluting the polybutadiene-based compound as shown in Table 13 below was coated using a gravure printing machine and dried under the following conditions. Thereon, an adhesive (TAKELAC A-969V/TAKELAC A-5, solids content 30% by mass) was coated, and the unglazed side of a thick machine-glazed bleached kraft paper (OK BLIZZARD, 770 g/m², Oji Materia Co., Ltd.) was further adhered using a dry lamination machine, to obtain a laminated paper pursuant to the present invention. On the surface of this paper, a drawdown of the flexographic printing ink composition was preformed using a 200-line hand-proofer, followed by drying, to obtain a printed matter. Each such printed matter was taken by 1.5 g and shredded into small pieces of MD 15 mm × TD 25 mm or so, to obtain printed layer peel test samples.

### (Method for Coating/Conditions for Coating Releasing Primer Composition)

Coating machine: Gravure printing machine
Coating speed: 100 m/min
Printing plate: Helio 175 lines/inch (130°) solid plate
Drying temperature: 70°C
Laminate Structure:
   TUX-HC #50/polybutadiene-based compound/adhesive (TAKELAC A-969V/TAKELAC A-5, solids content 30%)/OK BLIZZARD (70 g/m²)/flexographic printing ink composition

### <Method of Printed Layer Peel Test>

### (Preparation of Release Solution 1 Comprising Water)

Release solution 1 comprising water alone.

### (Preparation of Release Solution 2 Comprising Aqueous Alkali Solution)

2.0 parts by mass of sodium hydroxide were added to 98.0 parts by mass of water and dissolved under agitation, to obtain release solution 2 comprising aqueous alkali solution.

### (Preheating of Release Solution 1)

100 grams of release solution 1 comprising water were put in each HDPE (high-density polyethylene) container of 200 cc in volume, and the container was heated in a hot water bath until the solution temperature reached 70°C.

### (Preheating of Release Solution 2)

100 grams of release solution 2 comprising aqueous alkali solution were put in each HDPE (high-density polyethylene) container of 200 cc in volume, and the container was heated in a hot water bath until the solution temperature reached 70°C.

### (Releasing)

After the release solutions had reached 70°C, the above printed layer peel test samples were put into each release solution and the mixture was agitated using stainless-steel agitation blades of 25 mm in blade diameter for 60 minutes in the case of release solution 1 comprising water, or 30 minutes in the case of release solution 2 comprising aqueous alkali solution. After the agitation, the HDPE container was removed from the hot water bath and let stand stationary for 5 minutes at room temperature. The release solution and PET (polyethylene terephthalate) film pieces were separated using a stainless-steel net of approx. 2 mm in mesh size.

Releasing conditions (alkali): Agitate for 30 minutes in a 70°C, 2% aqueous sodium hydroxide solution.

### (Evaluation Criteria)

O: The paper completely peels off from the film.
×: The paper does not peel.

Releasing conditions (hot water): Agitate for 60 minutes in 70°C hot water.

### (Evaluation Criteria)

O: The paper completely peels off from the film.
×: The paper does not peel.

### Lamination Strength

Each of the above printed matters was cut to 15 mm in width and measured for T peel-strength using a peel tester manufactured by Yasuda Seiki Seisakusho, Ltd.

### (Evaluation Criteria)

O: The peel strength is 1.2 N/15 mm or higher.
△: The peel strength is 0.7 N/15 mm or higher but under 1.2 N/15 mm.
×: The peel strength is under 0.7 N/15 mm.

**[Table 35]**

| | Coating amount of releasing primer composition in solids content (g/m²) | Releasing conditions (alkali) | Releasing conditions (hot water) | Lamination strength |
|---|---|---|---|---|
| Not coated | - | x | x | ○ |
| T-180E | 0.02 | ○ | ○ | ○ |
| | 0.06 | ○ | ○ | ○ |
| | 0.18 | ○ | ○ | ○ |

Table 35 shows that, when the releasing primer compositions conforming to the present invention were coated, smooth releasing was accomplished in both the water and aqueous alkali solution. Their lamination strength was also excellent.

However, release property and excellent lamination strength could not be achieved simultaneously when the releasing primer composition conforming to the present invention was not coated and also when the PVA and general-purpose polyurethane in Table 6 were coated.

With respect to this comparative example, adopting polyurethane resin varnishes 2 and 3 in place of polyurethane resin varnish 1 produced the same results.

## Claims

1. A releasing primer composition containing a polyethyleneimine-based compound with an amine value of 5.0 to 25.0 mmol/g and/or polybutadiene-based compound, which is used, with respect to a printed matter formed in an order of a resin base material, a releasing primer layer, and a printed layer, for forming the releasing primer layer.

2. The releasing primer composition according to claim 1, wherein the releasing primer composition containing a polyethyleneimine-based compound with an amine value of 5.0 to 25.0 mmol/g contains one or more types of A to C below.
A. a polyethyleneimine compound
B. a mixture containing a polyethyleneimine compound, and a glycidyl group-containing silane coupling agent, and/or isocyanate group-containing silane coupling agent
C. a siloxane-modified polyethyleneimine compound

3. The releasing primer composition according to claim 2, wherein a number-averaged molecular weight of the polyethyleneimine compound and siloxane-modified polyethyleneimine compound is 1,000 to 200,000.

4. The releasing primer composition according to claim 2, wherein a mass-averaged molecular weight of the polyethyleneimine compound and siloxane-modified polyethyleneimine compound is 4,000 to 800,000.

5. The releasing primer composition according to claim 1, wherein the polybutadiene-based compound comprises a hydroxyl group-containing polybutadiene compound and/or carboxyl group-containing polybutadiene compound.

6. A printed matter comprising, on a resin base material, a releasing primer layer formed by the releasing primer composition according to claims 1 or 2, and a printed layer formed on the releasing primer layer.

7. A printed matter comprising, on a resin base material, a releasing primer layer formed by the releasing primer composition according to claims 1 or 2, a paper layer formed at the releasing primer layer via an adhesive layer, and a printed layer formed on the paper layer.
